# NEUE EUROPÄISCHE PATENTSCHRIFT

(11) **EP 1 658 453 B2**
(45) Veröffentlichungstag und Bekanntmachung des Hinweises auf die Entscheidung über den Einspruch: **23.03.2011**
(45) Hinweis auf die Patenterteilung: 06.02.2008
(21) Anmeldenummer: 04740362.1
(22) Anmeldetag: 28.06.2004
(51) Int. Cl.: F16H 3/66, F16D 25/10

(54) **MEHRSTUFEN-AUTOMATGETRIEBE MIT DREI PLANETENRADSÄTZEN**
MULTI-STAGE AUTOMATIC TRANSMISSION HAVING THREE PLANETARY GEAR TRAINS
BOITE DE VITESSES AUTOMATIQUE A PLUSIEURS ETAGES COMPORTANT TROIS TRAINS PLANETAIRES

(30) Priorität: 23.07.2003 DE 10333437
(43) Veröffentlichungstag der Anmeldung: 24.05.2006
(73) Patentinhaber: ZF FRIEDRICHSHAFEN Aktiengesellschaft, 88038 Friedrichshafen (DE)
(72) Erfinder: TIESLER, Peter, 88074 Meckenbeuren (DE); ZIEMER, Peter, 88069 Tettnang (DE)
(86) Internationale Anmeldenummer: PCT/EP2004/006960
(87) Internationale Veröffentlichungsnummer: WO 2005/019688

(56) Entgegenhaltungen:
- EP-A- 0 605 953
- EP-A1- 0 605 953
- DE-A- 19 912 480
- DE-A1- 4 332 466
- DE-A1- 10 131 816
- DE-A1- 10 236 607
- DE-A1- 19 702 198
- US-A- 3 776 066
- US-A- 3 776 066
- US-A- 4 732 253
- US-A- 4 732 253
- US-A- 5 232 411
- US-A- 5 232 411
- US-A- 5 439 088
- US-A- 6 071 208
- US-A1- 2003 119 623
- US-B1- 6 572 507
- 'ZF 5-Speed Transmission for Passenger Cars', 1997, SOCIETY OF AUTOMOTIVE ENGINEERS.INC Artikel HERIBERT SCHERER AND GEORG GIER.: ' SAE paper 970689'

## Beschreibung

Die vorliegende Erfindung betrifft ein Mehrstufen-Automatgetriebe mit mindestens drei Einzel-Planetenradsätzen und mindestens fünf Schaltelementen, nach dem Oberbegriff des Patentanspruchs 1 bzw. des Patentanspruchs 2.

Automatgetriebe mit mehreren, ohne Gruppenschaltung schaltbaren Gängen sind vielfältig bekannt. Aus der DE 199 12 480 A1 beispielsweise ist ein gattungsgemäßes Automatgetriebe mit drei Einsteg-Planetenradsätzen sowie drei Bremsen und zwei Kupplungen zum Schalten von sechs Vorwärtsgängen und einem Rückwärtsgang bekannt, das für Kraftfahrzeuge sehr gut geeignete Übersetzungen mit einer hohen Gesamtspreizung und günstigen Stufensprüngen sowie einer hohen Anfahrübersetzung in Vorwärtsrichtung aufweist. Die einzelnen Gänge werden durch selektives Schließen von jeweils zwei der sechs Schaltelemente erzielt, sodaß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Dabei ist eine Antriebswelle des Automatgetriebes ständig mit einem Sonnenrad des zweiten Planetenradsatzes verbunden. Weiterhin ist die Antriebswelle über die erste Kupplung mit einem Sonnenrad des ersten Planetenradsatzes und/oder über die zweite Kupplung mit einem Steg des ersten Planetenradsatzes verbindbar. Zusätzlich oder alternativ ist das Sonnenrad des ersten Planetenradsatzes über die erste Bremse mit einem Gehäuse des Automatgetriebes und/oder der Steg des ersten Planetenradsatzes über die zweite Bremse mit dem Gehäuse und/oder ein Sonnenrad des dritten Planetenradsatzes über die dritte Bremse mit dem Gehäuse verbindbar.

Für die kinematische Kopplung der einzelnen Planetenradsätze miteinander offenbart die DE 199 12 480 A1 zwei verschiedene Versionen. In der ersten Version ist vorgesehen, daß eine Abtriebswelle des Automatgetriebes ständig mit einem Steg des dritten Planetenradsatzes und einem Hohlrad des ersten Planetenradsatzes verbunden ist, und daß der Steg des ersten Planetenradsatzes ständig mit einem Hohlrad des zweiten Planetenradsatzes und ein Steg des zweiten Planetenradsatzes ständig mit einem Hohlrad des dritten Planetenradsatzes verbunden ist. Die Antriebs- und die Abtriebswelle können dabei sowohl koaxial zueinander auf gegenüberliegenden Seiten des Getriebegehäuses angeordnet sein, als auch achsparallel auf derselben Seite des Getriebegehäuses. In der zweiten Version ist vorgesehen, daß die Abtriebswelle ständig mit dem Steg des zweiten Planetenradsatzes und dem Hohlrad des ersten Planetenradsatzes verbunden ist, daß der Steg des ersten Planetenradsatzes ständig mit dem Hohlrad des dritten Planetenradsatzes verbunden ist, und daß das Hohlrad des zweiten Planetenradsatzes ständig mit dem Steg des dritten Planetenradsatzes verbunden ist. Eine derartige Ausbildung ist besonders für eine koaxiale Anordnung von An- und Abtriebswellen geeignet.

Hinsichtlich der räumlichen Anordnung der Planetenradsätze schlägt die DE 199 12 480 A1 vor, die drei Planetenradsätze koaxial in Reihe nebeneinander anzuordnen, wobei der zweite Planetenradsatz axial zwischen dem ersten und dritten Planetenradsatz angeordnet ist. Hinsichtlich der räumlichen Anordnung der einzelnen Schaltelemente relativ zueinander und relativ zu den Planetenradsätzen schlägt die DE 199 12 480 A1 vor, die erste und zweite Bremse stets unmittelbar nebeneinander anzuordnen, wobei die zweite Bremse stets unmittelbar axial an den ersten Planetenradsatz angrenzt, und die dritte Bremse stets auf der dem ersten Planetenradsatzes abgewandten Seite des dritten Planetenradsatzes anzuordnen, sowie die beiden Kupplungen stets unmittelbar nebeneinander anzuordnen. In einer ersten Anordnungsvariante sind beide Kupplungen auf der dem dritten Planetenradsatz abgewandten Seite des ersten Planetenradsatzes angeordnet, wobei die erste Kupplung axial unmittelbar an die erste Bremse angrenzt und näher am ersten Planetenradsatz angeordnet ist als die zweite Kupplung. In Verbindung mit einer nicht koaxialen Lage von Antriebs- und Abtriebswelle wird in einer zweiten Anordnungsvariante vorgeschlagen, daß beide Kupplungen auf der dem ersten Planetenradsatz abgewandten Seite des dritten Planetenradsatzes angeordnet sind, wobei die zweite Kupplung näher am dritten Planetenradsatz angeordnet ist als die erste Kupplung und axial an ein mit der Abtriebswelle wirkverbundenes Abtriebsstirnrad angrenzt, welches wiederum auf der dem dritten Planetenradsatz abgewandten Seite der dritten Bremse angeordnet ist.

Der vorliegenden Erfindung liegt die Aufgabe zugrunde, für das aus dem Stand der Technik der DE 199 12 480 A1 bekannte Automatgetriebe alternative Bauteilanordnungen darzustellen, mit möglichst kompaktem Getriebeaufbau. Vorzugsweise soll das Automatgetriebe in einem Kraftfahrzeug mit nicht koaxial zueinander angeordneter Antriebs- und Abtriebswelle Anwendung finden können, durch vergleichsweise einfache Modifikationen möglichst aber auch bei koaxialer Antriebs- und Abtriebswelle einsetzbar sein.

Ausgehend vom gattungsgemäßen Stand der Technik der DE 199 12 480 A1, weist das erfindungsgemäße Mehrstufen-Automatgetriebe mindestens drei gekoppelte Einzel-Planetenradsätze auf, die koaxial zueinander und räumlich gesehen nebeneinander angeordnet sind, wobei der zweite Planetenradsatz räumlich gesehen stets zwischen dem ersten und dritten Planetenradsatz angeordnet ist. Weiterhin weist das erfindungsgemäße Automatgetriebe mindestens fünf Schaltelemente auf. Ein Sonnenrad des dritten Planetenradsatzes ist über das als Bremse ausgebildete erste Schaltelement an einem Getriebegehäuse des Automatgetriebes festsetzbar. Eine Antriebswelle des Automatgetriebes ist ständig mit einem Sonnenrad des zweiten Planetenradsatzes verbunden. Weiterhin ist die Antriebswelle über das als Kupplung ausgebildete zweite Schaltelement mit einem Sonnenrad des ersten Planetenradsatzes und zusätzlich oder alternativ über das als Kupplung ausgebildete fünfte Schaltelement mit einem Steg des ersten Planetenradsatzes verbindbar. Alternativ ist das Sonnenrad des ersten Planetenradsatzes über das als Bremse ausgebildete dritte Schaltelement und/oder der Steg des ersten Planetenradsatzes über das als Bremse ausgebildete vierte Schaltelement an dem Getriebegehäuse festsetzbar. Sind also das zweite und fünfte Schaltelement gleichzeitig betätigt, so sind Sonnenrad und Steg des ersten Planetenradsatzes miteinander verbunden.

Eine Abtriebswelle des Mehrstufen-Automatgetriebes ist ständig mit einem Hohlrad des ersten Planetenradsatzes wirkverbunden, wobei das Hohlrad des ersten Planetenradsatzes zusätzlich ständig entweder mit einem Steg des dritten Planetenradsatzes oder einem Steg des zweiten Planetenradsatzes verbunden ist.

Wie bei der gattungsgemäßen DE 199 12 480 A1 ist der Steg des ersten Planetenradsatzes (je nach Radsatzkonzept) zusätzlich entweder ständig mit dem Hohlrad des zweiten Planetenradsatzes oder ständig mit dem Hohlrad des dritten Planetenradsatzes verbunden. Falls Hohlrad des ersten Planetenradsatzes und Steg des dritten Planetenradsatzes und Abtriebswelle miteinander gekoppelt sind, ist der Steg des zweiten Planetenradsatzes ständig mit einem Hohlrad des dritten Planetenradsatzes und der Steg des ersten Planetenradsatzes ständig mit einem Hohlrad des zweiten Planetenradsatzes verbunden. Falls Hohlrad des ersten Planetenradsatzes und Steg des zweiten Planetenradsatzes und Abtriebswelle miteinander gekoppelt sind, ist der Steg des dritten Planetenradsatzes ständig mit dem Hohlrad des zweiten Planetenradsatzes und der Steg des ersten Planetenradsatzes ständig mit dem Hohlrad des dritten Planetenradsatzes verbunden.

Gemäß der Erfindung sind das zweite Schaltelement, über das die Antriebswelle mit dem Sonnenrad des ersten Planetenradsatzes verbindbar ist, und das fünfte Schaltelement, über das die Antriebswelle mit dem Steg des ersten Planetenradsatzes verbindbar ist, zu einer Baugruppe zusammengefaßt. Dabei weist diese Baugruppe zumindest je ein Lamellenpaket des zweiten und fünften Schaltelementes, einen für das zweite und fünfte Schaltelement gemeinsamen Lamellenträger zur Aufnahme von Außen- oder Belaglamellen der Lamellenpakete des zweiten und fünften Schaltelementes, sowie je eine Servoeinrichtung zur Betätigung der jeweiligen Lamellenpakete des zweiten bzw. fünften Schaltelementes auf. Dabei ist Lamellenpaket des zweiten Schaltelementes auf einem größeren Durchmesser angeordnet als das Lamellenpaket des fünften Schaltelementes. Insbesondere ist ein Reibflächen-Innendurchmesser der Belaglamellen des Lamellenpaketes des zweiten Schaltelementes größer als ein Reibflächen-Außendurchmesser der Belaglamellen des Lamellenpaketes des fünften Schaltelementes.

Vorzugsweise ist diese das zweite und fünfte Schaltelement aufweisende Baugruppe benachbart zum ersten Planetenradsatz angeordnet, auf der dem zweiten (mittleren) Planetenradsatz abgewandten Seite des ersten Planetenradsatzes.

In einer besonders baulängensparenden Ausgestaltung der Erfindung ist das Lamellenpaket des zweiten Schaltelementes räumlich gesehen zumindest weitgehend radial über dem Lamellenpaket des fünften Schaltelementes angeordnet. In diesem Fall sind dann beide Lamellenpakete des zweiten und fünften Schaltelementes axial neben dem ersten Planetenradsatz angeordnet.

Es kann aber auch vorgesehen sein, daß das Lamellenpaket des zweiten Schaltelementes räumlich gesehen zumindest teilweise axial neben dem Lamellenpaket des fünften Schaltelementes angeordnet ist. In einer besonders baulängensparenden Ausgestaltung ist in diesem Fall das Lamellenpaket des zweiten Schaltelementes in axialer Richtung gesehen zumindest teilweise radial oberhalb des ersten Planetenradsatzes und das Lamellenpaket des fünften Schaltelementes in radialer Richtung gesehen zumindest teilweise axial neben dem ersten Planetenradsatz angeordnet.

Erfindungsgemäß gelöst wird die Aufgabe durch ein Mehrstufen-Automatgetriebe mit den Merkmalen der Patentanspruche 1 bis 6. Vorteilhafte Ausgestaltungen und Weiterbildungen der Erfindung ergeben sich aus den Unteransprüchen.

Erfindungsgemäß bildet der für das zweite und fünfte Schaltelement gemeinsame Lamellenträger einen Kupplungsraum, innerhalb dessen das Lamellenpaket und die Servoeinrichtung des fünften Schaltelementes angeordnet sind. Die Servoeinrichtungen des zweiten und fünften Schaltelementes weisen jeweils mindestens einen Druckraum und einen Kolben auf, wobei diese beiden Druckräume durch eine Mantelfläche des für das zweite und fünfte Schaltelement gemeinsamen Lamellenträgers voneinander getrennt sind.

Die Betätigungsrichtungen der Servoeinrichtungen des zweiten und fünften Schaltelementes beim Betätigen des jeweiligen Lamellenpaketes (also beim Schließen des jeweiligen Schaltelementes) sind bei den erfindungsgemäßen Lösungen gemäß der Patentansprüche 1, 2, 4 und 5 gleichgerichtet und bei den erfindungsgemäßen Lösungen gemäß der Patentansprüche 3 und 6 entgegengesetzt zueinander gerichtet.

Ist wie in den Patentansprüchen 3 und 6 vorgesehen, daß die Betätigungsrichtung der Servoeinrichtungen des zweiten und fünften Schaltelementes entgegengesetzt gerichtet ist, so betätigt dann die Servoeinrichtung des fünften Schaltelementes die Lamellen des fünften Schaltelementes axial in Richtung des ersten Planetenradsatzes, und die Servoeinrichtung des zweiten Schaltelementes die Lamellen des zweiten Schaltelementes axial in zum ersten Planetenradsatzes entgegengesetzter Richtung. Die Druckräume der Servoeinrichtungen des zweiten und fünften Schaltelementes sind hierbei also axial unmittelbar nebeneinander angeordnet, Zweckmäßigerweise beide unmittelbar an die Mantelfläche des für das zweite und fünfte Schaltelement gemeinsamen Lamellenträgers angrenzend. Dabei weist der Kolben der Servoeinrichtung des zweiten Schaltelementes dann einen auf das Lamellenpaket des zweiten Schaltelementes wirkenden Betätigungs-Stempel auf, der das Lamellenpaket des zweiten Schaltelementes in axialer Richtung radial vollständig übergreift. Zum dynamischen Druckausgleich des jeweiligen rotierenden Druckraumes vorgesehenen Druckausgleichsräume der Servoeinrichtungen des zweiten und fünften Schaltelementes sind dann jeweils auf der Seite des jeweiligen Druckraumes angeordnet, die der Lamellenträger-Mantelfläche abgewandt ist.

Ist hingegen wie in den Patentansprüchen 1, 2, 4 und 5 vorgesehen, daß die Betätigungsrichtung der Servoeinrichtungen des zweiten und fünfte Schaltelementes gleichgerichtet ist, so betätigen dann beide Servoeinrichtungen die jeweiligen Lamellen axial in Richtung des ersten Planetenradsatzes. Die Druckräume der Servoeinrichtungen des zweiten und fünften Schaltelementes sind bei den erfindungsgemäßen Lösungen gemäß der Patentansprüche 2 und 5 axial nebeneinander angeordnet und bei den erfindungsgemäßen Lösungen gemäß der Patentansprüche 1 und 4 radial übereinander angeordnet. Bei axial nebeneinander angeordneten Druckräumen grenzen der Druckraum der Servoeinrichtung des fünften Schaltelementes und der (zum dynamischen Druckausgleich des rotierenden Druckraums derServoeinrichtung des zweiten Schaltelementes vorgesehene) Druckausgleichsraum der Servoeinrichtung des zweiten Schal- , telementes unmittelbar an die Mantelfläche des für das zweite und fünfte Schaltelement gemeinsamen Lamellenträgers an. Der Druckraum der Servoeinrichtung des zweiten Schaltelementes ist dann auf der der Lamellenträger-Mantelfläche gegenüberliegenden Seite des Druckausgleichraumes der Servoeinrichtung des zweiten Schaltelementes angeordnet. Der (zum dynamischen Druckausgleich des rotierenden Druckraums der Servoeinrichtung des fünften Schaltelementes vorgesehene) Druckausgleichsraum der Servoeinrichtung des fünften Schaltelementes ist dann entsprechend auf der der Lamellenträger-Mantelfläche, gegenüberliegenden Seite des Druckraumes des fünften Schaltelementes angeordnet.

In einer weiteren Ausgestaltung der Erfindung sind das dritte Schaltelement, über welches das Sonnenrad des ersten Planetenradsatzes an dem Getriebegehäuse festsetzbar ist, und/oder das vierte Schaltelement, über welches der Steg des ersten Planetenradsatzes (und das mit diesem Steg verbundene Hohlrad des zweiten oder dritten Planetenradsatzes) an dem Getriebegehäuse festsetzbar ist, räumlich gesehen in einem Bereich radial über den nebeneinander in Reihe angeordneten Planetenradsätzen angeordnet. Das dritte Schaltelement ist dabei vorzugsweise in axialer Richtung gesehen radial oberhalb des ersten und/oder zweiten (mittleren) Planetenradsatzes angeordnet. Entsprechend ist das vierte Schaltelement vorzugsweise in axialer Richtung gesehen radial oberhalb des zweiten (mittleren) und/oder dritten Planetenradsatzes angeordnet. Das dritte Schaltelement ist also vorzugsweise näher an der das zweite und fünfte Schaltelement umfassenden Baugruppe angeordnet als das vierte Schaltelement. Das dritte und vierte Schaltelement können dabei ebenfalls als vormontierbare Baugruppe zusammengefaßt sein, beispielsweise mit einem gemeinsamen getriebegehäusefesten Außenlamellenträger und axial nebeneinander angeordneten Lamellenpaketen, wobei in diesen gemeinsamen Außenlamellenträger auch die Servoeinrichtungen des dritten und vierten zumindest teilweise integriert sein können.

In einer weiteren Ausgestaltung der Erfindung ist das erste Schaltelement, über welches das Sonnenrad des dritten Planetenradsatzes an dem Getriebegehäuse festsetzbar ist, auf der Seite des dritten Planetenradsatzes angeordnet, die dem zweiten (bzw. fünften) Schaltelement gegenüber liegt.

Für die Anwendung mit zueinander nicht koaxialer Antriebs- und Abtriebswelle, insbesondere für Anwendungen mit achsparallel oder winklig zueinander angeordneter Antriebs- und Abtriebswelle, wird vorgeschlagen, das erste Schaltelement benachbart zu einer Außenwand des Getriebegehäuses und einen Stirntrieb oder Kettentrieb räumlich gesehen axial zwischen dem dritten Planetenradsatz und dem ersten Schaltelement anzuordnen. Dabei ist dann ein erstes Stirnrad des Stirntriebs bzw. ein erstes Kettenrad des Kettentriebs mit dem Hohlrad des ersten Planetenradsatzes und - je nach Radsatzkonzept - entweder dem Steg des dritten oder des zweiten Planetenradsatzes verbunden. Entsprechend ist dann ein weiteres Stirnrad des Stirntriebs bzw. ein zweites Kettenrad des Kettentriebs mit der Abtriebswelle des Automatgetriebes verbunden. In fertigungstechnisch günstiger Weise kann eine Servoeinrichtung und/oder ein Lamellenträger des als Bremse ausgebildeten ersten Schaltelementes in eine Außenwand bzw. einen gehäusefesten Deckel der Getriebegehäuses integriert sein.

In einer anderen Ausgestaltung der Stirntrieb- bzw. Kettentrieb-Anordnung kann aber auch vorgesehen sein, daß das erste Schaltelement zumindest teilweise axial neben dem dritten Planetenradsatz auf dessen dem zweiten Planetenradsatz gegenüberliegenden Seite angeordnet ist, und daß der Stirntrieb- bzw. Kettentrieb räumlich gesehen auf der anderen Seite des ersten Schaltelementes (also auf der dem dritten Planetenradsatz gegenüberliegenden Seite des ersten Schaltelementes) angeordnet ist. Dabei durchgreift dann eine mit dem Hohlrad des ersten Planetenradsatzes und dem Steg des dritten bzw. zweiten Planetenradsatzes verbundene Nabe des ersten Stirnrades des Stirntriebs bzw. des erstes Kettenrads des Kettentriebs das Sonnenrad des dritten Planetenradsatzes in axialer Richtung zentrisch. Bei einer derartigen Anordnung kann das als Bremse ausgebildete erste Schaltelement dabei räumlich gesehen neben dem ebenfalls als Bremse ausgebildeten vierten Schaltelement angeordnet sein, wobei dann vorzugsweise ein gleicher Lamellendurchmesser für dieser beiden Schaltelemente vorgesehen ist (Gleichteile-Konzept).

In einer weiteren Ausgestaltung der Stirntrieb- bzw. Kettentrieb-Anordnung kann auch vorgesehen sein, daß das erste Schaltelement räumlich gesehen zumindest weitgehend radial über dem dritten Planetenradsatz angeordnet ist, und daß der Stirntrieb- bzw. Kettentrieb räumlich gesehen auf der dem zweiten Planetenradsatz gegenüberliegenden Seite des dritten Planetenradsatzes axial an den dritten Planetenradsatz und das erste Schaltelement angrenzt.

Für die Anwendung mit koaxialer Antriebs- und Abtriebswelle wird vorgeschlagen, daß die Abtriebswelle des Automatgetriebes das neben dem dritten Planetenradsatz angeordnete erste Schaltelement und das Sonnenrad des dritten Planetenradsatzes in axialer Richtung zentrisch durchgreift und räumlich gesehen im Bereich axial zwischen dem zweiten und dritten Planetenradsatz mit den Steg des dritten bzw. zweiten Planetenradsatzes verbunden ist.

Durch die erfindungsgemäße Bauteilanordnung wird gegenüber dem Stand der Technik der DE 199 12 480 A1 ein deutlich kompakterer Getriebeaufbau mit vorteilhaft besonders kurzer Baulänge erzielt. Hierdurch eignet sich die erfindungsgemäße Bauteilanordnung sehr gut für einen Einbau in ein Kraftfahrzeug mit Front-Quer-Antrieb (und zueinander achsparalleler Antriebs- und Abtriebswelle). Prinzipiell ist die erfindungsgemäße Bauteilanordnung jedoch auch für den Einbau in ein Kraftfahrzeug mit Standard-Antrieb (und zueinander koaxialer Antriebs- und Abtriebswelle) oder Front-Längs-Antrieb bzw. Heck-Längs-Antrieb (und zueinander winkliger Lage von Antriebs- und Abtriebswelle) geeignet.

Die vorgeschlagene räumliche Anordnung des zweiten und vierten Schaltelementes auf großem Durchmesser trägt der konzeptbedingt hohen thermischen bzw. statischen Belastung dieser beiden Schaltelemente besonders Rechnung. Die Anordnung des dritten und vierten (und gegebenenfalls auch ersten) Schaltelementes nebeneinander ermöglicht die Verwendung von Gleichteilen sowie eine einfache Fertigungs- und Montage-Technologie. Die vorgeschlagene Verschachtelung von dem fünften und dem zweiten Schaltelement ineinander ermöglicht einerseits eine gute konstruktive Ausgestaltung der Servoeinrichtungen dieser beiden rotierenden Schaltelemente inclusive dynamischem Druckausgleich, andererseits auch eine fertigungstechnisch günstige (und damit kostengünstige) funktionelle Mehrfachnutzung einzelner Bauteile und eine gute Vormontierbarkeit dieser Baugruppe (aus dem zweiten und fünften Schaltelement).

Durch diese kinematische Koppelung der einzelnen Radsatzelemente untereinander und mit der Antriebs- und Abtriebswelle über fünf Schaltelemente sind - wie beim Stand der Technik der DE 199 12 480 A1 - insgesamt sechs Vorwärtsgänge derart schaltbar, daß beim Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Die Erfindung wird im folgenden anhand der Figuren näher erläutert, wobei ähnliche Elemente auch mit ähnlichen Bezugszeichen versehen sind. Es zeigen
- Fig. 1: ein Getriebeschema gemäß dem Stand der Technik;
- Fig. 2: ein alternative Bauteilanordnung zu Fig. 1 gemäß dem Stand der Technik;
- Fig. 3: eine beispielhafte erste schematische Bauteilanordnung gemäß der Erfindung;
- Fig. 4: ein Schaltschema des Getriebes gemäß Fig. 3;
- Fig. 5: eine beispielhafte Detaillierung der ersten Bauteilanordnung gemäß Fig. 3;
- Fig. 6: einen sektionalen Getriebeschnitt einer ersten beispielhaften Detailkonstruktion, für ein Getriebe gemäß Fig. 5;
- Fig. 7: einen sektionalen Getriebeschnitt eines erfindungsgemäßen Getriebes, auf Basis des Getriebes gemäß Fig. 5, mit einer beispielhaften alternativen Stirnradstufen-Ausgestaltung;
- Fig. 8: eine beispielhafte zweite schematische Bauteilanordnung gemäß der Erfindung;
- Fig. 9: einen sektionalen Getriebeschnitt eines beispielhaften Getriebes gemäß Fig. 8;
- Fig. 10: einen sektionalen Getriebeschnitt eines Getriebes gemäß Fig. 8, mit einer zweiten beispielhaften Detailkonstruktion;
- Fig. 11: einen sektionalen Getriebeschnitt eines Getriebes gemäß Fig. 8, mit einer dritten beispielhaften Detailkonstruktion;
- Fig. 12: einen sektionalen Getriebeschnitt eines Getriebes gemäß Fig. 8, mit einer vierten beispielhaften Detailkonstruktion;
- Fig. 13: eine beispielhafte dritte schematische Bauteilanordnung gemäß der Erfindung;
- Fig. 14: eine beispielhafte vierte schematische Bauteilanordnung gemäß der Erfindung;
- Fig. 15: eine beispielhafte fünfte schematische Bauteilanordnung gemäß der Erfindung;
- Fig. 16: einen sektionalen Getriebeschnitt mit einer fünften beispielhaften Detailkonstruktion;
- Fig. 17: einen sektionalen Getriebeschnitt mit einer sechsten beispielhaften Detailkonstruktion; und
- Fig. 18: einen sektionalen Getriebeschnitt mit einer siebten beispielhaften Detailkonstruktion.

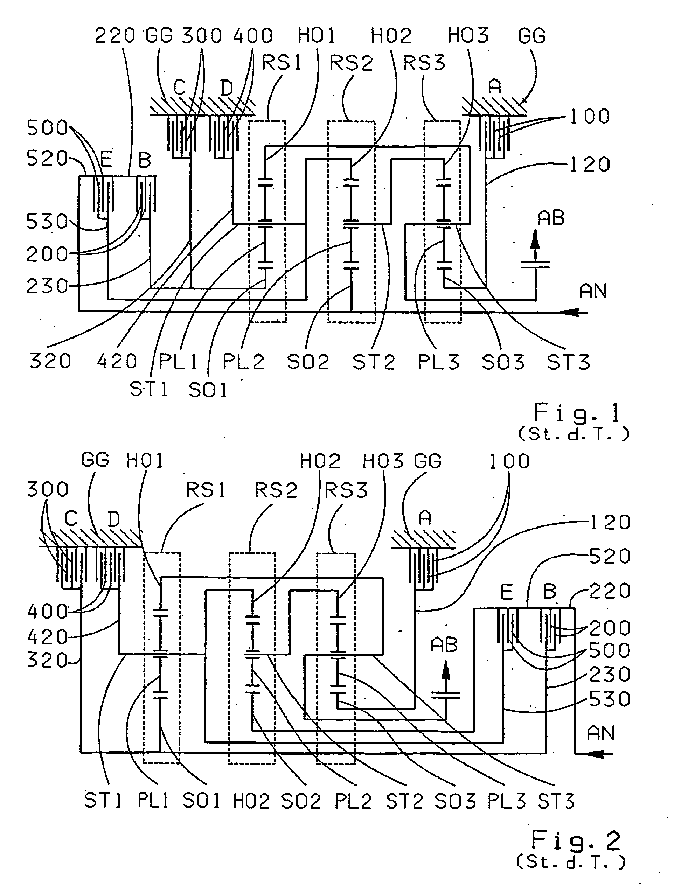

Zur Verdeutlichung der erfindungsgemäßen Bauteileanordnungen sind in Fig. 1 und Fig. 2 zunächst zwei verschiedene Bauteilanordnungen eines Getriebeschemas für ein Mehrstufen-Automatgetriebes mit nicht koaxialer Anordnung von Antiebs- und Abtriebswelle dargestellt, wie aus dem Stand der Technik der DE 199 12 480 A1 bekannt. Derartige Anordnungen können beispielsweise Anwendung in einem Kraftfahrzeug mit Front-Quer-Antrieb finden. Die mit AN bezeichnete Antriebswelle des Automatgetriebes ist einem (zur Vereinfachung hier nicht dargestellten) Antriebsmotor des Automatgetriebes wirkverbunden, beispielsweise über einen Drehmomentwandler oder eine Anfahrkupplung oder einen Torsionsdämpfer oder ein Zweimassenschwungrad oder eine starre Welle. Die mit AB bezeichnete Abtriebswelle des Automatgetriebes ist mit mindestens einer (zur Vereinfachung hier ebenfalls nicht dargestellten) Antriebsachse des Kraftfahrzeugs wirkverbunden. RS1, RS2 und RS3 bezeichnen drei gekoppelte Einfach-Planetenradsätze, die nebeneinander in Reihe in einem Getriebegehäuse GG des Automatgetriebes angeordnet sind. Alle drei Planetenradsätze RS1, RS2, RS3 weisen jeweils ein Sonnenrad SO1, SO2 und SO3 jeweils ein Hohlrad HO1, HO2 und HO3, sowie jeweils einen Steg ST1, ST2 und ST3 mit Planetenrädern PL1, PL2 und PL3, die jeweils mit Sonnen- und Hohlrad des entsprechenden Radsatzes kämmen, auf. Mit A bis E sind fünf Schaltelemente bezeichnet, wobei das erste, dritte und vierte Schaltelement A, C, D als Bremse und das zweite und fünfte Schaltelement B, E als Kupplung ausgeführt sind. Die jeweiligen Reibbeläge der fünf Schaltelemente A bis E sind als Lamellenpakete 100, 200, 300, 400 und 500 (jeweils mit Außen- und Innenlamellen bzw. Stahl- und Belaglamellen) angedeutet. Die jeweiligen Eingangselemente der fünf Schaltelemente A bis E sind mit 120, 220, 320, 420 und 520 bezeichnet, die jeweiligen Ausgangselemente der Kupplungen B und E mit 230 und 530. Die kinematische Anbindung der einzelnen Radsatzelemente und Schaltelemente relativ zueinander und relativ zu Antriebs- und Abtriebswelle AN, AB wurde bereits eingangs detailliert beschrieben, ebenso die räumliche Anordnung dieser Bauelemente.

Hervorzuheben ist in diesem Zusammenhang, daß die Lamellen 100 des (als Bremse ausgebildeten) ersten Schaltelementes A räumlich gesehen stets neben dem dritten Planetenradsatz RS3 angeordnet sind, daß die Lamellen 400 des (als Bremse ausgebildeten) vierten Schaltelementes D räumlich gesehen stets neben dem ersten Planetenradsatz RS1 angeordnet sind, daß die Lamellen 300 des (ebenfalls als Bremse ausgebildeten) dritten Schaltelementes C räumlich gesehen stets neben den Lamellen 400 des vierten Schaltelementes D (auf der dem dritten Planetenradsatz RS3 abgewandten Seite der Bremse D) angeordnet sind, daß die Lamellen 200 des (als Kupplung ausgebildeten) zweiten Schaltelementes B und die Lamellen 500 des (ebenfalls als Kupplung ausgebildeten) fünften Schaltelementes E stets nebeneinander angeordnet sind, und daß ein erstes Stirnrad STR1, welches abtriebsseitig mit der Abtriebswelle AB wirkverbunden ist, stets neben dem ersten Schaltelement A (auf der dem dritten Planetenradsatze RS3 abgewandten Seite der Bremse A) angeordnet ist.

Die beiden nebeneinander angeordneten Lamellenpakete 200, 500 der beiden Kupplungen B, E sind entweder - wie in Fig. 1 dargestellt - axial neben den Lamellen 300 der Bremse C angeordnet, und zwar auf der dem dritten Planetenradsatz RS3 abgewandten Seite des Lamellenpaketes 300, oder aber - wie in Fig. 2 dargestellt - neben dem Stirnrad STR1, und zwar auf der zur Bremse A gegenüberliegenden Seite des Stirnrads STR1.

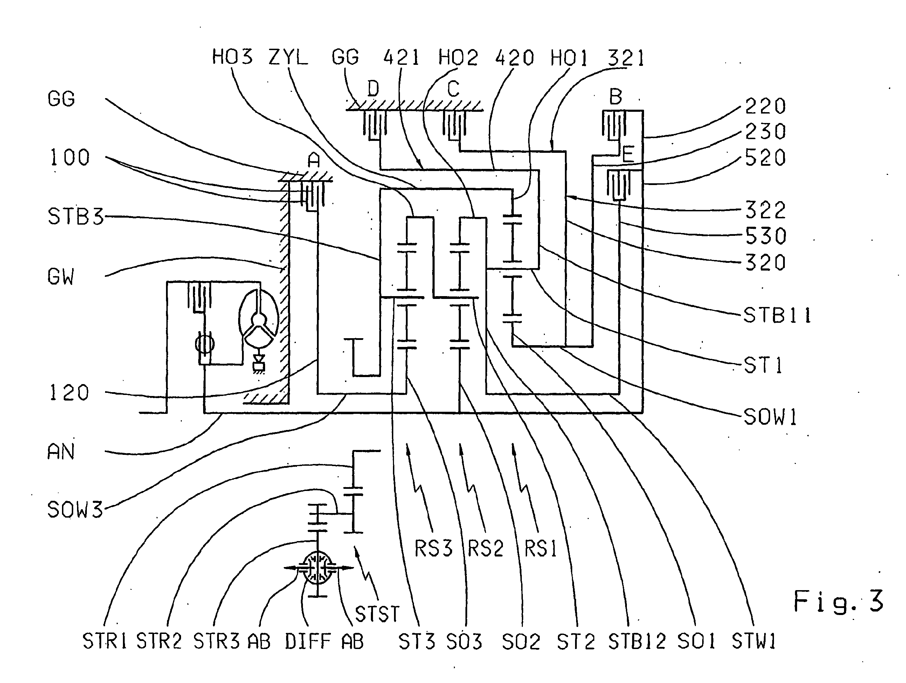

Anhand der Figuren 3 bis 18 werden im folgenden mehrere Beispiele und Detailkonstruktionen für eine erfindungsgemäße Bauteilanordnung erläutert.

Fig. 3 zeigt nun eine erste schematische Bauteilanordnung, beispielhaft für die erfindungsgemäße Lösung der Aufgabe. Ausgehend vom zuvor beschriebenen Stand der Technik der DE 199 12 480-A1 weist das erfindungsgemäße Mehrstufen-Automatgetriebe drei gekoppelte, koaxial zueinander in Reihe angeordnete Einzel-Planetenradsätze RS1, RS2, RS3 auf, wobei der zweite Planetenradsatz RS2 axial zwischen dem ersten und dritten Planetenradsatz RS1, RS3 angeordnet ist. Weiterhin weist das Mehrstufen-Automätgetriebe fünf Schaltelemente A bis E auf. Das erste, dritte und vierte Schaltelement A, C, D ist jeweils als Bremse (im Beispiel jeweils als Lamellenbremse) ausgebildet, das zweite und fünfte Schaltelement B, E jeweils als Kupplung (im Beispiel jeweils als Lamellenkupplung). Ein Sonnenrad SO3 des dritten Planetenradsatzes RS3 ist über die Bremse A an einem Getriebegehäuse GG des Mehrstufen-Automatgetriebes festsetzbar. Eine Antriebswelle AN des Mehrstufen-Automatgetriebes ist ständig mit einem Sonnenrad SO2 des zweiten Planetenradsatzes RS2 verbunden. Weiterhin ist die Antriebswelle AN über die Kupplung B mit einem Sonnenrad SO1 des ersten Planetenradsatzes RS1 und zusätzlich oder alternativ über die Kupplung E mit einem Steg ST1 des ersten Planetenradsatzes RS1 verbindbar. Alternativ ist das Sonnenrad SO1 des ersten Planetenradsatzes RS1 über die Bremse C und/oder der Steg ST1 des ersten Planetenradsatzes RS1 über die Bremse D an dem Getriebegehäuse GG festsetzbar.

Eine Abtriebswelle AB des Mehrstufen-Automatgetriebes ist über eine Stirnradstufe STST ständig mit einem Hohlrad HO1 des ersten Planetenradsatzes RS1 wirkverbunden, wobei dieses Hohlrad HO1 bei der dargestellten beispielhaften Koppelung der Radsatzelemente zusätzlich ständig mit einem Steg ST3 des dritten Planetenradsatzes RS3 verbunden ist. Weiterhin ist ein Steg ST2 des zweiten Planetenradsatzes RS2 ständig mit einem Hohlrad HO3 des dritten Planetenradsatzes RS3 verbunden, sowie der Steg ST1 des ersten Planetenradsatzes RS1 ständig mit einem Hohlrad HO2 des zweiten Planetenradsatzes RS2. Das entsprechende Verbindungselement zwischen dem Hohlrad HO1 des ersten Planetenradsatzes RS1 und dem Steg ST3 des dritten Planetenradsatzes RS3 ist als Zylinder ZYL ausgebildet. Dieser Zylinder ZYL ist einerseits mit dem Hohlrad HO1 über eine geeignete Wirkverbindung verbunden, beispielsweise über eine Schweißverbindung, und erstreckt sich in axialer Richtung von dem Hohlrad HO1 bis über das Hohlrad HO3 hinüber. Andererseits ist der Zylinder ZYL auf der dem zweiten Planetenradsatz RS2 abgewandten Seite des dritten Planetenradsatzes RS3 über eine geeignete Wirkverbindung mit einem Stegblech STB3 des Stegs ST3 verbunden, beispielsweise über ein Mitnahmeprofil. Der Zylinder ZYL übergreift den zweiten und dritten Planetenradsatz RS2, RS3 also vollständig.

Der erste Planetenradsatz RS1 wird in axialer Richtung von zwei Wellen zentrisch vollständig durchgriffen, nämlich von einer als Hohlwelle ausgebildeten Stegwelle STW1 und der radial innerhalb dieser Stegwelle STW1 geführten Antriebswelle AN. Dabei ist die Stegwelle STW1 auf der dem zweiten Planetenradsatz RS2 zugewandten Seite des ersten Planetenradsatzes RS1 mit einem Stegblech STB12 des Stegs ST1 des ersten Planetenradsatzes RS1, und auf der dem zweiten Planetenradsatz RS2 abgewandten Seite des ersten Planetenradsatzes RS1 mit einem Ausgangselement 530 der Kupplung E. Das Stegblech STB12 wiederum ist an seinem Außendurchmesser auch mit dem Hohlrad HO2 des zweiten Planetenradsatzes RS2 verbunden. Auf der dem zweiten Planetenradsatz RS2 abgewandten Seite des ersten Planetenradsatzes RS1 verläuft die Stegwelle STW1 radial innerhalb einer ebenfalls als Hohlwelle ausgebildeten Sonnenwelle SOW1. Diese Sonnenwelle SOW1 wiederum ist einerseits mit dem Sonnenrad SO1 des ersten Planetenradsatzes RS1 verbunden, andererseits auf der dem zweiten Planetenradsatz RS2 abgewandten Seite des ersten Planetenradsatzes RS1 mit einem Eingangselement 320 der Bremse C und einem Ausgangselement 230, der Kupplung B. Der Steg ST1 durchgreift den ersten Planetenradsatz RS1 in axialer Richtung und ist auf seiner dem zweiten Planetenradsatz RS2 abgewandten Seite mit einem Eingangselement 420 der Bremse D verbunden.

Die Antriebswelle AN durchgreift auch den zweiten (räumlich gesehen mittleren) Planetenradsatz RS2 und den dritten Planetenradsatz RS3 in axialer Richtung zentrisch.

Die Stirnradstufe STST grenzt auf der dem zweiten Planetenradsatz RS2 abgewandten Seite des Stegblechs STB3 an den dritten Planetenradsatz RS3 axial an. Dabei umfaßt die mehrrädrige Stirnradstufe STST ein erstes Stirnrad STR1, das ständig mit dem Stegblech STB3 des dritten Planetenradsatzes RS3 verbunden ist, ein zweites als Stufenzahnrad ausgebildetes Stirnrad STR2, dessen erste Verzahnung mit dem ersten Stirnrad STR1 kämmt, sowie ein drittes Stirnrad STR3, das mit einer zweiten Verzahnung des zweiten Stirnrades STR2 kämmt und über ein Differential DIFF mit der Abtriebswelle AB wirkverbunden ist. Selbstverständlich ist diese Ausgestaltung der Stirnradstufe STST als beispielhaft zu sehen. Der Fachmann wird diese Stirnradstufe STST beispielsweise auch durch einen Kettentrieb ersetzen, dessen erstes Kettenrad dann mit dem Stegblech STB3 des dritten Planetenradsatz RS3 verbunden ist, und dessen zweites Kettenrad dann (bei Bedarf über ein Differential) mit der Abtriebswelle AB verbunden ist.

Zentrisch innerhalb des ersten Stirnrades STR1 des Stirntriebs STST verläuft eine als Hohlwelle ausgebildete Sonnenwelle SOW3, die einerseits mit dem Sonnenrad SO3 des dritten Planetenradsatzes RS3 verbunden ist, andererseits auf der dem dritten Planetenradsatz RS3 abgewandten Seite des ersten Stirnrades STR1 mit einem Eingangselement 120 der Bremse A. Radial innerhalb dieser Sonnenwelle SOW3 verläuft wiederum die Antriebswelle AN.

Die Bremse A, über die das Sonnenrad SO3 des dritten Planetenradsatzes RS3 festsetzbar ist, ist räumlich gesehen auf der dem dritten Planetenradsatz RS3 abgewandten Seite der Stirnradstufe STST angeordnet. Dabei grenzt das als Innenlamellenträger ausgebildete Eingangselement 120 der Bremse A auf einer Seite axial an das erste Stirnrad STR1 der Stirnradstufe STST an, und auf der gegenüberliegenden Seite axial an eine verdrehfest mit dem Getriebegehäuse GG verbundenen Gehäusewand GW an. Selbstverständlich können Gehäusewand GW und Getriebegehäuse GG auch einstückig ausgeführt sein. Ein Lamellenpaket 100 der Bremse A mit Außen- und Belaglamellen ist auf großem Durchmesser im Bereich des Innendurchmessers des Getriebegehäuses GG angeordnet. Ein Mitnahmeprofil für die Außenlamellen des Lamellenpaketes 100 kann in einfacher Weise in das Getriebegehäuse GG integriert sein. Selbstverständlich kann für die Bremse A aber auch ein separater Außenlamellenträger vorgesehen sein, der über geeignete Mittel mit dem Getriebegehäuse GG oder der getriebegehäusefesten Gehäusewand GW form-, kraft- oder stoffschlüssig verbunden ist. Eine hier zur Vereinfachung nicht dargestellte Servoeinrichtung der Bremse A zum Betätigen der Lamellen 100 kann räumlich gesehen zwischen Gehäusewand GW und dem Lamellenpaket 100 angeordnet sein, bei einer entsprechenden Ausbildung des Getriebegehäuses aber auch auf der Seite des Lamellenpaketes 100, die den ersten Stirnrad STR1 bzw. dem dritten Planetenradsatz RS3 zugewandt ist.

In dem in Fig. 3 dargestellten Beispiel durchdringt die zentrisch innerhalb des Eingangselementes 120 der Bremse A verlaufende Antriebswelle AN die Gehäusewand GW und wird somit an der Seite des Automatgetriebes nach außen geführt, an der die Bremse A angeordnet ist, also nahe an der Stirnradstufe STST. Wie weiterhin in Fig. 3 ersichtlich, ist die Antriebswelle AN hier beispielhaft über einen Drehmomentwandler mit Überbrückungskupplung und Torsionsdämpfer an einen zur Vereinfachung nicht dargestellten Antriebsmotor des Automatgetriebes verbunden. Selbstverständlich kann der Drehmomentwandler auch durch ein geeignetes anderes Anfahrelement (beispielsweise eine Kupplung) ersetzt werden oder auch entfallen, wenn mindestens eines der getriebeinternen Schaltelemente als Anfahrschaltelement ausgelegt ist.

Wie in Fig. 3 weiterhin ersichtlich, sind die beiden Bremsen C, D räumlich gesehen nebeneinander in einem Bereich in axialer Richtung radial über den in Reihe angeordneten Planetenradsätzen angeordnet. Ein Lamellenpaket 400 mit Außen- und Belaglamellen der Bremse D ist dabei räumlich gesehen über dem dritten Planetenradsatz RS3 angeordnet, in axialer Richtung gesehen unmittelbar neben dem ersten Stirnrad STR1 der Stirnradstufe STST, auf einem großen Durchmesser im Bereich des Innendurchmessers des Getriebegehäuses GG. Ein Außenlamellenträger für die Außenlamellen des Lamellenpaketes 400 der Bremse D ist hierbei beispielhaft in das Getriebegehäuse GG integriert, kann aber selbstverständlich auch als separates Bauteil ausgeführt sein, welches dann über geeignete Mittel mit dem Getriebegehäuse verbunden ist. Ein als zylinderförmiger Innenlamellenträger ausgebildetes Eingangselement 420 der Bremse D erstreckt sich radial oberhalb des Zylinders ZYL in axialer Richtung über alle drei Planetenradsätze RS1, RS2, RS3 hinweg und ist mit einem ersten Stegblech STB11 des Stegs ST1 des ersten Planetenradsatzes RS1 verbunden, wobei dieses erste Stegblech STB11 auf der dem zweiten Planetenradsatzes RS2 abgewandten Seite des Stegs ST1 angeordnet ist. In dem dargestellten Beispiel übergreift der Innenlamellenträger (420) der Bremse D also alle drei Planetenradsätze RS1, RS2, RS3 in axialer Richtung vollständig. Je nach konstruktiver Ausgestaltung kann die räumliche Lage des Lamellenpaketes 400 der Bremse D jedoch auch axial in Richtung der zweiten Planetenradsatzes RS2 verschoben sein, sodaß der Innenlamellenträger (420) der Bremse D dann zumindest den ersten und zweiten Planetenradsatz RS1, RS2 in axialer Richtung vollständig übergreift.

Ein Lamellenpaket 300 mit Außen- und Belaglamellen der Bremse C ist benachbart zu dem Lamellenpaket 400 der Bremse D angeordnet, räumlich gesehen in etwa über dem zweiten Planetenradsatz RS2, ebenfalls auf einem großen Durchmesser im Bereich des Innendurchmessers des Getriebegehäuses GG. Ein Außenlamellenträger für die Außenlamellen des Lamellenpaketes 300 der Bremse C ist hierbei ebenfalls beispielhaft in das Getriebegehäuse GG integriert, kann aber selbstverständlich auch als separate getriebegehäusefestes Bauteil ausgeführt sein. Zur fertigungstechnischen Vereinfachung und kostengünstiger Gleichteileverwendung können für beide Bremsen C, D die gleichen Außen- und Belaglamellen vorgesehen sein. Ein als topfförmiger Innenlamellenträger ausgebildetes Eingangselement 320 der Bremse C weist einen zylindrischen Abschnitt 321 und einen scheibenförmigen Abschnitt 322 auf. Dieser zylindrische Abschnitt 321 erstreckt sich radial oberhalb eines zylinderförmigen Abschnitts 421 des Eingangselementes 420 der Bremse D in axialer Richtung über den ersten und zweiten Planetenradsatz RS1 und RS2 hinweg. Der scheibenförmige Abschnitt 322 schließt sich in diesem Bereich an den zylindrischen Abschnitt 321 an und erstreckt sich auf der dem zweiten Planetenradsatz RS2 abgewandten Seite des ersten Stegblechs STB11 radial nach innen bis zu der Sonnenwelle SOW1, mit der er verbunden ist. Wie bereits erwähnt, ist die Sonnenwelle SOW1 ihrerseits mit dem Sonnenrad SO1 des ersten Planetenradsatz RS1 verbunden. In dem dargestellten Beispiel übergreift der Innenlamellenträger (320) der Bremse C also die beiden Planetenradsätze RS1, RS2 vollständig. Je nach konstruktiver Ausgestaltung kann die räumliche Lage des Lamellenpaketes 300 der Bremse C jedoch auch axial verschoben sein, entweder in Richtung des ersten Planetenradsatzes RS1, sodaß der Innenlamellenträger (320) der Bremse C dann zumindest den ersten Planetenradsatz RS1 in axialer Richtung vollständig übergreift, oder aber in Richtung des dritten Planetenradsatzes RS3, sodaß der Innenlamellenträger (320) der Bremse C dann eventuell auch den dritten Planetenradsatz RS3 teilweise in axialer Richtung übergreift.

Auf konstruktive Einzelheiten zur Ausgestaltung von (in Fig. 3 zu Vereinfachung nicht dargestellten) Servoeinrichtungen der beiden Bremsen C, D zum Betätigen der jeweiligen Lamellen 300 bzw. 400 wird später noch im Detail eingegangen. Sinnvollerweise sind diese beiden Servoeinrichtungen entweder axial zwischen den beiden Lamellenpaketen 300, 400 angeordnet, oder aber es die beiden Lamellenpaketen 300, 400 sind unmittelbar nebeneinander zwischen den beiden Servoeinrichtungen angeordnet. In diesen beiden Fällen weisen die Servoeinrichtungen der Bremsen C, D eine entgegengesetzte Betätigungsrichtung auf.

Die anderen zwei Schaltelemente B und E sind auf der dem zweiten Planetenradsatz RS2 abgewandten Seite des ersten Planetenradsatzes RS1 angeordnet, in dem in Fig. 3 dargestellten Beispiel auf zum (nicht dargestellten) Antriebsmotor entgegengesetzten Seite des Automatgetriebes. Zweckmäßigerweise sind beide Kupplungen B, E dabei als eine vormontierbare Baugruppe zusammengefaßt, die benachbart zum ersten Planetenradsatz RS1 angeordnet ist. Wie aus Fig. 3 ersichtlich, ist ein Lamellenpaket 200 mit Außen- und Belaglamellen der Kupplung B in axialer Richtung gesehen radial oberhalb eines Lamellenpaketes 500 mit Außen- und Belaglamellen der Kupplung E angeordnet, das Lamellenpaket 200 also räumlich gesehen über dem Lamellenpaket 500. Die Lamellen 300 der Bremse C sind also näher an den Lamellen 200 der Kupplung B angeordnet als die Lamellen 400 der Bremse D.

Auf der dem Antriebsmotor gegenüberliegenden Seite des Automatgetriebes ist ein Eingangselement 520 der Kupplung E angeordnet, welches hier als Außenlamellenträger ausgebildet und mit der Antriebswelle AN verbunden ist. Ein ebenfalls als Außenlamellenträger ausgebildetes Eingangselement 220 der Kupplung B ist über das Eingangselement 520 der Kupplung E mit der Antriebswelle AN verbunden. Beide Außenlamellenträger (220, 520) können hierbei in vorteilhafter Weise als ein gemeinsamer Lamellenträger zusammengefaßt sein, was einerseits eine fertigungstechnische Vereinfachung und andererseits auch eine kostengünstige Gleichteileverwendung für die Außen- und Belaglamellen beider Kupplungen B, E ermöglicht.

Ein als Innenlamellenträger ausgebildetes Ausgangselement 230 der Kupplung B erstreckt sich - abschnittsweise axial an den scheibenförmigen Abschnitt 322 des Innenlamellenträgers (320) der Bremse C angrenzend - radial nach innen bis zur Sonnenwelle SOW1 des ersten Planetenradsatzes RS1, mit der er verbunden ist. Zur Einsparung von Baulänge wird der Fachmann bedarfsweise den Innenlamellenträger (230) der Kupplung B und den scheibenförmigen Abschnitt 322 des Innenlamellenträgers (320) der Bremse C als gemeinsames Bauteil ausführen.

Ein ebenfalls als Innenlamellenträger ausgebildetes Ausgangselement 530 der Kupplung E erstreckt sich - axial zwischen dem scheibenförmigen Innenlamellenträger (230) der Kupplung B und dem scheibenförmigen Abschnitt des Außenlamellenträgers (520) der Kupplung E - radial nach innen bis zur Stegwelle STW1 des ersten Planetenradsatzes RS1, mit der er verbunden ist. Wie bereits erwähnt, durchgreift diese Stegwelle STW1 die Sonnenwelle SOW1 zentrisch und ist auf der dem zweiten Planetenradsatz RS2 benachbarten Seite des ersten Planetenradsatzes RS1 sowohl mit dem Steg ST1 des ersten Planetenradsatzes RS1 als auch mit dem Hohlrad HO2 des zweiten Planetenradsatzes RS2 verbunden.

Auf verschiedene sinnvolle räumliche Anordnungen und mögliche konstruktive Einzelheiten für (in Fig. 3 zur Vereinfachung nicht dargestellte) Servoeinrichtungen für beide Kupplungen B, E wird später noch im Detail eingegangen. Es ist für den Fachmann jedoch aus der in Fig. 3 dargestellten Anordnung einfach ersichtlich, daß die Servoeinrichtung der Kupplung E hier sinnvollerweise innerhalb des Kupplungsraums anzuordnen ist, der durch den Außenlamellenträger (520) der Kupplung E gebildet wird.

Durch die in Fig. 3 dargestellte Bauteilanordnung wird ein räumlich gesehen insgesamt sehr kompakter, baulängensparender Getriebeaufbau erzielt. Die Lamellen 200 der thermisch hoch belasteten Kupplung B sind auf einen vorteilhaft großen Durchmesser angeordnet, ebenso die Lamellen 400 der statisch von allen fünf Schaltelementen am höchsten belasteten Bremse D. Zur Kosteneinsparung können für beide Bremsen C, D und für beide Kupplungen B, E gleiche Lamellentypen bzw. gleiche Lamellengrößen verwendet werden.

Da die Antriebswelle AN - wie zuvor erläutert - alle rotierenden Innenbauteile des Automatgetriebes in axialer Richtung gesehen durchgreift, wird der Fachmann den Antriebsmotor je nach Anwendungsfall wahlweise wie in Fig. 3 dargestellt an der Stirnseite des Automatgetriebes anordnen, an der auch die Bremse A bzw. der Stirntrieb angeordnet ist, oder aber an der gegenüberliegenden Stirnseite des Automatgetriebes, an der auch die Baugruppe mit den beiden Kupplungen B, E angeordnet ist.

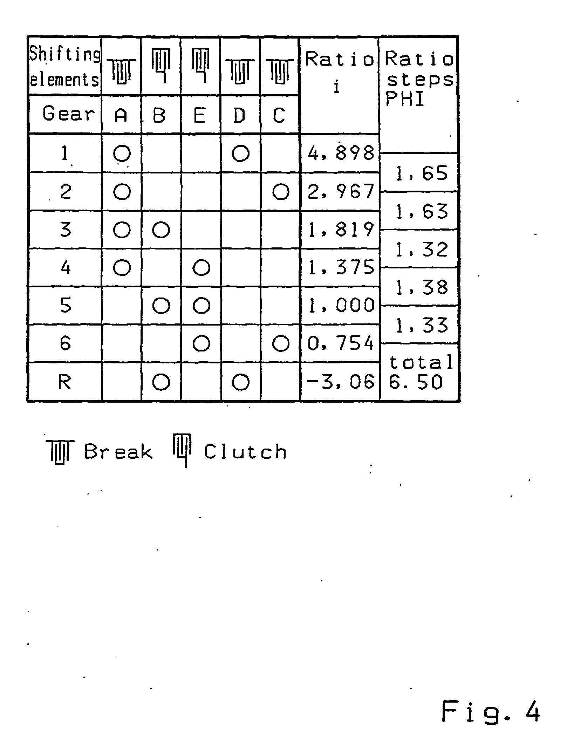

Fig. 4 zeigt ein Schaltschema mit den zugehörigen Gangsprüngen und der Gesamtübersetzung des Automatgetriebes gemäß Fig. 3. Durch selektives Schalten von jeweils zwei der fünf Schaltelemente A bis E sind sechs Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. In dem ersten Gang "1" sind die Bremsen A und D geschlossen, in dem zweiten Gang "2" die Bremsen A und C, in dem dritten Gang "3" Bremse A und Kupplung B, in dem vierten Gang "4" Bremse A und Kupplung E, in dem fünften Gang "5" die Kupplungen B und E, und in-dem sechsten Gang "6" Bremse C und Kupplung E. In einem Rückwärtsgang "R" sind Kupplung B und Bremse D geschlossen. Dabei erlauben die einzelnen Gangsprünge eine gute Fahrbarkeit, mit vorteilhaft hoher Gesamtübersetzung (Spreizung) des Automatgetriebes.

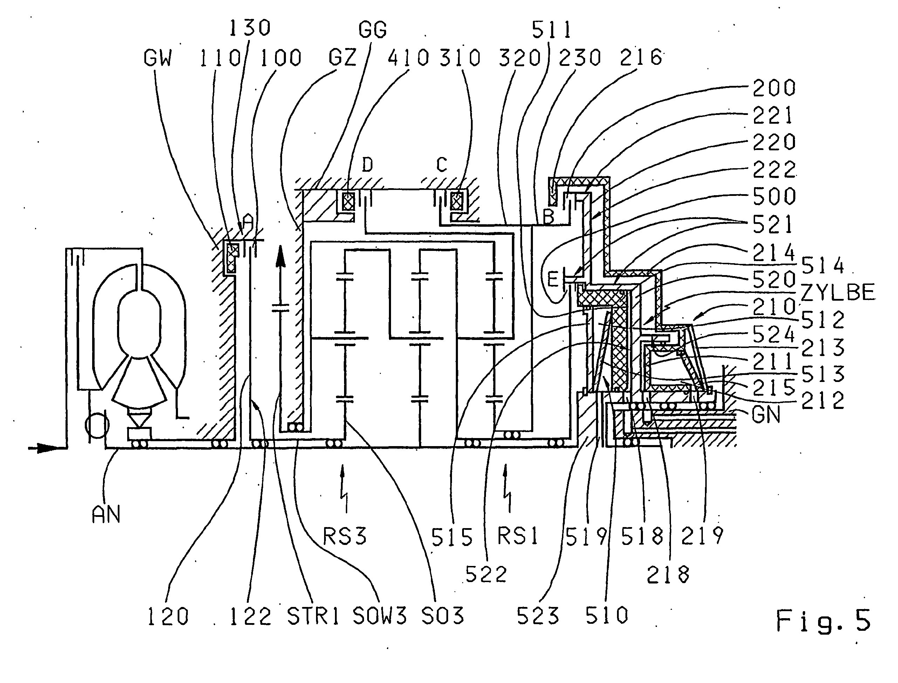

Fig. 5 zeigt eine Detaillierung der ersten Bauteilanordnung gemäß Fig. 3, nunmehr ergänzt um radiale Wellen- und Bauteillagerungen und um Servoeinrichtungen der fünf Schaltelemente A bis E. Die kinematische Koppelung von den drei Einzel-Planetenradsätze RS1, RS2, RS3 und den fünf Schaltelementen A bis E und der Antriebs- und der Abtriebswelle AN, AB entspricht dem in Fig. 3 dargestellten Getriebeschema. Auch die räumliche Anordnung der Planetenradsätze RS1, RS2, RS3 und Schaltelemente A bis E relativ zueinander innerhalb des Getriebegehäuses GG wurde praktisch unverändert von Fig. 3 übernommen.

Die Bremse A (als erstes Schaltelement des Automatgetriebes) ist hier auf der antriebsmotornahen Seite des Automatgetriebes angeordnet. Dabei grenzt die Bremse A unmittelbar an die Gehäusewand GW an, welche - analog zu Fig. 3 - die dem (nicht näher dargestellten) Antriebsmotor bzw. dem hier beispielhaft als Trilokwandler ausgeführten getriebegehäuse-externen Anfahrelement des Automatgetriebes zugewandte Außenwand des Automatgetriebes bildet. Dabei kann die Gehäusewand GW als Teil des Getriebegehäuses GG ausgebildet sein oder als separates Bauteil, welches dann über geeignete Mittel mit dem Getriebegehäuse GG verdrehfest verbunden ist. Ein als Außenlamellenträger ausgebildetes Ausgangselement 130 der Bremse A ist in fertigungstechnisch vorteilhafter Weise in die Gehäusewand GW integriert. Entsprechend ist das Eingangselement 120 der Bremse A als Innenlamellenträger ausgeführt. Im dargestellten Beispiel erstreckt sich dieser weitgehend scheibenförmig ausgebildete Innenlamellenträger (120) ausgehend von seinem Lamellenmitnahmeprofil angrenzend an die Gehäusewand GW radial nach innen, bis zur Sonnenwelle SOW3, mit der er verbunden ist. Wie in Fig. 3 ist diese Sonnenwelle SOW3 als Wirkverbindung zwischen dem Eingangselement (Innenlamellenträger) 120 der Bremse A dem Sonnenrad SO3 des dritten Planetenradsatzes RS3 vorgesehen und als Hohlwelle ausgeführt, innerhalb dieser die Antriebswelle AN verläuft.

Die mit 110 bezeichnete Servoeinrichtung der Bremse A ist vereinfacht dargestellt und auf der Seite des Lamellenpaketes 100 der Bremse A angeordnet, die dem mit der Abtriebswelle AB wirkverbundenen ersten Stirnrad STR1 bzw. dem dritten Planetenradsatz RS3 gegenüber liegt. Die Servoeinrichtung 110 umfaßt - wie üblich - einen Kolben, der in einem entsprechenden Kolben- bzw. Druckraum axial verschiebbar gelagert ist, sowie ein Rückstellelement für diesen Kolben. Bei einer Druckbeaufschlagung des Kolbenraums über eine entsprechende Druckmittelzufuhr betätigt der Kolben dann die Lamellen 100 der Bremse A gegen eine Rückstellkraft des Rückstellelementes axial in Richtung der Gehäusewand GW. Dabei ist der Kolben- bzw. Druckraum der Servoeinrichtung 110 in die Gehäusewand GW integriert.

Wie in Fig. 3 ist räumlich gesehen axial zwischen der Bremse A und dem (antriebsmotor-zugewandten) dritten Planetenradsatz RS3 das erste Stirnrad STR1 der hier nicht näher dargestellten Stirnradstufe, welche die Wirkverbindung zwischen dem Ausgang des gekoppelten Planetengetriebes und der Abtriebswelle des Automatgetriebes herstellt, angeordnet. Dieses Stirnrad STR1 ist an einer Gehäusezwischenwand GZ gelagert, welche mit dem Getriebegehäuse GG verdrehfest verbunden ist und sich ausgehend vom Innendurchmesser des Getriebgehäuses GG radial nach innen erstreckt. Räumlich gesehen ist diese Gehäusezwischenwand GZ beispielhaft axial zwischen dem Stirnrad STR1 und dem dritten Planetenradsatz RS3 angeordnet, axial unmittelbar angrenzend an das Stirnrad STR1. Auf seiner der Gehäusezwischenwand GZ gegenüberliegenden Seite grenzt das Stirnrad STR1 unmittelbar an einen scheibenförmigen Abschnitt 122 des Innenlamellenträgers (120) der Bremse A an. Die als Wirkverbindung zwischen dem Sonnenrad SO3 des dritten Planetenradsatzes RS3 und dem Eingangselement (Innenlamellenträger) 120 der Bremse A vorgesehene Sonnenwelle SOW3 durchdringt die Gehäusezwischenwand GZ also zentrisch.

In einer anderen Ausgestaltung kann die Gehäusezwischenwand GZ, an der das erste Stirnrad STR1 gelagert ist, selbstverständlich auch auf der dem Planetenradsatz RS3 abgewandten Seite des Stirnrades STR1 angeordnet sein, räumlich gesehen also zwischen dem Innenlamellenträger (120) der Bremse A und dem Stirnrad STR1. Selbstverständlich kann die Gehäusezwischenwand GZ auch als Teil des Getriebegehäuses ausgebildet sein. Auf derartige alternative Ausgestaltungen der Lagerung des Stirnrades STR1 wird später noch im Detail eingegangen.

Weiterhin ist in Fig. 5 im antriebsmotornahen Bereich des Automatgetriebes eine radiale Lagerung zwischen Antriebswelle AN und Gehäusewand GW, eine radiale Lagerung zwischen Sonnenwelle SOW3 und Antriebswelle AN, sowie eine radiale Lagerung zwischen erstem Stirnrad STR1 und Gehäusezwischenwand GZ angedeutet.

Analog zu Fig. 3 sind die beiden Bremsen C und D räumlich gesehen radial über den Planetenradsätzen RS1 bis RS3 angeordnet, die Bremse C in axialer Richtung gesehen in einem Bereich radial oberhalb des ersten und (mittleren) zweiten Planetenradsatzes RS1, RS2 und die Bremse D in axialer Richtung gesehen in einem Bereich radial oberhalb des (mittleren) zweiten und dritten Planetenradsatzes RS2, RS3. Ähnlich wie die Servoeinrichtung 110 der Bremse A, sind auch die mit 310 und 410 bezeichneten Servoeinrichtungen der Bremse C und D vereinfacht dargestellt und umfassen - wie üblich - je einen Kolben, der in einem entsprechenden Kolben- bzw. Druckraum axial verschiebbar gelagert ist, sowie je ein Rückstellelement für den jeweiligen Kolben. Bei einer Druckbeaufschlagung des jeweiligen Kolbenraums über eine entsprechende Druckmittelzufuhr betätigt der jeweilige Kolben dann die Lamellen 300 bzw. 400 der Bremse C bzw. D gegen eine Rückstellkraft des jeweiligen Rückstellelementes. In dem in Fig. 5 dargestellten Beispiel grenzen die Lamellenpakete 300, 400 der beiden Bremsen C, D unmittelbar axial aneinander. Die Servoeinrichtung 410 der Bremse D ist auf der dem Stirnrad STR1 bzw. der Bremse A bzw. der Gehäusezwischenwand GZ zugewandten Seite des Lamellenpaketes 400 der Bremse D angeordnet und betätigt diese Lamellen 400 axial in Richtung der Bremse C. Die Servoeinrichtung 310 der Bremse C ist auf der zur Bremse D abgewandten Seite des Lamellenpaketes 300 der Bremse C angeordnet und betätigt diese Lamellen 300 axial in Richtung der Bremse D. Die Betätigungsrichtung beider Servoeinrichtungen 310, 410 ist also zueinander entgegengesetzt. Auf konstruktive Ausgestaltungen der Baugruppe mit den beiden Bremsen C, D und den Servoeinrichtungen 310, 410 wird später im Detail noch eingegangen.

Analog zu Fig. 3 sind die Kupplungen B und E beide auf der dem zweiten Planetenradsatz RS2 gegenüberliegenden Seite des ersten Planetenradsatzes RS1 angeordnet und bilden eine zum ersten Planetenradsatz RS1 benachbarte, vormontierbare Baugruppe. Dabei ist das Lamellenpaket 200 der Kupplung B in axialer Richtung gesehen zumindest überwiegend radial über dem Lamellenpaket 500 der Kupplung E angeordnet. Der vorteilhaft große Durchmesser der Lamellen 200 trägt der konzeptbedingt vergleichsweise hohen thermischen Belastung der Kupplung B Rechnung. Für beide Kupplungen B und E ist als deren Eingangselemente 220, 520 ein gemeinsamer Lamellenträger ZYLBE vorgesehen, der für die Kupplung E als Außenlamellenträger und für die Kupplung B als Innenlamellenträger ausgebildet ist. Dabei weist dieser Lamellenträger ZYLBE eine Nabe 523 auf, die mit der Antriebswelle AN verbunden ist und an einer getriebegehäusefesten Nabe GN gelagert ist. Aus der gewählten Nomenklatur ist ersichtlich, daß diese Nabe 523 dem Eingangselement (520) der Kupplung E zuzuordnen ist. Die getriebegehäusefesten Nabe GN ist ein zylindrischer Vorsprung einer (in Fig. 5 zur Vereinfachung nicht näher dargestellten) Außenwand des Getriebegehäuses GG, der sich axial in Richtung des ersten Planetenradsatzes RS1 hin erstreckt. Selbstverständlich kann die Nabe GN auch in einen Gehäusedeckel integriert sein, der dann mit dem Getriebegehäuse über geeignete Mittel verdrehfest verbunden ist. Die Antriebswelle AN selber ist in dem dargestellten Beispiel auch an der Nabe GN gelagert. Weiterhin weist der für die Kupplungen B, E gemeinsame Lamellenträger ZYLBE geometrisch verschieden ausgebildete Abschnitte 521, 522, 524, 221 und 222 auf, die von der Nomenklatur her entweder dem Eingangselement (520) der Kupplung E oder dem Eingangselement (220) der Kupplung B zuzuordnen sind. Der scheibenförmige Abschnitt 522 ist in axialer Richtung gesehen etwa nabenmittig mit der Nabe 523 verbunden und erstreckt sich, beginnend vom Außendurchmesser der Nabe 523, radial nach außen. Am Außendurchmesser dieses scheibenförmigen Abschnitts 522 schließt sich der zylinderförmige Abschnitt 521 an den scheibenförmigen Abschnitt 522 an und erstreckt sich axial in Richtung des Planetenradsatzes RS1 bis über das Lamellenpaket 500 der Kupplung E. An seinem Innendurchmesser weist der zylinderförmige Abschnitt 521 ein geeignetes Mitnahmeprofil auf zur Aufnahme der Außenlamellen des Lamellenpaketes 500 der Kupplung E. Am Außendurchmesser des der zylinderförmigen Abschnitts 521, in axialer Richtung gesehen auf der dem Planetenradsatz RS1 abgewandten Seite des Lamellenpaketes 500, schließt sich der (dem Eingangselement (220) der Kupplung B zuzuordnende) scheibenförmige Abschnitt 222 an und erstreckt sich radial nach außen bis zu einem Durchmesser, der in etwa dem Außendurchmesser des Lamellenpaketes 200 der (radial äußeren) Kupplung B. Hier schließt sich der zylindrische Abschnitt 221 an den scheibenförmigen Abschnitt 222 an und erstreckt sich axial in Richtung des Planetenradsatzes RS1 bis über das Lamellenpaket 200 der Kupplung B. An seinem Innendurchmesser weist der zylinderförmige Abschnitt 221 ein geeignetes Mitnahmeprofil auf zur Aufnahme der Außenlamellen des Lamellenpaketes 200 der Kupplung B. Das Eingangselement 220 der Kupplung B ist also (wie in Fig. 3) über das Eingangselement 520 der Kupplung E mit der Antriebswelle AN verbunden.

Die Abschnitte 521 und 522 des für die Kupplungen B, E gemeinsamen Lamellenträgers ZYLBE bilden einen Kupplungsraum, innerhalb dessen nicht nur das Lamellenpaket 500 der Kupplung E angeordnet ist, sondern auch eine mit 510 bezeichnete Servoeinrichtung zum Betätigen der Lamellen 500 der Kupplung E. Diese Servoeinrichtung 510 ist also auf der Seite des scheibenförmigen Abschnitts 522 angeordnet, die dem ersten Planetenradsatz RS1 zugewandt ist. Der erste zylindrische Abschnitt 521, der scheibenförmige Abschnitt 522 und die Nabe 523 des Lamellenträgers ZYLBE (bzw. des Eingangselementes (520) der Kupplung E) bilden einen Kolben- bzw. Druckraum 511, in dem ein Kolben 514 der Servoeinrichtung 510 axial verschiebbar angeordnet ist. Bei einer Druckbeaufschlagung des Druckraums 511 der Servoeinrichtung 510 betätigt der Kolben 514 die Lamellen 500 der Kupplung E axial in Richtung des Planetenradsatzes RS1, gegen eine Rückstellkraft eines hier beispielhaft als Tellerfeder ausgeführten Rückstellelementes 513 der Servoeinrichtung 510. Die Druckmittelzufuhr zum Druckraum 511 erfolgt dabei über eine Druckmittelzuführung 518, die teilweise innerhalb der Nabe 523 und teilweise innerhalb der gehäusefesten Nabe GN verläuft.

Zum Ausgleich des dynamischen Druckes des stets mit einer Drehzahl der Antriebswelle AN rotierenden Druckraumes 511 weist die Servoeinrichtung 510 auch einen Druckausgleichsraum 512 auf, der auf der dem Druckraum 511 gegenüberliegenden Seite des Kolbens 514 angeordnet ist, also näher am Planetenradsatz RS1 angeordnet ist als der Druckraum 511. Gebildet wird dieser Druckausgleichsraum 512 von dem Kolben 514 und einer Stauscheibe 515 und ist geometrisch vorzugsweise derart ausgelegt, daß ein zumindest weitgehend vollständiger dynamischer Druckausgleich erzielt wird. Hierzu wird der Druckausgleichsraum 512 über eine Schmiermittelzuführung 519 drucklos mit Schmiermittel befüllt, wobei diese Schmiermittelzuführung 519 teilweise innerhalb der Nabe 523 und teilweise innerhalb der Antriebswelle AN verläuft.

Die Servoeinrichtung der Kupplung B ist mit 210 bezeichnet. Ein Kolben- bzw. Druckraum 211 dieser Servoeinrichtung 210 ist auf der Seite des scheibenförmigen Abschnitts 522 des Lamellenträgers ZYLBE angeordnet, die dem Druckraum 511 der Kupplung E gegenüberliegt. Gebildet wird der Druckraum 211 durch die Nabe 523, den scheibenförmigen Abschnitt 522 und einen zweiten zylindrischen Abschnitt 524 des Lamellenträgers ZYLBE (bzw. des Eingangselementes (520) der Kupplung E), wobei sich dieser zweite zylindrische Abschnitt 524 axial in zum Druckraum 511 der Kupplung E entgegengesetzte Richtung erstreckt. Innerhalb des Druckraums 211 ist ein Kolben 214 der Servoeinrichtung 210 axial verschiebbar angeordnet. Bei einer Druckbeaufschlagung des Druckraums 211 betätigt dieser Kolben 214 die Lamellen 200 der Kupplung B axial in zum ersten Planetenradsatzes RS1 entgegengesetzter Richtung, gegen eine Rückstellkraft eines hier beispielhaft als Tellerfeder ausgeführten Rückstellelementes 213 der Servoeinrichtung 210. Hierbei übergreift der Kolbens 214 den für beide Kupplungen E, B gemeinsamen Lamellenträger ZYLBE - insbesondere dessen Abschnitte 522, 524, 521 und 221 - in axialer Richtung radial vollständig. Dabei wirkt ein Betätigungs-Stempel 216 des Kolbens 214 von der Seite des Lamellenpaketes 200 aus auf dieses Lamellenpaket 200, die dem Druckraum 211 gegenüberliegt. Vorzugsweise ist die geometrische Kontur des Kolbens 214 an die Lamellenträger-Abschnitte 522, 524, 521 und 221 gebildete Mantelfläche des Lamellenträgers ZYLBE angepaßt. Die Druckmittelzufuhr zum Druckraum 211 erfolgt dabei über eine Druckmittelzuführung 218, die teilweise innerhalb der Nabe 523 und teilweise auch innerhalb der gehäusefesten Nabe GN verläuft.

Zum Ausgleich des dynamischen Druckes des stets mit einer Drehzahl der Antriebswelle AN rotierenden Druckraumes 211 weist die Servoeinrichtung 210 der Kupplung B auch einen Druckausgleichsraum 212 auf, der auf der dem Druckraum 211 gegenüberliegenden Seite des Kolbens 214 angeordnet ist. Gebildet wird dieser Druckausgleichsraum 212 von einer Stauscheibe 215 und von einem radial unterhalb des Lamellenträger-Abschnittes 524 angeordneten Abschnitt des Kolbens 214. Vorzugsweise ist der Druckausgleichsraum 212 geometrisch derart ausgelegt, daß ein zumindest weitgehend vollständiger dynamischer Druckausgleich erzielt wird. Hierzu wird der Druckausgleichsraum 212 über eine Schmiermittelzuführung 219 drucklos mit Schmiermittel befüllt, wobei diese Schmiermittelzuführung 219 teilweise innerhalb der Nabe 523 und teilweise innerhalb der gehäusefesten Nabe GN verläuft.

Bezogen auf die räumliche Lage des Druckraum 211 der Servoeinrichtung 210, erfolgt die Betätigung der Lamellen 200 der Kupplung B bei dieser erfindungsgemäßen Anordnung also "ziehend". Dagegen erfolgt die Betätigung der Lamellen 500 der Kupplung E, bezogen auf die räumliche Lage des Druckraum 511 der Servoeinrichtung 510, "drückend".

Der scheibenförmige Abschnitte 522 bildet also im wesentlichen die radial gerichtete Mantelfläche des Lamellenträgers ZYLBE, an deren dem Planetenradsatz RS1 zugewandten Seite der Druckraum 511 der Servoeinrichtung der Kupplung E angeordnet ist, und an deren dem Planetenradsatz RS1 abgewandten Seite der Druckraum 211 der Servoeinrichtung der Kupplung B angeordnet ist. Dieser Bereich der Mantelfläche des Lamellenträgers ZYLBE trennt also die beiden Druckräume 211 und 511 voneinander. Die zum dynamischen Druckausgleich des jeweiligen rotierenden Druckraumes 211 bzw. 511 vorgesehenen Druckausgleichsräume 212 bzw. 512 der Servoeinrichtungen der Kupplungen B und E sind jeweils auf der Seite des jeweiligen Druckraumes 211 bzw. 511 angeordnet, die diesem Bereich der Mantelfläche des Lamellenträgers ZYLBE abgewandt ist.

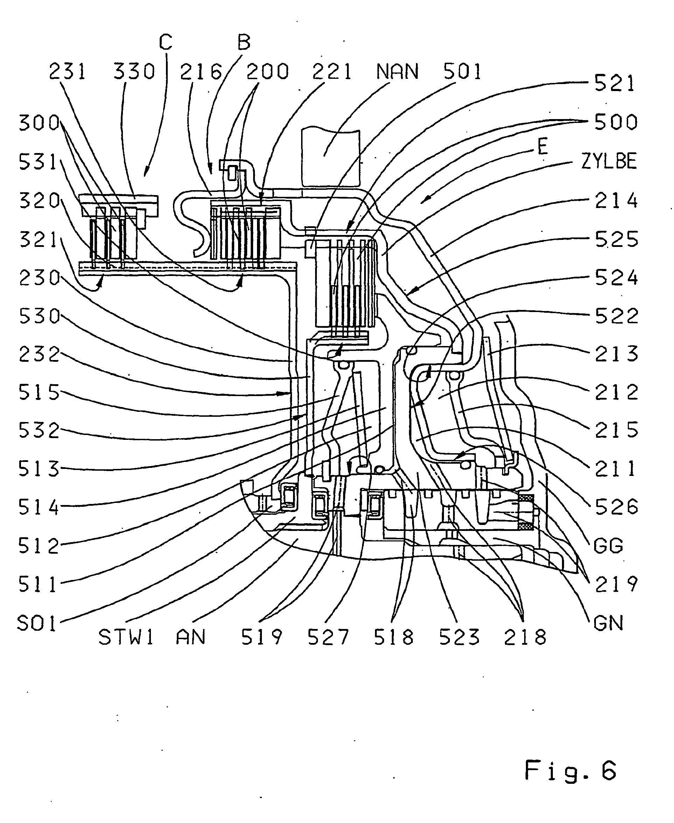

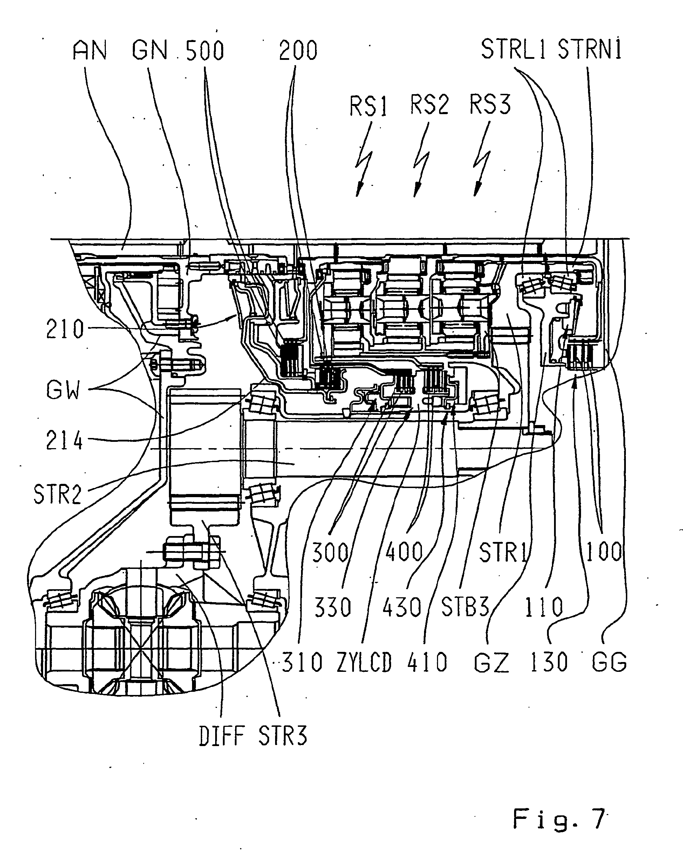

Anhand der folgenden Figuren 6 und 7 werden nun eine erste Detailkonstruktionen und eine praktisch ausgeführte Getriebekonstruktion erläutert, die beide auf der Bauteilanordnung gemäß Fig. 5 basieren. Fig. 6 zeigt einen sektionalen Getriebeschnitt mit einer beispielhaften Detailkonstruktion für die Baugruppe mit den beiden Kupplungen B, E. Wie in Fig. 5 bilden die Kupplungen B und E eine vormontierbare Baugruppe, welche die Lamellenpakete 200, 500 und die jeweilige Servoeinrichtung beider Kupplungen B, E sowie einen für beide Kupplungen B, E gemeinsamen Lamellenträger ZYLBE umfaßt. Der Lamellenträger ZYLBE ist als Außenlamellenträger für beide Kupplungen B, E ausgebildet, in Form eines in Richtung der (zur Vereinfachung in Fig. 6 nicht näher dargestellten) benachbarten Planetenradsätze hin geöffneter Topf. Geometrisch ist der Lamellenträger ZYLBE in unterschiedlich ausgebildete Abschnitte 221, 521, 525, 524, 522 und 523 unterteilt. Die beiden zylindrischen Abschnitte 521, 524 und die beiden scheibenförmigen Abschnitte 525, 522 und die Nabe 523 bilden das Eingangselement der Kupplung E, das mit der Antriebswelle AN verbunden ist. Der zylindrische Abschnitt 221 bildet das Eingangselement der Kupplung B, das über das Eingangselement der Kupplung E mit der Antriebswelle AN verbunden ist. Am Innendurchmesser der zylindrischen Abschnitte 221 und 521 sind entsprechende Mitnahmeprofile vorgesehen zur Aufnahme der Außenlamellen der Lamellenpakete 200 und 500.

Wie in Fig. 5 ist das Lamellenpaket 200 der Kupplung B auf einem größeren Durchmesser angeordnet als das Lamellenpaket 500 der Kupplung E. Im Unterschied zu Fig. 5 weisen die Lamellenpakete 200 und 500 beider Kupplungen B, E jedoch einem axialer Versatz zueinander auf. Unverändert ist hierbei der Reibflächen-Innendurchmesser der Belaglamellen des Lamellenpaketes 200 größer als der Reibflächen-Außendurchmesser der Belaglamellen des Lamellenpaketes 500, wohingegen der Teilkreisdurchmesser des Lamellen-Mitnahmeprofils der Außenlamellen des Lamellenpaketes 500 größer ist als der Teilkreisdurchmesser des Lamellen-Mitnahmeprofils der Belaglamellen des Lamellenpaketes 200.

Wie aus Fig. 6 ersichtlich, ist der Durchmesser des Lamellenpaketes 200 der Kupplung B dabei so gewählt, daß das Lamellenpaket 200 in axialer Richtung gesehen radial über dem zu dieser Kupplungsanordnung benachbarten ersten Planetenradsatz (von dem zur Vereinfachung in Fig. 5 nur dessen Sonnenrad SO1 dargestellt ist) angeordnet werden konnte. Abgesehen von dem dazwischenliegenden scheibenförmigen Abschnitt 232 des Innenlamellenträgers (Ausgangselement 230) der Kupplung B, grenzt das Lamellenpaket 500 der Kupplung E direkt axial an den ersten Planetenradsatz (RS1) an, räumlich gesehen in einem Bereich, der etwa dem Durchmesserbereich des (hier nicht näher dargestellten) Hohlrades des ersten Planetenradsatzes entspricht. Eine derartige Bauteilschachtelung hat Vorteile einerseits hinsichtlich der Getriebebaulänge, andererseits auch hinsichtlich des Getriebegehäuse-Außendurchmessers in einem Getriebegehäuseabschnitt, für den in einem Fahrzeug mit quer zur Fahrtrichtung eingebautem Antriebsmotor aufgrund der Karosseriestruktur bekanntlich nur ein stark begrenzter Einbauraum zur Verfügung steht.

Entsprechend hat der Übergang zwischen dem (dem Eingangselement der Kupplung B zuzuordnenden) zylindrischen Abschnitt 221 des (Außen-)Lamellenträgers ZYLBE und dem (dem Eingangselement der Kupplung E zuzuordnenden) ersten zylindrischen Abschnitt 521 des Lamellenträgers ZYLBE auch einen Durchmesserversatz bzw. eine Stufe. An dieser Stufe stützen sich auch die Lamellen 200 der Kupplung B bei deren ("gezogenen") Betätigung axial ab. Zur axialen Abstützung der Lamellen 500 der Kupplung E bei deren ("gedrückten") Betätigung ist ein Sicherungsring 501 vorgesehen, der in das Lamellenmitnahmeprofil des zylindrischen Abschnitts 521 eingreift und über eine geeignete Vorrichtung axial an dem Abschnitt 521 des Lamellenträgers ZYLBE gesichert wird. Dem Fachmann ist klar, daß vor der Montage und der Axialsicherung dieses Sicherungsrings 501 der für beide Kupplungen B und E gemeinsame (Außen-)Lamellenträger ZYLBE zuvor mit der Servoeinrichtung und dem Lamellenpaket 500 der Kupplung E komplettiert sein muß. Eine derartige Axialsicherung kann beispielsweise eine Nut sein, die an der entsprechenden axialen Position im Bereich über dem Sicherungsring 501 radial in das Mitnahmeprofil des Lamellenträgers ZYLBE eingefräst oder als Material-Durchstellungen (Material-Eindrückungen) radial in das Mitnahmeprofil des Lamellenträgers ZYLBE eingedrückt ist. Andere Beispiele für eine derartige Axialsicherung sind eine nachträglich durchgeführte Verstemmung des Sicherungsrings 501 an dem Lamellenträger ZYLBE, oder nachträglich auf der dem Lamellenpaket 500 abgewandten Seite des Sicherungsrings 501 axial neben diesem Sicherungsring 501 radial in das Mitnahmeprofil des Lamellenträgers ZYLBE eingebrachte Material-Durchstellungen (Material-Eindrückungen), oder auch als radiale Verstiftung des Sicherungsrings 501 an dem Lamellenträger ZYLBE.

Ausgehend von der Nabe 523 des Lamellenträgers ZYLBE (Nabe des Eingangselementes der Kupplung E), erstreckt sich etwa nabenmittig der erste scheibenförmige Abschnitt 522 radial nach außen. Mit 526 ist ein erster zylindrischer Abschnitt der Nabe 523 bezeichnet, der sich auf der dem Planetenradsatz RS1 abgewandten Seite des scheibenförmigen Abschnitt 522 axial erstreckt. Mit 527 ist ein zweiter' zylindrischer Abschnitt der Nabe 523 bezeichnet, der sich auf der dem Planetenradsatz RS1 zugewandten Seite des scheibenförmigen Abschnitt 522 axial erstreckt. Auf beiden Seiten des ersten scheibenförmigen Abschnitts 522 ist jeweils ein Druckraum angeordnet. Auf der dem Planetenradsatz RS1 abgewandten Seite des ersten scheibenförmigen Abschnitts 522, radial oberhalb des Nabenabschnitts 526, ist der Druckraum 211 der Servoeinrichtung der Kupplung B angeordnet. Auf der dem Planetenradsatz RS1 zugewandten Seite des ersten scheibenförmigen Abschnitts 522, radial oberhalb des Nabenabschnitts 527, ist der Druckraum 511 der Servoeinrichtung der Kupplung E angeordnet. An seinem Außendurchmesser schließt sich an den ersten scheibenförmigen Abschnitt 522 ein zweiter zylindrischer Abschnitt 524 an und erstreckt sich axial in zum Planetenradsatz RS1 entgegengesetzter Richtung, etwa so weit, wie sich auch der erste zylindrische Abschnitt 526 der Nabe 523 erstreckt. Hier schließt sich an den zweiten zylindrischer Abschnitt 524 ein zweiter zumindest weitgehend scheibenförmiger Abschnitt 525 an, der sich radial nach außen erstreckt bis etwa zum Außendurchmesser des Lamellenpaketes 500, bis zu dem ersten zylindrischen Abschnitt 521 des Eingangselementes der Kupplung E. Wie in Fig. 6 ersichtlich, hat der Lamellenträger ZYLBE (bzw. das Eingangselement der Kupplung E) mit seinen in der Reihenfolge 521, 525, 524, 522 und 523 aneinander anschließenden Abschnitten eine in radiale Richtung gesehen insgesamt meanderförmige Struktur und bildet dabei einen Kupplungsraum, innerhalb dessen die Servoeinrichtung der Kupplung E und die Lamellenpakete 200 und 500 beider Kupplungen B, E angeordnet sind.

Der scheibenförmige Abschnitt 522 und der zylindrische Nabenabschnitt 527 des Lamellenträgers ZYLBE (bzw. Eingangselementes der Kupplung E) bilden zusammen mit dem Kolben 514 der Servoeinrichtung der Kupplung E den Druckraum 511 der Servoeinrichtung der Kupplung E. Die Druckmittelzuführung 518 zu diesem Druckraum 511 verläuft abschnittsweise durch die Nabe 523 (im Nabenabschnitt 527) des gemeinsamen Außenlamellenträgers der Kupplungen B, E und abschnittsweise durch die gehäusefeste Nabe GN. Der durch den Kolben 514 und die Stauscheibe 515 gebildete Druckausgleichraum 512 zum Ausgleich des dynamischen Druckes des rotierenden Druckraumes 511 ist auf der dem Druckraum 511 gegenüberliegenden Seite des Kolbens 514 angeordnet, also näher an dem ersten Planetenradsatz RS1 als der Druckraum 511. Die Schmiermittelzuführung 519 zu diesem Druckausgleichsraum 512 verläuft abschnittsweise durch die Nabe 523 (im Nabenabschnitt 527) des gemeinsamen Lamellenträgers ZYLBE der Kupplungen B, E und abschnittsweise durch Antriebswelle AN. Das beispielhaft als Tellerfeder ausgeführte Rückstellelement 513 ist zwischen Kolben 514 und Stauscheibe 515 vorgespannt, wobei sich die Stauscheibe 215 axial an der Antriebswelle AN abstützt.

Der scheibenförmige Abschnitt 522 und der zylindrische Abschnitt 524 und der zylindrische Nabenabschnitt 526 des Lamellenträgers ZYLBE (bzw. des Eingangselementes der Kupplung E) bilden zusammen mit dem Kolben 214 der Servoeinrichtung der Kupplung B den Druckraum 211 der Servoeinrichtung der Kupplung B. Räumlich gesehen folgt der Kolben 214 der meanderförmigen Struktur des gemeinsamen Lamellenträgers ZYLBE der Kupplungen B, E im wesentlichen und übergreift abschnittsweise den zweiten zylindrischen Abschnitt 524 des Lamellenträgers ZYLBE und den von dem Lamellenträger ZYLBE gebildeten Kupplungsraum für die Kupplung E und die Lamellen 200 der Kupplung B in axialer Richtung radial vollständig. Dabei erstreckt sich der Kolben 214 in axialer Richtung weit über das Lamellenpaket 200 der Kupplung B hinaus, bis in einen Bereich über dem ersten Planetenradsatz RS1. Zur "ziehenden" Betätigung der Lamellen 200 der Kupplung B ist der auf das Lamellenpaket 200 wirkende Betätigungs-Stempel 216 im Bereich über dem Lamellenpaket 200 an dem Kolben 214 befestigt und erstreckt sich radial nach innen bis fast zum Innendurchmesser des Lamellenpaketes 200. Die Druckmittelzuführung 218 zu dem Druckraum 211 der Servoeinrichtung der Kupplung B verläuft abschnittsweise durch die Nabe 523 (im Nabenabschnitt 526) des gemeinsamen Lamellenträgers ZYLBE der Kupplungen B, E und abschnittsweise durch die gehäusefeste Nabe GN. Auch die Servoeinrichtung der Kupplung B weist einen dynamischen Druckausgleich auf. Der entsprechende Druckausgleichsraum 212 zum Ausgleich des dynamischen Druckes des rotierenden Druckraumes 211 ist räumlich gesehen unterhalb des zylindrischen Abschnitts 524 des Lamellenträgers ZYLBE angeordnet und wird gebildet durch den Kolben 214 und die Stauscheibe 215. Die Schmiermittelzuführung 219 zu diesem Druckausgleichsraum 212 verläuft abschnittsweise durch die Nabe 523 (im Nabenabschnitt 526) des Lamellenträgers ZYLBE, abschnittsweise durch die gehäusefeste Nabe GN und abschnittsweise durch die Antriebswelle AN. Das als Tellerfeder ausgeführte Rückstellelement 213 zur Rückstellung des Kolbens 214 ist außerhalb des Druckausgleichsraumes 212 angeordnet und liegt auf der dem Planetenradsatz RS1 gegenüberliegenden Seite der Baugruppe aus Kupplung B und E an einer Außenfläche des Kolbens 214 an. Dabei ist diese Tellerfeder (213) zwischen der Außenfläche des Kolbens 214 und einem am äußeren Rand des ersten zylindrischen Nabenabschnitts 526 angeordneten Abstützbund der Nabe 523 axial vorgespannt.

Der erste scheibenförmige Abschnitte 522 bildet also im wesentlichen die radial gerichtete (hier weitgehend senkrechte) Mantelfläche des Lamellenträgers ZYLBE, an deren dem Planetenradsatz RS1 zugewandten Seite der Druckraum 511 der Servoeinrichtung der Kupplung E angeordnet ist, und an deren dem Planetenradsatz RS1 abgewandten Seite der Druckraum 211 der Servoeinrichtung der Kupplung B angeordnet ist. Dieser Bereich der Mantelfläche des Lamellenträgers ZYLBE trennt also die beiden Druckräume 211 und 511 voneinander. Die zum dynamischen Druckausgleich des jeweiligen rotierenden Druckraumes 211 bzw. 511 vorgesehenen Druckausgleichsräume 212 bzw. 512 der Servoeinrichtungen der Kupplungen B und E sind jeweils auf der Seite des jeweiligen Druckraumes 211 bzw. 511 angeordnet, die diesem Bereich der Mantelfläche des Lamellenträgers ZYLBE abgewandt ist. Beide Kupplungen B, E sind vollkommen unabhängig voneinander betätigbar, die Betätigung einer dieser beiden Kupplungen hat also keine Rückwirkung auf die jeweils andere Kupplung.

Die Nabe 523 des Lamellenträgers ZYLBE ist im dargestellten Beispiel über eine Schweißverbindung fest mit der Antriebswelle AN verbunden, räumlich gesehen im Bereich des planetenradsatznahen Nabenabschnitts 527. Selbstverständlich kann anstelle einer derartigen Schweißverbindung auch eine lösbare Verbindung vorgesehen sein, beispielsweise ein Mitnahmeprofil.

Als weiteres Detail ist vorgesehen, daß der Kolben 214 der Servoeinrichtung der Kupplung B in seinem Abschnitt, der räumlich gesehen über dem Lamellenpaket 500 der Kupplung E angeordnet ist, an seinem Außendurchmesser ein geeignetes Geberprofil aufweist, das über einen Antriebsdrehzahlsensor NAN zur Bestimmung der Antriebswellen-Drehzahl (berührungslos) abgetastet wird.

Das als Innenlamellenträger ausgebildete Ausgangselement 530 der Kupplung E weist einen axial nur kurzen zylindrischen Abschnitt 531 auf, an dessem Außendurchmesser ein geeignetes Mitnahmeprofil zur Aufnahme der Belaglamellen des Lamellenpaketes 500 vorgesehen ist. Direkt neben dem Lamellenpaket 500, auf der dem Druckraum 511 der Servoeinrichtung der Kupplung E abgewandten Seite des Lamellenpaketes 500, schließt sich an diesen zylindrischen Abschnitt 531 der scheibenförmige Abschnitt 532 an und erstreckt sich - axial unmittelbar angrenzend an die Stauscheibe 515 - radial nach innen bis zur Stegwelle STW1, mit der er verbunden ist.

Das als Innenlamellenträger ausgebildete Ausgangselement 230 der Kupplung B weist einen zylindrischen Abschnitt 231 auf, der in axialer Richtung gesehen neben dem Lamellenpaket 500 der Kupplung E und auch neben der Servoeinrichtung der Kupplung E angeordnet ist, sich in axialer Richtung gesehen radial über dem (hier unvollständig dargestellten) ersten Planetenradsatz erstreckt, und an seinem Außendurchmesser ein geeignetes Mitnahmeprofil aufweist zur Aufnahme der Belaglamellen des Lamellenpaketes 200. Auf der der Kupplung E zugewandten Seite des zylindrischen Abschnitts 231 schließt sich ein scheibenförmiger Abschnitt 232 des Innenlamellenträgers (230) der Kupplung B an den zylindrischen Abschnitt 231 an und erstreckt sich - axial unmittelbar angrenzend an die druckraumabgewandte Seite des Lamellenpaketes 500 und den scheibenförmigen Abschnitt 532 des Innenlamellenträgers (530) der Kupplung E - radial nach innen, bis zu dem Sonnenrad SO1 des ersten Planetenradsatzes.

Wie aus Fig. 6 ebenfalls ersichtlich, ist die Bremse C neben dem Lamellenpaket 200 der Kupplung B angeordnet, auf der der Kupplung E gegenüberliegenden Seite des Lamellenpaketes 200. Vom Durchmesser her sind die Lamellen 300 der Bremse C zumindest ähnlich dimensioniert wie die Lamellen 200 der Kupplung B. Das als Innenlamellenträger ausgebildete Eingangselement 320 der Bremse C ist zusammen mit dem Innenlamellenträger (230) der Kupplung B einstückig ausgeführt. Der zylindrische Abschnitt 321 dieses Eingangselement 320 weist an seinem Außendurchmesser ein geeignetes Mitnahmeprofil auf zur Aufnahme der Belaglamellen des Lamellenpaketes 300 und schließt sich unmittelbar axial an den zylindrischen Abschnitt 231 des Ausgangselementes 230 der Kupplung B an. Fertigungstechnisch vorteilhaft sind die Lamellenmitnahmeprofile für die Belaglamellen beider Lamellenpakete 300, 200 identisch, wodurch auch die Verwendung von gleichen Belaglamellentypen möglicht ist.

In Fig. 6 zusätzlich angedeutet ist ein Ausgangselement 330 der Bremse C, das als zylinderförmiger Außenlamellenträger mit einem entsprechenden Lamellenmitnahmeprofil für die Außenlamellen des Lamellenpaketes 300 ausgebildet und als separates Bauelement ausgeführt ist. Ein derartiger Zylinder kann beispielsweise auch die Servoeinrichtung der Bremse C und auch die komplette Bremse D (inclusive deren Servoeinrichtung und Lamellen) aufnehmen und als Baugruppe vormontiert werden, die dann in das Getriebegehäuse eingesetzt und gegen Verdrehung gesichert wird.

Fig. 7 zeigt nun einen Ausschnitt aus einem Getriebeschnitt einer praktisch ausgeführten Getriebekonstruktion, basierend auf dem Getriebeschnitt gemäß Fig. 5, mit den wesentlichen Merkmalen der Detailkonstruktion gemäß Fig. 6. Relativ zu der aus Fig. 5 bekannten räumlichen Anordnung der drei Planetenradsätze RS1, RS2, RS3 und fünf Schaltelmente A bis E ist die Lage des Antriebsmotors des Automatgetriebes nun gespiegelt. Der mit der Antriebswelle AN wirkverbundene Antriebsmotor ist also jetzt auf der Getriebeseite angeordnet, an der auch die Baugruppe mit den beiden Kupplungen B und E angeordnet ist. Das mit der (hier nicht dargestellten) Abtriebswelle des Automatgetriebes verbundene Differential DIFF ist jedoch weiterhin antriebsmotornah angeordnet, sodaß zwischen dem ersten Stirnrad STR1 der Stirnradstufe STST und dem dritten Stirnrad STR3 der Stirnradstufe STST, welches mit dem Differential DIFF verbunden (hier beispielhaft verschraubt) ist, eine große axiale Distanz liegt, die durch das hier als Seitenwelle ausgebildete zweite Stirnrad STR2 der Stirnradstufe STST überbrückt wird. Das erste Stirnrad STR1 der mit der (hier nicht dargestellten) Abtriebswelle des Automatgetriebes wirkverbundene Stirnradstufe grenzt unmittelbar an den dritten Planetenradsatz RS3 an, an der dem zweiten (mittleren) Planetenradsatz RS2 gegenüberliegenden Seite des Stegblechs STB3 des dritten Planetenradsatzes RS3. Die Lagerung STRL1 des ersten Stirnrades STR1 ist beispielhaft als steife Kegelrollenlagerung ausgeführt, mit zwei unmittelbar aneinandergrenzenen Kegelrollenlagern. Die Lagerinnenringe dieser beiden Kegelrollenlager sind auf einer Stirnradnabe STRN1 des Stirnrades STR1, die sich axial in zum dritten Planetenradsatz RS3 entgegengesetzter Richtung erstreckt, axial über eine Wellenmutter eingespannt. Die Lageraußenringe dieser beiden Kegelrollenlager sind jeweils in einer Lagerbohrung der Gehäusezwischenwand GZ eingesetzt und stützen sich jeweils an einer axial zwischen den beiden Kegelrollenlagern radial nach innen erstreckenden Anlageschulter der Gehäusezwischenwand GZ ab. Die Stirnradnabe STRN1 des Stirnrades STR1 durchgreift die Gehäusezwischenwand GZ also zentrisch.

Die Gehäusezwischenwand GZ bildet gleichzeitig ein Ausgangselement 130 der Bremse A, das als Außenlamellenträger ausgebildet ist mit einem entsprechenden Mitnahmeprofil zur Aufnahme der Außenlamellen des Lamellenpaketes 100 der Bremse A. Die Bremse A ist dabei in axialer Richtung gesehen teilweise radial über der Lagerung STRL1 des ersten Stirnrades STR1 angeordnet, insbesondere die in die Gehäusezwischenwand GZ integrierte Servoeinrichtung 110 der Bremse A. Die Gehäusezwischenwand GZ ist mit dem Getriebegehäuse GG verdrehfest verbunden, eine entsprechende (übliche) Verschraubung ist in Fig. 7 zur Vereinfachung nicht dargestellt. Die Lagerung der Zwischenwelle (STR2) ist beispielhaft über zwei Kegelrollenlager gelagert, wobei das erste dieser Kegelrollenlager räumlich gesehen im Bereich über dem dritten Planetenradsatz RS3 angeordnet ist, auf der dem Lager STRL1 bzw. der Bremse A abgewandten Seite des ersten Stirnrades STR1. Das zweite dieser Kegelrollenlager ist räumlich gesehen im Bereich über den aneinandergrenzenden Lamellenpaketen 200 und 500 der Kupplungen B und E angeordnet, aus Richtung der ersten Stirnrades STR1 gesehen axial vor dem dritten Stirnrad STR3. Die antriebsmotorseitige Gehäusewand GW ist in diesem Beispiel zweiteilig ausgeführt, wobei ein Teil dieser zweiteiligen Gehäusewand GW einen Differentialdeckel und das Differential DIFF zur Antriebsmotorseite hin abdeckt. In den antriebswellennahen Teil der zweiteiligen Gehäusewand GW sind eine Pumpe und verschiedene Druckmittelkanäle integriert, zur Versorgung der verschiedenen Getriebebauteile mit Schmiermittel und der Schaltelemente mit Druckmittel. Die Bremse A ist entsprechend an der dem Antriebsmotor abgewandten Stirnseite des Getriebegehäuses GG angeordnet.

Die Bremsen C und D bilden eine vormontierbare Baugruppe, die als Ganzes in das Getriebegehäuse eingesetzt ist. Diese Baugruppe umfaßt die als Außenlamellenträger ausgebildeten Ausgangselemente 330, 430 beider Bremsen C und D, die Lamellenpakete 300, 400 beider Bremsen C und D, sowie die Servoeinrichtungen 310, 410 beider Bremsen C und D. In vorteilhafter Weise sind die beiden Außenlamellenträger 330 und 430 als einstückiges zylinderförmiges Bauteil ausgeführt, welches in Fig. 7 mit ZYLCD bezeichnet ist, in dem auch Teile der Servoeinrichtungen 310 und 410 integriert sind. Eine derartige Baugruppe ist beispielsweise aus der DE 101 31 816 A1 der Anmelderin bekannt. Als weiteres Detail ist aus Fig. 7 ersichtlich, daß der Zylinder ZYLCD auch einen Lagersitz für das dem Stirnrad STR1 nahe Kegelrollenlager der Lagerung der Seitenwelle (STR2) bildet.

Wie bereits angedeutet, entspricht die konstruktive Ausgestaltung der Baugruppe mit den beiden Kupplungen B, E weitgehend-der zuvor anhand Fig. 6 detailliert beschriebenen Detaillösung, sodaß an dieser Stelle auf eine nochmalige Beschreibung der (mit gleichen Bezugszeichen versehenen) Einzelkomponeneten verzichtet werden kann. Ergänzend sei lediglich erwähnt, daß der Durchmesser des Lamellenpaketes 500 der Kupplung E und die Außenkontur des Kolbens 214 der Servoeinrichtung 210 der Kupplung B, der ja das Lamellenpaket 500 der Kupplung E in axialer Richtung radial übergreift, an den gehäuseseitigen Lagersitz des antriebsmotornahen Kegelrollenlagers der Seitenwelle (STR2) angepaßt ist.

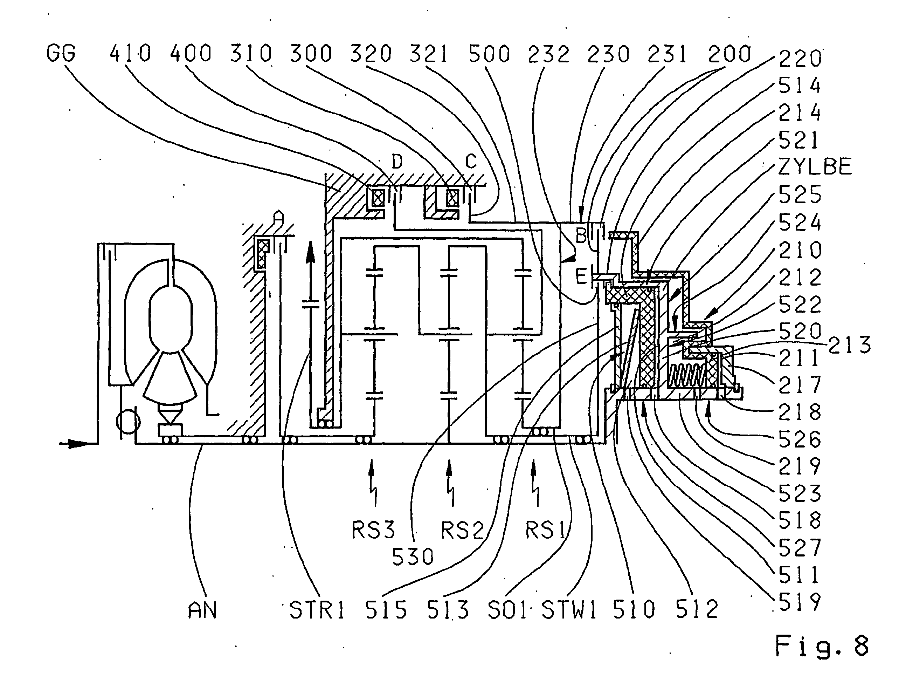

Anhand der Figuren 8 bis 15 werden im folgenden verschiedene erfindungsgemäße Bauteilanordnungen näher erläutert, bei denen die Servoeinrichtungen beider Kupplungen B und E beim Kupplungsschließen die gleiche Betätigungsrichtung haben.

Fig. 8 zeigt nun eine beispielhafte zweite schematische Bauteilanordnung gemäß der Erfindung. Dabei ist diese zweite erfindungsgemäße Bauteilanordnung ähnlich zu der in Fig. 5 dargestellten ersten schematischen Bauteilanordnung. Wie aus Fig. 8 ersichtlich, bilden die Kupplungen B und E eine vormontierbare Baugruppe, die auf der Seite des ersten Planetenradsatzes RS1 angeordnet ist, die den anderen Planetenradsätzen RS2, RS3 gegenüberliegt. Das Eingangselement 520 der Kupplung E und das Eingangselement 220 der Kupplung B sind als ein gemeinsamer Lamellenträger ZYLBE zusammengefaßt, der mit der Antriebswelle AN über geeignete Mittel (Mitnahmeprofil, Schweißverbindung, einstückige Ausführung, ...) verbunden ist. Das Eingangselement 220 der Kupplung B ist also unverändert über das Eingangselement 520 der Kupplung E mit der Antriebswelle AN verbunden. Dabei bildet der gemeinsame Lamellenträger ZYLBE für die Kupplung E deren Außenlamellenträger (520) und für die Kupplung B deren Innenlamellenträger (220). Die Lamellenpakete 200 mit Außen- und Belaglamellen der Kupplung B und 500 mit Außen- und Belaglamellen der Kupplung E sind räumlich gesehen zumindest weitgehend übereinander angeordnet, wobei das Lamellenpaket 200 der Kupplung B - wie in Fig. 5 - das äußere der beiden Lamellenpakete ist und beide Lamellenpakete 200, 500 axial neben dem ersten Planetenradsatz RS1 angeordnet sind.

Im Unterschied zu den zuvor beschriebene Ausführungsbeispielen der Erfindung erfolgt nunmehr sowohl die Betätigung der Lamellen 500 beim Schließen der Kupplung E - bezogen auf die räumliche Lage des Druckraums 511 der Servoeinrichtung 510 der Kupplung E - als auch die Betätigung der Lamellen 200 beim Schließen der Kupplung B - bezogen auf die räumliche Lage des Druckraums 211 der Servoeinrichtung 210 der Kupplung B - "drückend". Entsprechend der Anordnung der beiden Lamellenpakete 200, 500 im Getriebe relativ zu dem Planetenradsätzen betätigen die beiden Servoeinrichtungen 210, 510 die ihnen jeweils zugeordneten Lamellen 200 bzw. 500 beim Kupplungsschließen axial in Richtung des ersten Planetenradsatzes RS1.

Wie aus der gewählten Nomenklatur ersichtlich, sind die geometrisch unterschiedlich ausgebildeten Abschnitte 523, 522, 525, 521 und 524 des für die Kupplungen B und E gemeinsamen Lamellenträgers ZYLBE dem Eingangselement 520 der Kupplung E zuzuordnen. Die Nabe 523 ist mit der Antriebswelle AN verbunden und weist ihrerseits zwei zylinderförmige Nabenabschnitte 527 und 526 axialer Erstreckung auf. Diese beiden Nabenabschnitte 527 und 526 werden durch den ersten scheibenförmigen Abschnitt 522 räumlich voneinander getrennt. Ausgehend vom Außendurchmesser der Nabe 523 erstreckt sich dieser erste scheibenförmige Abschnitt 522 etwa nabenmittig radial nach außen und geht in den zweiten scheibenförmigen Abschnitt 525 über, der sich dann weiter radial nach außen erstreckt. Der Nabenabschnitt 527 ist auf der dem Planetenradsatz RS1 zugewandten Seite des scheibenförmigen Abschnitts 522 angeordnet. Entsprechend ist der Nabenabschnitt 526 auf der dem Planetenradsatz RS1 abgewandten Seite des scheibenförmigen Abschnitts 522 angeordnet. Am Außendurchmesser des zweiten scheibenförmigen Abschnitts 525 schließt sich der erste zylindrische Abschnitt 521 an und erstreckt sich axial in Richtung des Planetenradsatzes RS1, bis über das Lamellenpaket 500 der Kupplung E. An seinem Innendurchmesser weist der erste zylindrische Abschnitt 521 ein geeignetes Mitnahmeprofil auf zur Aufnahme der Außenlamellen des Lamellenpaketes 500 der Kupplung E. Weiterhin weist der erste zylindrische Abschnitt 521 an seinem Außendurchmesser ein geeignetes Mitnahmeprofil auf zur Aufnahme der Belaglamellen (Innenlamellen) des Lamellenpaketes 200 der Kupplung B. Am Außendurchmesser des ersten scheibenförmigen Abschnitts 522 schließt sich auch der zweite zylindrische Abschnitt 524 an und erstreckt sich radial oberhalb des Nabenabschnitts 526 axial in zum Planetenradsatz RS1 bzw. in zu den Lamellenpaketen 500, 200 entgegengesetzter Richtung.

Der für beide Kupplungen B, E gemeinsame Lamellenträger ZYLBE bildet also einem Kupplungsraum, innerhalb dessen die Kupplung E mit ihrem Lamellenpaket 500 und ihrer Servoeinrichtung 510 angeordnet ist. Dabei ist die komplette Servoeinrichtung 510 der Kupplung E (inclusive ihres Druckraums 511, ihres Kolbens 514., ihres Druckausgleichraumes 512, ihres Rückstellelementes 513 und ihrer Stauscheibe 515) räumlich gesehen zumindest weitgehend radial über dem Nabenabschnitt 527 angeordnet. Der Druckraum 511 wird durch den Kolben 514, sowie den zylindrischen Nabenabschnitt 527 und den scheibenförmigen Abschnitt 522 und Teile des zylindrischen Abschnitts 521 des Lamellenträgers ZYLBE gebildete. Der durch den Kolben 514 und die Stauscheibe 515 gebildete Druckausgleichraum 512 zum Ausgleich des dynamischen Druckes des rotierenden Druckraums 511 ist auf der dem Druckraum 511 gegenüberliegenden Seite des Kolbens 514 angeordnet, also näher an dem ersten Planetenradsatz RS1 als der Druckraum 511. Die Druckmittelzuführung zum Druckraum 511 ist wieder mit 518 bezeichnet, die Schmiermittelzuführung zum Druckausgleichsraum 512 mit 519. Das beispielhaft als Tellerfeder ausgeführte Rückstellelement 513 ist zwischen Kolben 514 und Stauscheibe 515 vorgespannt, wobei sich die Stauscheibe 515 axial an der Nabe 523 des Lamellenträgers ZYLBE abstützt.

Der Druckraum 211, der Druckausgleichsraum 212 und das Rückstellelement 213 der Servoeinrichtung 210 der Kupplung B sind räumlich gesehen radial über dem Nabenabschnitt 526 angeordnet. Dabei grenzt der Druckausgleichsraum 212 unmittelbar an den ersten scheibenförmigen Abschnitt 522 der Lamellenträgers ZYLBE an und wird gebildet durch diesen scheibenförmigen Abschnitt 522, den zylindrischen Nabenabschnitt 526, den zylindrischen Abschnitt 524 und den Kolben 214. In diesem Bereich ist der Kolben 214 also durch den Druckausgleichsraum 212 von der Mantelfläche des Lamellenträgers ZYLBE getrennt. Dabei ist der Kolben 214 gegenüber dem zweiten zylindrischen Abschnitt 524 hin axial verschiebbar (zumindest weitgehend schmiermitteldicht) abgedichtet, vorzugsweise am Innendurchmesser des zweiten zylindrischen Abschnitt 524. Der Kolben 214 umfaßt den zweiten zylindrischen Abschnitt 524 in axialer und radialer Richtung. Im radial unteren Bereich des Druckausgleichsraums 212 ist das hier beispielhaft als Schraubenfederpaket ausgeführte und zwischen dem Lamellenträger-Abschnitt 522 und Kolben 214 vorgespannte Rückstellelement 213 angeordnet, sodaß der Kolbens 214 im Bereich des Druckausgleichsraumes 212 eine insgesamt radial gerichtete meanderförmige Struktur aufweist. Geometrisch gesehen folgt der Kolben 214 im weiteren Verlauf der Außenkontur des für beide Kupplungen gemeinsamen Lamellenträger ZYLBE in axialer und radialer Richtung zumindest weitgehend und erstreckt sich letztlich axial bis zu dem Lamellenpaket 200 der Kupplung B.

Der Druckraum 211 zum Betätigen des Kolbens 214 ist entsprechend auf der dem Druckausgleichsraum 212 gegenüberliegenden Seite des Kolbens 214 angeordnet. Gebildet wird der Druckraum 211 durch den Kolben 214, den zylindrischen Nabenabschnitt 526 und durch ein zylinderförmige Stützscheibe 217. Diese Stützscheibe 217 weist einen scheibenförmigen Abschnitt auf, dessen Innendurchmesser auf den Nabenabschnitt 526 der Nabe 523 aufgeschoben ist, axial im Bereich des axial äußeren (radsatzabgewandten) Randes des Nabenabschnitts 526 an der Nabe 523 gesichert ist und hierbei auch zur Nabe 523 (druckmitteldicht) abgedichtet ist. Am Außendurchmesser des scheibenförmigen Abschnittes der Stützscheibe 217 schließt sich ein zylindrischer Abschnitt an, der sich axial in Richtung des Druckausgleichsraums 212 erstreckt. Der Kolben 214 ist gegenüber diesem zylindrischen Abschnitt der Stützscheibe 217 sowie gegenüber dem zylindrischen Nabenabschnitt 526 axial verschiebbar (druckmitteldicht) abgedichtet. Die Druckmittelzuführung zum Druckraum 211 ist wieder mit 218 bezeichnet, die Schmiermittelzuführung zum Druckausgleichsraum 212 mit 219.

Dem Fachmann ist klar, daß die radiale Erstreckung des Druckausgleichsraums 212, also der Durchmesser des zweiten zylindrischen Abschnitts 524 auf die Geometrie des Druckraumes 211 abgestimmt ist, vorzugsweise derart, daß ein zumindest weitgehender Ausgleich des rotatorischen Druckanteils des Kupplungsdruckes der Kupplung B erzielt wird.

Wie aus Fig. 8 ersichtlich, grenzen also der Druckraum 511 der Servoeinrichtung 510 der Kupplung E und der (zum dynamischen Druckausgleich des rotierenden Druckraums 211 vorgesehene) Druckausgleichsraum 212 der Servoeinrichtung 210 der Kupplung B unmittelbar an die Mantelfläche (Abschnitte 522 und 525) des für beide Kupplungen B und E gemeinsamen Lamellenträgers ZYLBE an. Der Druckraum 211 der Servoeinrichtung 210 der Kupplung B ist entsprechend auf der dieser Lamellenträger-Mantelfläche (Abschnitte 522 und 525) gegenüberliegenden Seite des Druckausgleichraumes 212 der Servoeinrichtung 210 der Kupplung B angeordnet. Der (zum dynamischen Druckausgleich des rotierenden Druckraums 512 vorgesehene) Druckausgleichsraum 512 der Servoeinrichtung 510 der Kupplung E ist entsprechend auf der dieser Lamellenträger-Mantelfläche (Abschnitte 522 und 525) gegenüberliegenden Seite des Druckraumes 511 der Servoeinrichtung 510 der Kupplung E angeordnet.

Ähnlich wie in Fig. 5 ist auch in Fig. 8 das Ausgangselement 530 der Kupplung E als axial schmal bauender Innenlamellenträger ausgebildet, der sich, ausgehend vom Innendurchmesser des Lamellenpaketes 500, axial angrenzend an die Servoeinrichtung 510 der Kupplung E und deren Druckausgleichsraum 512, radial nach innen erstreckt bis zur Stegwelle STW1, mit der er verbunden ist. Wie schon mehrfach beschrieben, ist die Stegwelle STW1 auf der Antriebswelle AN gelagert, durchdringt das Sonnenrad SO1 des ersten Planetenradsatz RS1 zentrisch und stellt die kinematische Anbindung zwischen dem Innenlamellenträger (530) der Kupplung E und den anderen Radsatzelementen gemäß Kraftflußschema her.

Das Ausgangselement 230 der Kupplung B ist nunmehr als Außenlamellenträger ausgebildet, mit einem zylindrischen Abschnitt 231, an dessen Innendurchmesser ein geeignetes Mitnahmeprofil für die Außenlamellen des Lamellenpaketes 200 der Kupplung vorgesehen ist, sowie mit einem scheibenförmigen Abschnitt 232, der sich auf der der Betätigungsseite des Lamellenpaketes 200 abgewandten Seite des zylindrischen Abschnitt 231 an diesen Abschnitt 231 anschließt und sich radial nach innen erstreckt, bis zu den Sonnenrad SO1 des ersten Planetenradsatzes RS1, mit dem er verbunden ist.

Das Eingangselement 320 der Bremse C ist als zylinderförmiger Innenlamellenträger ausgebildet, der sich in axialer Richtung gesehen radial oberhalb des zweiten und ersten Planetenradsatzes RS2, RS1 erstreckt und dabei den ersten Planetenradsatz RS1 vollständig übergreift. An seiner der Kupplung B zugewandten Seite stößt der zylindrische Abschnitt 321 des Innenlamellenträgers (320) der Bremse C an den Außenlamellenträger (230) der Kupplung B an, hier beispielhaft an dessen zylindrischen Abschnitt 231, und ist mit diesem über geeignete Mittel (beispielsweise form- oder stoffschlüssig) verbunden. In einer anderen Ausgestaltung kann beispielsweise auch vorgesehen sein, daß der zylindrische Abschnitt 321 des Innenlamellenträgers (320) der Bremse C (oder der ganze Innenlamellenträgers der Bremse C) und der zylindrische Abschnitt 231 des Außenlamellenträgers (230) der Kupplung B einstückig ausgeführt sind.

Wie aus Fig. 8 weiterhin ersichtlich, ist das erste Stirnrad STR1 beispielhaft direkt an einer Innenwand des Getriebegehäuses GG, die sich radial in den Innenraum des Getriebes erstreckt, gelagert. Diese Innenwand bildet also quasi die in Fig. 5 dargestellte Gehäusezwischenwand, nunmehr aber als fester Getriebegehäuseabschnitt. Wie in Fig. 5 sind die beiden Bremsen C, D räumlich gesehen in einem Bereich über den nebeneinanderliegenden Planetenradsätze RS1, RS2, RS3 angeordnet, die Bremse D überwiegend über dem dritten Planetenradsatz RS3 und die Bremse C überwiegend über dem (mittleren) zweiten Planetenradsatz RS2. Im Unterschied zu Fig. 5 ist die Betätigungsrichtung der Servoeinrichtungen 310 und 410 der beiden Bremsen C, D beim Betätigen der jeweiligen Lamellenpakete 300, 400 gleichgerichtet. Beim Schließen betätigen beide Servoeinrichtungen 310, 410 das ihnen jeweils zugeordnete Lamellenpaket 300 bzw. 400 axial in Richtung des ersten Planetenradsatzes RS1 bzw. der Baugruppe aus den beiden Kupplungen B und E.

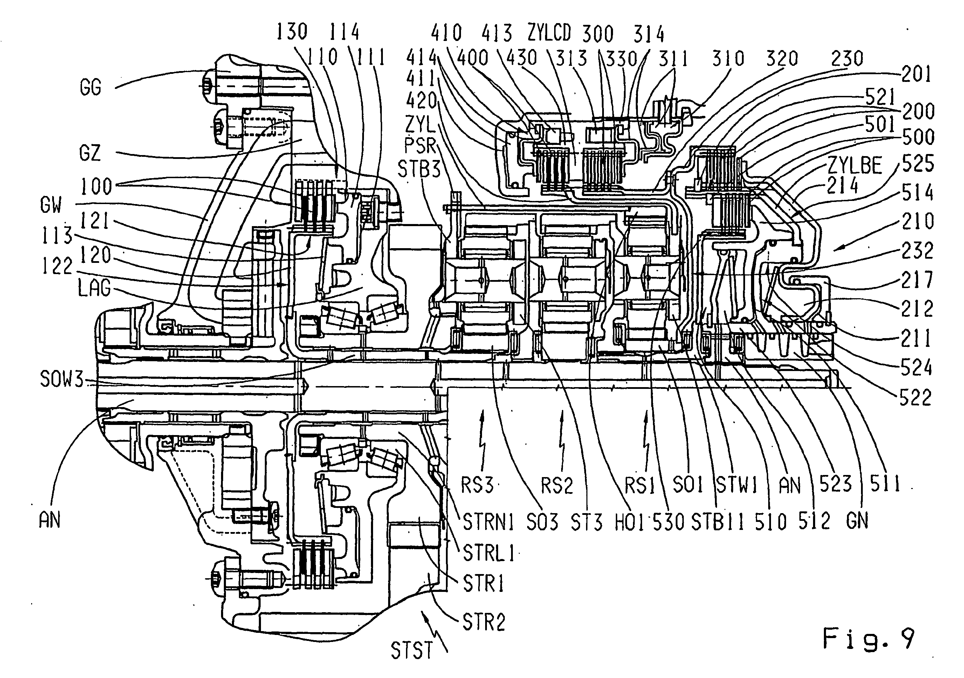

Fig. 9 zeigt nun einen Ausschnitt aus einem Getriebeschnitt einer praktisch ausgeführten Getriebekonstruktion, basierend auf dem Getriebeschnitt gemäß Fig. 8. Die Ausgestaltung der Baugruppe mit den beiden Kupplungen B und E entspricht der in Fig. 8 vorgeschlagenen Anordnung, sodaß hier auf eine nochmalige detaillierte Beschreibung der (mit gleichen Bezugszeichen versehenen) einzelnen Elemente dieser Baugruppe weitgehend verzichtet werden kann. Zur konstruktiven Ausbildung des für beide Kupplungen gemeinsamen Lamellenträgers ZYLBE sei noch auf die hier dargestellte fertigungstechnisch und kostenmäßig günstige Ausführungsform des Lamellenträgers ZYLBE hingewiesen. Wie in Fig. 9 ersichtlich, ist der Lamellenträger ZYLBE als zweiteilige Konstruktion ausgeführt. Das erste Bauelement des Lamellenträgers ZYLBE ist ein Gußteil oder Schmiedeteil oder Drehteil und beinhaltet die Lamellenträger-Nabe 523, den ersten scheibenförmigen Abschnitt 522 und den zweiten zylindrischen Abschnitt 524 des Lamellenträgers ZYLBE. Das zweite Bauelement des Lamellenträgers ZYLBE ist ein Blechumformteil und beinhaltet den zweiten (annähernd) scheibenförmigen Abschnitt 525 und den ersten zylindrischen Abschnitt 521 des Lamellenträgers ZYLBE. Beide Bauelemente des Lamellenträgers ZYLBE sind miteinander verbunden, hier beispielhaft verschweißt. Durch dies konstruktive Ausbildung des Lamellenträgers ZYLBE können das LamellenMitnahmeprofil für die Belaglamellen des (außenliegenden) Lamellenpaketes 200 der Kupplung B und das Mitnahmeprofil für die Außenlamellen des (innenliegenden) Lamellenpaketes 500 der Kupplung E in vorteilhafter Weise in einem Arbeitsgang hergestellt werden, bei entsprechend aufeinander abgestimmten Mitnahmeprofilen der betroffenen Lamellen. Als Detail sind zusätzlich noch zwei Sicherungsringe 201 und 501 eingezeichnet. Der Sicherungsring 201 dient als axiale Anlagefläche für das Lamellenpaket 200 der Kupplung B, gegen die sich dieses Lamellenpaket 200 bei einer Druckbeaufschlagung des Druckraums 211 der Servoeinrichtung 210 abstützt. Der Sicherungsring 501 dient als axiale Anlagefläche für das Lamellenpaket 500 der Kupplung E, gegen die sich dieses Lamellenpaket 500 bei einer Druckbeaufschlagung des Druckraums 511 der Servoeinrichtung 510 abstützt. Beide Sicherungsringe 201 und 501 sind über geeignete Mittel am Lamellenträger ZYLBE axial festgesetzt. Im dargestellten Beispiel sind die Sicherungsringe 201 und 501 hierzu in entsprechend ausgeformte Nuten des Lamellenträgers ZYLBE eingesetzt.

Die Bremsen C und D bilden eine vormontierbare Baugruppe, die als Ganzes in das Getriebegehäuse eingesetzt ist. Diese Baugruppe umfaßt die als Außenlamellenträger ausgebildeten Ausgangselemente 330, 430 beider Bremsen C und D, die Lamellenpakete 300, 400 beider Bremsen C und D, sowie die Servoeinrichtungen 310, 410 beider Bremsen C und D. In vorteilhafter Weise sind die beiden Außenlamellenträger 330 und 430 als einstückiges zylinderförmiges Bauteil ZYLCD ausgeführt, in dem auch Teile der Servoeinrichtungen 310 und 410 integriert sind. Die beiden Lamellenpakete 300, 400 werden durch einen etwa zylindermittige Anlageschulter des gemeinsamen Außenlamellenträgers ZYLCD axial voneinander getrennt. Die Kolben 314 und 414 der Servoeinrichtungen 310, 410 sind jeweils an der äußeren Stirnfläche des jeweiligen Lamellenpaketes 300 bzw. 400 angeordnet. Die Rückstellelemente 313 und 413 der Servoeinrichtungen 310, 410 sind jeweils räumlich gesehen radial über dem jeweiligen Lamellenpaket 300 bzw. 400 angeordnet. Die Betätigungsrichtung beider Servoeinrichtungen 310, 410 beim Schließen der jeweiligen Bremse C bzw. D infolge einer Druckbeaufschlagung des jeweiligen Druckraumes 311 bzw. 411 der Servoeinrichtung 310 bzw. 410 sind also entgegengesetzt zueinander gerichtet. Eine derartige Baugruppe ist aus der DE 101 31 816 A1 der Anmelderin bekannt. Die Bremse C ist näher an der Baugruppe mit den beiden Kupplungen B und E angeordnet als die Bremse D. In axialer Richtung gesehen ist die Bremse C in einem Bereich radial über.dem ersten und zweiten (mittleren) Planetenradsatz RS1, RS2 angeordnet, die Bremse D in einem Bereich radial über dem zweiten (mittleren) und dritten Planetenradsatz RS2, RS3.

Als Detail soll an dieser Stelle noch erwähnt werden, daß für die Bremse C hier beispielhaft zwei unabhängig voneinander betätigbare Druckräume 311 vorgesehen sind, die beide auf das Lamellenpaket 300 wirken. Hierdurch ist der Schließdruck der Bremse C als Differenzdruck beider Druckräume 311 steuerbar bzw. regelbar, was bekannterweise besonders günstig ist, wenn das betreffende Schaltelement bei mehreren Schaltungsarten in Eingriff gebracht werden muß, deren Schaltdruckniveau aufgrund der zu schaltenden Drehmomente deutlich voneinander abweichen. Selbstverständlich kann in einer anderen Ausgestaltung auch vorgesehen sein, daß zusätzlich oder auch ausschließlich für die Bremse D zwei unabhängig voneinander betätigbare Druckräume vorgesehen sind.

Als weiteres Detail soll noch auf die beispielhafte Ausgestaltung des Rückstellelementes 413 der Servoeinrichung 410 der Bremse D als auf den Kolben 414 wirkender hydraulische betätigbarer Druckraum hingewiesen werden. Der Fachmann wird eine derartige hydraulische Kolbenrückstellvorrichtung bedarfsweise auch für eine Differenzdruck-Steuerung bzw. Differenzdruck-Regelung einsetzen. Selbstverständlich kann in einer anderen Ausgestaltung auch vorgesehen sein, daß zusätzlich oder auch ausschließlich für die Bremse C eine derartige hydraulische Kolbenrückstellvorrichtung vorgesehen ist. Selbstverständlich kann eine derartige hydraulische Kolbenrückstellvorrichtung auch mit einem mechanischen Rückstellelement kombiniert werden, beispielsweise mit einer in dem ringförmigen Druckraum der hydraulischen Kolbenrückstellvorrichtung angeordneten Tellerfeder oder einem in dem, ringförmigen Druckraum der hydraulischen Kolbenrückstellvorrichtung angeordneten Paket aus parallelgeschalteten Schraubenfedern.

Wie aus Fig. 9 ersichtlich, weisen die Lamellen 200, 300 und 400 von Kupplung B, Bremse C und Bremse D zumindest annähernd den gleichen Durchmesser auf. Das Ausgangselement (Außenlamellenträger) 230 der Kupplung B ist beispielhaft als zylinderförmige Blechkonstruktion ausgeführt, die am kleinsten Durchmesser ihres scheibenförmigen Abschnitts 232 mit dem Sonnenrad SO1 des ersten Planetenradsatzes RS1 verbunden (hier beispielhaft verschweißt) ist. Das Eingangselement 320 (Innenlamellenträger) der Bremse C ist beispielhaft als ringförmige Blechkonstruktion ausgeführt, die - räumlich gesehen ungefähr radial über dem der Kupplung E zugewandten Stegblech STB11 des Stegs des ersten Planetenradsatzes RS1 und ungefähr auf dem Durchmesser der Lamellen 200 der Kupplung B - an den scheibenförmigen Abschnitt 232 des Außenlamellenträgers (230) der Kupplung B verbunden (hier beispielhaft angenietet) ist. Das Eingangselement (Innenlamellenträger) 420 der Bremse D ist ebenfalls beispielhaft als zylinderförmige Blechkonstruktion ausgeführt, die den ersten und zweiten Planetenradsatz RS1, RS2 in axialer Richtung gesehen radial vollständig übergreift und dabei abschnittsweise radial unterhalb des Innenlamellenträgers (320) der Bremse C verläuft und an seinem kleinsten Durchmesser am Außendurchmesser des den Kupplungen B, E zugewandten Stegblechs STB11 des ersten Planetenradsatzes RS1 mit diesem Stegblech STB11 verbunden ist, hier beispielhaft verschweißt auf einem Durchmesser, der etwas kleiner ist als der Teilkreisdurchmesser des Hohlrades HO1 des ersten Planetenradsatzes RS1.

Als weiteres Detail ist in Fig. 9 ein Parksperrenrad PSR eingezeichnet, welches in axialer Richtung gesehen radial über dem dem zweiten Planetenradsatz RS2 gegenüberliegenden Stegblech STB3 des Stegs ST3 des dritten Planetenradsatz RS3 angeordnet ist. Dabei sind Stegblech STB3 und Parksperrenrad PSR einteilig ausgeführt. In bekannter Weise ist an dem Außendurchmesser des Parksperrenrades PSR ein umlaufendes Zahnprofil vorgesehen, in das eine (zur Vereinfachung hier nicht dargestellte) Parksperrenklinke eingreifen kann zur Verblockung des Getriebeabtriebs. Der Zylinder ZYL, der entsprechend der kinematischen Koppelung der einzelnen Radsatzelemente die Verbindung zwischen dem Stegblech STB3 des dritten Planetenradsatzes RS3 und dem Hohlrad HO1 des ersten Planetenradsatzes RS1 herstellt, durchgreift entsprechende axiale Ausnehmungen des Stegblechs STB3 unterhalb des Zahnprofils des Parksperrenrades PSR und ist auf der radsatzabgewandten Seite axial gesichert.

Wie aus Fig. 9 weiterhin ersichtlich, ist zur Übertragung der Ausgangsdrehzahl der Planetenradsatzkombination (hier die Drehzahl des mit dem Hohlrad HO1 des ersten Planetenradsatzes RS1 verbundenen Stegs ST3 des dritten Planetenradsatzes RS3) auf die (zur Vereinfachung hier nicht dargestellte) Abtriebswelle des Automatgetriebes beispielhaft wieder ein Stirntrieb STST vorgesehen. Das erste Stirnrad STR1 dieses Stirntriebs STST ist hierbei räumlich gesehen axial zwischen dem dritten Planetenradsatz RS3 und der Bremse A angeordnet, zum einen axial unmittelbar angrenzend an das Sonnenrad SO3 un das (auf der dem mittleren Planetenradsatz RS2 abgewandten Seite des dritten Planetenradsatzes RS3 angeordneten) Stegblech STB3 des dritten Planetenradsatzes RS3, zum anderen axial unmittelbar angrenzend an den Innenlamellenträger (120) der Bremse A. Im dargestellten Beispiel ist zwischen Stirnrad STR1 und Stegblechs STB3 eine formschlüssige Verbindung vorgesehen, wobei das entsprechende Mitnahmeprofil räumlich gesehen am Innendurchmesser des Stegblechs STB3 angeordnet ist. Zur Abstützung der Axialkräfte einer Schrägverzahnung des ersten Stirnrades STR1 in Richtung der Planetenradsätze ist zwischen Stirnrad STR1 und Sonnenrad SO3 ein Axiallager angeordnet. Die beispielhaft als steife Kegelrollenlagerung ausgeführte Lagerung des ersten Stirnrades STR1 ist mit STRL1 bezeichnet und umfaßt beispielhaft zwei unmittelbar aneinandergrenzende Kegelrollenlager. Die Lagerinnenringe dieser beiden Kegelrollenlager sind auf einer Stirnradnabe STRN1 des ersten Stirnrades STR1, die sich axial in zum dritten Planetenradsatz RS3 entgegengesetzter Richtung erstreckt, axial über eine Wellenmutter eingespannt. Die Lageraußenringe dieser beiden Kegelrollenlager sind in jeweils eine Lagerbohrung einer Lagerplatte LAG eingesetzt und stützen sich jeweils an einer axial zwischen den beiden Kegelrollenlagern radial nach innen erstreckenden Anlageschulter der Lagerplatte LAG ab. Selbstverständlich kann anstelle der beiden einzelnen Kegelrollenlager der Stirnradlagerung STRL1 beispielsweise auch ein Kegelrollen-Verbundlager vorgesehen sein oder auch eine Rillenkugellagerung.

Die Lagerplatte LAG selber ist in eine entsprechende Lagerplattenbohrung der Gehäusezwischenwand GZ eingesetzt und mit dieser Gehäusezwischenwand GZ verschraubt. Die Stirnradnabe STRN1 des Stirnrades STR1 durchgreift also die Lagerplatte LAG und die Gehäusezwischenwand GZ, die beide auf der radsatzabgewandten Seite des ersten Stirnrades STR1 angeordnet sind, zentrisch. Die Gehäusezwischenwand GZ ihrerseits ist (auf der radsatzabgewandten Seite des ersten Stirnrades STR1) im Bereich ihres Außendurchmessers mit dem Getriebegehäuse GG verschraubt. Auf der stirntriebabgewandten Seite der Gehäusezwischenwand GZ grenzt die Gehäusewand GW axial an die Gehäusezwischenwand GZ an und ist mit dieser ebenfalls verschraubt. Die Gehäusewand GW wiederum bildet in dem in Fig. 9 dargestellten Beispiel die Außenwand des Getriebegehäuses GG, die dem mit der Antriebswelle AN wirkverbundenen (hier nicht dargestellten) Antriebsmotor des Automatgetriebes zugewandt ist. Die Baugruppe mit den beiden Kupplungen B und E ist also auf der antriebsmotorabgewandten Getriebeseite angeordnet. Im dargestellten Beispiel ist die Gehäusewand GW gleichzeitig ein Pumpengehäuse einer Ölpumpe des Automatgetriebes zur Druckmittelversorgung der Schaltelemente und zur Schmiermittelversorgung der diversen Schaltelemente, Verzahnungen und Lagerungen. Entsprechend sind sowohl in der Gehäusewand GW als auch in der Gehäusezwischenwand GZ verschiedene Kanäle zur Druck- und Schmiermittelführung integriert.

Die Bremse A ist unmittelbar benachbart zur Gehäusewand GW angeordnet, axial zwischen Gehäusewand GW (Pumpengehäuse) und Lagerplatte LAG. Dabei ist das als Außenlamellenträger ausgebildete Ausgangselement 130 der Bremse A in die Gehäusezwischenwand GZ integriert. Entsprechend weist die Gehäusezwischenwand GZ auf ihrer Pumpenseite eine hinreichend große Axialbohrung auf, an derem Innendurchmesser ein geeignetes Mitnahmeprofil zur Aufnahme der Außenlamellen des Lamellenpaketes 100 der Bremse A vorgesehen ist. Der Außendurchmesser des Lamellenpaketes 100 der Bremse A ist dabei etwas größer als der Außendurchmesser der Lagerplatte LAG. Das Lamellenpaket 100 der Bremse A grenzt dabei axial unmittelbar an die Gehäusewand GW (bzw. an das Pumpengehäuse) an. Auf der der Gehäusewand GW gegenüberliegenden Seite des Lamellenpaketes 100 grenzt der radial äußere Bereich der Lagerplatte LAG axial an das Lamellenpaket 100 an. Als konstruktive Detaillösung ist die Servoeinrichtung 110 der Bremse A in die Lagerplatte LAG integriert. Entsprechend weist die Lagerplatte LAG einen Kolben- bzw. Druckraum 111 auf, innerhalb dessen ein Kolben 114 dieser Servoeinrichtung 110 axial verschiebbar angeordnet ist. Bei einer Druckbeaufschlagung dieses Druckraumes 111 (über nicht rotierende Druckmittelkanäle, die zur Vereinfachung hier nicht dargestellt sind) betätigt der Kolben 114 das Lamellenpaket 100 der Bremse A axial in Richtung der Gehäusewand GW, gegen eine Rückstellkraft eines hier beispielhaft als Tellerfeder ausgeführten Rückstellelementes 113, welches sich an einem entsprechend ausgebildeten Bund der Lagerplatte LAG axial abstützt. Die Servoeinrichtung 110 der Bremse A ist also räumlich gesehen weitgehend über der Lagerung STRL1 des ersten Stirnrades STR1 des Stirntriebs STST angeordnet.

Als weitere konstruktive Detaillösung ist die Lagerplatte LAG von der Lamellenseite der Bremse A aus in die Gehäusezwischenwand GZ eingesetzt. Die Verschraubung der Lagerplatte LAG an die Gehäusezwischenwand GZ erfolgt ebenfalls von der Lamellenseite der Bremse A aus. Um eine Verschraubung auf einem möglichst großen Durchmesser zu erzielen, sind in dem Druckraum 111 der Servoeinrichtung 110 der Bremse A axial entgegensetzt zum Kolben 114 der Servoeinrichtung 110 gerichtete Aussenkungen vorgesehen, die auf dem Unfang des Druckraum 111 verteilt sind und die Schraubenköpfe der Lagerplattenverschraubung aufnehmen.

Somit bilden die Gehäusezwischenwand GZ, die Lagerplatte LAG mit Stirnradlagerung STRL1 und dem ersten Stirnrad STR1, und die Bremse A mit Servoeinrichtung 110 und Lamellenpaket 100 eine vormontierbare Baugruppe, die als ganzes in das Getriebegehäuse GG einsetzbar ist. Selbstverständlich kann auch beispielsweise als ebenfalls günstiger Montageablauf (ohne Montagerichtungsumkehr) vorgesehen sein, daß zunächst die Gehäusezwischenwand GZ in das Getriebegehäuse GG eingesetzt wird, anschließend die mit Stirnradlagerung STRL1 und dem ersten Stirnrad STR1 vormontierte Lagerplatte LAG in die die Gehäusezwischenwand GZ eingesetzt wird, dann die Servoeinrichtung 110 der Bremse A an der Lagerplatte LAG montiert wird, und abschließend das Lamellenpaket 100 der Bremse A in die Gehäusezwischenwand GZ eingesetzt wird.

Das Eingangselement 120 der Bremse A ist ein Innenlamellenträger und beispielhaft als zylinderförmige Blech- oder Schmiede-Konstruktion ausgeführt. Dieser axial kurz bauende Innenlamellenträger (120) weist einen zylindrischen Abschnitt 121 auf, an dessen Außendurchmesser ein Mitnahmeprofil vorgesehen ist zur Aufnahme der Belaglamellen des Lamellenpaketes 100 der Bremse A, und unterhalb dessen Innendurchmesser das Rückstellelement 113 der Servoeinrichtung der Bremse A angeordnet ist. Auf der der Gehäusewand GW zugewandten Seite dieses zylindrischen Abschnitts 121 schließt sich ein scheibenförmiger Abschnitt 122 des Innenlamellenträgers (120) der Bremse A an den zylindrischen Abschnitt 121 an und erstreckt sich radial nach innen bis zu einem nabenförmigen Abschnitt der Sonnenwelle SOW1, mit der verschweißt ist. Die Sonnenwelle SOW3 wiederum ist mit dem Sonnenrad SO3 des dritten Planetenradsatzes RS3 über ein geeignetes Mitnahmeprofil formschlüssig verbunden, sodaß die Sonnenwelle SOW3 auch als Nabe des Innenlamellenträgers (120) der Bremse A interpretiert werden kann. Die Antriebswelle AN wiederum verläuft radial innerhalb der Sonnenwelle SOW3 und durchdringt die Gehäusewand GW zentrisch.

Das zweite Stirnrad STR2 des Stirntriebs bildet ein Zwischenrad zwischen dem ersten Stirnrad STR1 und dem hier nicht dargestellten dritten Stirnrad des Stirntriebs STST. Zur Realisierung der notwendigen Übersetzung des Stirntriebs und der richtigen Drehrichtung der hier ebenfalls nicht dargestellten Abtriebswelle der Automatgetriebes ist das zweite Stirnrad STR2 als Stufenzahnrad ausgeführt, mit einer ersten Verzahnung, die mit der Verzahnung des ersten Stirnrades STR1 kämmt, und mit einer zweiten Verzahnung, die mit der Verzahnung des dritten Stirnrades kämmt. Räumlich gesehen ist die zweite Verzahnung des zweiten Stirnrades STR2 antriebsmotornah angeordnet, in axialer Richtung gesehen in einem Bereich radial über der Bremse A.

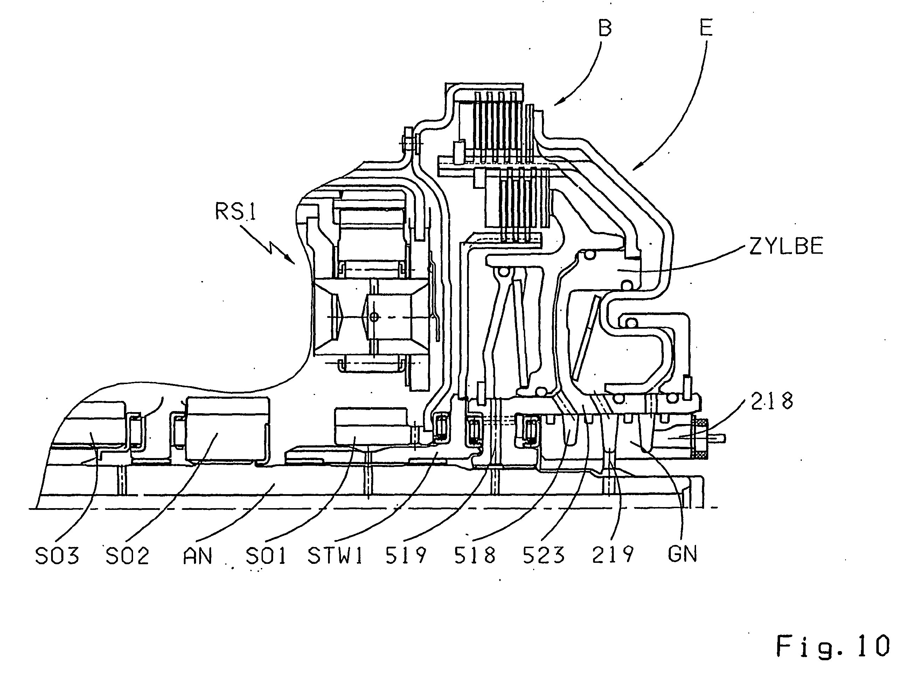

Anhand Fig. 10 wird nun eine zweite beispielhafte Detailkonstruktion des erfindungsgemäßen Getriebes gemäß Fig. 8 bzw. Fig. 9 erläutert. Dabei zeigt Fig. 10 einen sektionalen Getriebeschnitt im Bereich des ersten Planetenradsatzes RS1 und der zu diesem benachbarten Baugruppe mit den beiden Kupplungen B, E und betrifft vorrangig die Ausgestaltung der Antriebswelle AN. Im Unterschied zu Fig. 8 und Fig. 9 sind Antriebswelle AN und Nabe 523 des für beide Kupplungen B, E gemeinsamen Lamellenträgers ZYLBE nicht mehr einstückig (Fig. 8) oder verschweißt (Fig. 9), sondern nunmehr über ein geeignetes Mitnahmeprofil formschlüssig miteinander verbunden. Auch die Verbindung zwischen der Antriebswelle AN und dem Sonnenrad SO2 des zweiten (mittleren) Planetenradsatzes RS2 ist als formschlüssige Verbindung mit einem geeigneten Mitnahmeprofil ausgeführt. Hierdurch kann die Antriebswelle AN materialsparend und kostengünstig als schlanke Welle gefertigt werden.

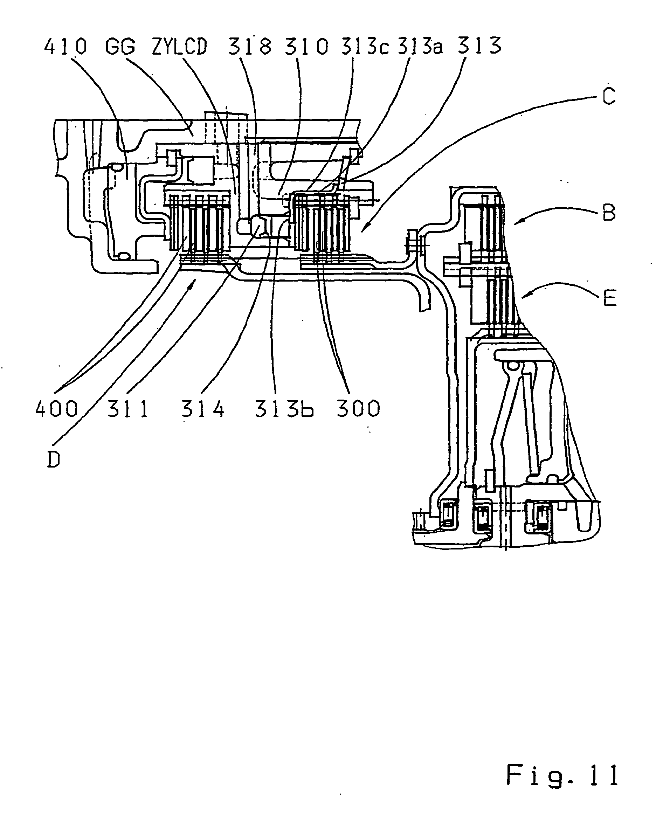

Anhand Fig. 11 wird nun eine dritte beispielhafte Detailkonstruktion des erfindungsgemäßen Getriebes gemäß Fig. 8 bzw. Fig. 9 erläutert. Dabei zeigt Fig. 11 einen sektionalen Getriebeschnitt im Bereich der Baugruppe mit den beiden Bremsen C und D und betrifft vorrangig die Ausgestaltung der Servoeinrichtung 310 der Bremse C. Im Unterschied zu Fig. 9, aber gleich wie bei Fig. 8, ist die Betätigungsrichtung der Servoeinrichtungen 310, 410 beider Bremsen C, D beim Schließvorgang der jeweiligen Bremse C bzw. D gleichgerichtet, hier beispielhaft axial in Richtung der benachbarten Baugruppe mit den Kupplungen B und E. Ähnlich wie in Fig. 9 ist ein gemeinsamer Außenlamellenträger ZYLCD für beide Lamellenpakete 300 und 400 der Bremsen C und D vorgesehen. Ähnlich wie in Fig. 9 sind auch Teile der Servoeinrichtungen 310 und 410. beider Bremsen C und D innerhalb dieses gemeinsamer Außenlamellenträgers ZYLCD angeordnet. Die Servoeinrichtung 410 der Bremse D ist dabei identisch ausgeführt wie in Fig. 9. Infolge der gegenüber Fig. 9 umgedrehten Betätigungsrichtung der Bremse C konnte nunmehr auch der Kolben- bzw. Druckraum 311 der Servoeinrichtung 310 der Bremse C vollständig in den gemeinsamen Außenlamellenträger ZYLCD integriert werden. Entsprechend ist der axial im Kolben- bzw. Druckraum 311 verschiebbar angeordnete Kolben 314 nunmehr auf der Seite des Lamellenpaketes 300 angeordnet, die der Bremse D zugewandt ist. Eine entsprechende Druckmittelzuführung zu dem Druckraum 311 ist mit 318 bezeichnet und verläuft abschnittsweise innerhalb des Außenlamellenträger ZYLCD und abschnittsweise im Getriebegehäuse GG, in das der Außenlamellenträger ZYLCD verdrehfest eingesetzt ist.

Als weiteres Konstruktionsdetail ist in Fig. 11 ein Druckteller 313a vorgesehen, der die Federkraft des hier als Tellerfeder ausgeführten Rückstellelementes 313 auf den Kolben 314 überträgt. Diese Tellerfeder (313) ist räumlich gesehen radial über den kolbenabgewandten letzten Lamellen des Lamellenpaketes 300 angeordnet und stützt sich im Bereich ihres Außendurchmessers axial an einem äußeren Bund der Außenlamellenträgers ZYLCD ab. Ausgehend von seiner ringförmigen Kolbenanlagefläche 313b erstreckt sich der Druckteller 313a radial nach außen bis knapp an das Lamellenmitnahmeprofil des Außenlamellenträgers ZYLCD für die Außenlamellen des Lamellenpaketes 300 und geht dort über in einen geschlitzten Abschnitt 313c des Drucktellers 313a. Dieser geschlitzte Abschnitt 313c verläuft in axialer Richtung innerhalb korrespondierender, axial gerichteter Ausnehmungen im Bereich des genannten Lamellenmitnahmeprofils radial oberhalb der Lamellen 300 und erstreckt sich axial bis zum Innendurchmesser der Tellerfeder (313), an dem er anliegt. Der Druckteller 313a übergreift also das Lamellenpaket 300 im wesentlichen.

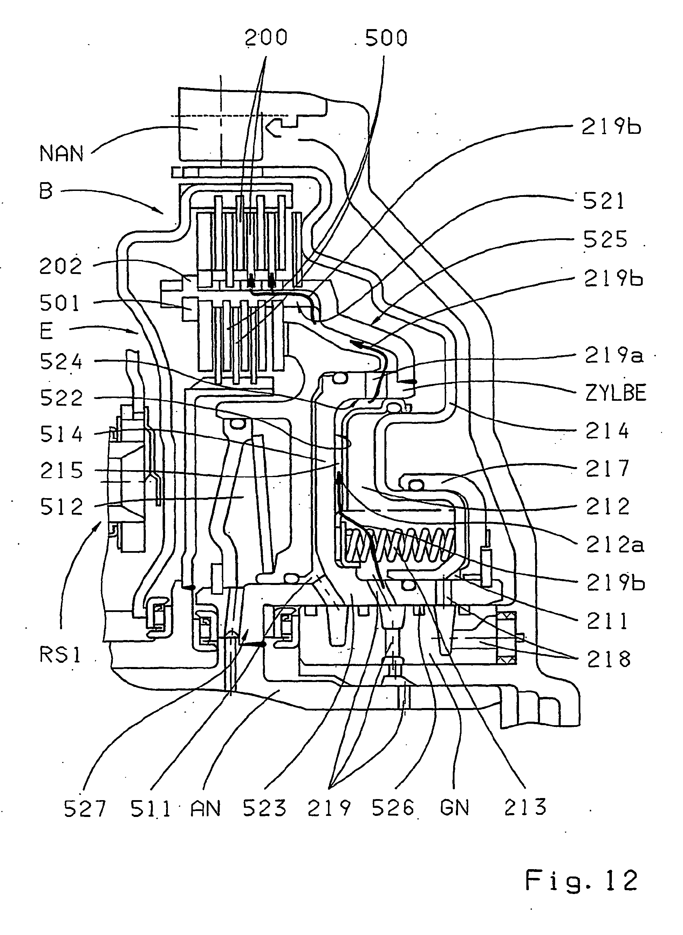

Anhand Fig. 12 wird nun eine vierte beispielhafte Detailkonstruktion des erfindungsgemäßen Getriebes gemäß Fig. 8 bzw. Fig. 9 erläutert. Dabei zeigt Fig. 12 einen sektionalen Getriebeschnitt im Bereich des ersten Planetenradsatzes RS1 und der zu diesem benachbarten Baugruppe mit den beiden Kupplungen B und E und betrifft vorrangig eine Kühlmittelführung zu den Lamellen 200 der Kupplung B.

Bis auf eine zusätzliche Kühlmittelführung im Bereich des Druckausgleichsraumes 212 der Kupplung B und im Bereich des ersten zylindrischen Abschnitts 521 des für beide Kupplungen B, E gemeinsamen Lamellenträgers ZYLBE entspricht die konstruktive Ausgestaltung der Baugruppe mit den beiden Kupplungen B und E weitgehend der in Fig. 8 und Fig. 9 zuvor im Detail erläuterten Ausgestaltung. Die wesentlichen Bezugszeichen wurden zur Verdeutlichung in Fig. 12 übernommen.

Im Unterschied zu Fig. 8 und Fig. 9 ist auf der Seite des (ersten) scheibenförmigen Abschnitts 522 des Lamellenträgers ZYLBE, die dem Druckraum 511 der Servoeinrichtung der Kupplung E gegenüberliegt, nunmehr zusätzlich ein Kühlmittelraum 212a angeordnet, über den ein Kühlmittelmenge zur Kühlung des Lamellempaketes 200 der Kupplung B geleitet und zwischengespeichert wird. Zur Bildung dieses Kühlmittelraums 212a und zur Abgrenzung dieses Kühlmittelraums 212a von dem Druckausgleichsraum 212 der Servoeinrichtung der Kupplung B ist eine Stauscheibe 215 zwischen einem aus dem (ersten) scheibenförmigen Abschnitt 522 und dem (zweiten) zylindrischen Abschnitt 524 bestehenden Mantelflächenabschnitt des Lamellenträgers ZYLBE und dem Kolben 214 der Servoeinrichtung der Kupplung B eingesetzt. Diese Stauscheibe 215 ist beispielhaft als Federblech ausgeführt und der Kontur des genannten Mantelflächenabschnitts des Lamellenträgers ZYLBE derart angepaßt, daß räumlich gesehen axial neben dem scheibenförmigen Abschnitt 522 und radial unterhalb des zylindrischen Abschnitts 524 des Lamellenträgers ZYLBE der genannte Kühlmittelraum 212a gebildet wird. Dabei weist die Stauscheibe 215 zwei Anlageflächen auf, die den Abstand zwischen Stauscheibe 215 und dem genannten Mantelflächenabschnitt des Lamellenträgers ZYLBE sicherstellen. Einerseits liegt die Stauscheibe 215 im Bereich der dem Druckraum 511 abgewandten Seite des zylindrischen Abschnitts 524 radial an diesem zylindrischen Abschnitt 524 zumindest weitgehend schmiermitteldicht an und ist radial unterhalb dieser Anlagefläche gegenüber dem Kolben 214 der Servoeinrichtung der Kupplung B (beispielhaft über einen handelsüblichen O-Ring) axial verschiebbar schmiermitteldicht abgedichtet. Andererseits liegt die Stauscheibe 215 räumlich gesehen auch in einem Durchmesserbereich des (hier aus parallelgeschalteten Schraubenfedern bestehenden) Rückstellelementes 213 der Servoeinrichtung der Kupplung B axial an dem scheibenförmigen Abschnitt 522 des Lamellenträgers ZYLBE an, wobei diese Anlagefläche der Stauscheibe 215 Schlitze oder Ausnehmungen aufweist, durch die Schmiermittel radial in den Kühlmittelraum 212a eintreten kann.

Der zusätzliche Kühlmittelraum 212a wird also durch die Stauscheibe 215, den (zweiten) zylindrischen Abschnitt 524 des Lamellenträgers ZYLBE und einen (radial oberen) Teil des (ersten) scheibenförmigen Abschnitts 522 des Lamellenträgers ZYLBE gebildet. Entsprechend wird der Druckausgleichsraum 212 der Servoeinrichtung der Kupplung B nunmehr aus dem anderen (radial unteren) Teil des (ersten) scheibenförmigen Abschnitts 522 des Lamellenträgers ZYLBE, der Stauscheibe 215, dem Nabenabschnitt 526 der Nabe 523 des Lamellenträgers ZYLBE und dem Kolben 214 der Servoeinrichtung des Kupplung B gebildet. Die Schmiermittelzufuhr zum Druckausgleichsraum 212 ist wieder mit 219 bezeichnet und verläuft abschnittsweise innerhalb der Nabe 523 (im Nabenabschnitt 526) des Lamellenträgers ZYLBE, der getriebegehäusefesten Nabe GN und der Antriebswelle AN. Die Schmiermittelzufuhr zu dem Kühlmittelraum 212a erfolgt von dem Druckausgleichsraum 212 her, in diesem Bereich sind also keine zusätzliche Wellen- und/oder Nabenbohrungen erforderlich. Diese Ausgestaltung hat den weiteren Vorteil, daß zunächst der für die Funktion der Kupplungsansteuerung wichtige Druckausgleichsraum 212 der Kupplung B befüllt wird. Steht danach eine ausreichend Schmierölmenge zur Verfügung, erfolgt automatisch die Befüllung des Kühlmittelraumes 212a der Kupplung B.

Im Bereich des Kühlmittelraumes 212a weist der (zweite) zylindrische Abschnitt 524 des Lamellenträgers ZYLBE mindestens eine radiale Kühlmittelbohrung 219a auf, über die das in dem Kühlmittelraum 212a zwischengespeicherte Schmiermittel als Kühlmittel zu den Lamellen 200 der Kupplung B weitergeleitet wird. Die entsprechende Kühlmittelzuführung zu den Lamellen 200 der Kupplung E ist in Fig. 12 als mit 219b bezeichneter Pfeil eingezeichnet. Im Bereich radial oberhalb der Kühlmittelbohrung 219a verläuft die Kühlmittelzuführung 219b räumlich gesehen zunächst zwischen dem Kolben 514 der Servoeinrichtung der Kupplung E und dem (zweiten) zumindest weitgehend scheibenförmigen Abschnitt 525 des Lamellenträgers ZYLBE, anschließend im Bereich des (ersten) zylindrischen Abschnitts 521 des Lamellenträgers ZYLBE axial entlang der Nuten des Lamellenmitnahmeprofils für die Außenlamellen des Lamellenpaketes 500 der Kupplung E, und von dort über entsprechende Radialbohrungen oder Ausnehmungen des zylindrischen Abschnitts 521 radial nach außen in den Bereich des Lamellenmitnahmeprofils für die Belaglamellen des Lamellenpaketes 200 der Kupplung B. Auf diese Weise wird ein wirkungsvolle Kühlung des konzeptbedingt thermisch hoch belasteten Lamellenpaketes 200 der Kupplung B erzielt.

Als weiteres konstruktives Detail ist in Fig. 12 eine kostensparende Axialsicherung der beiden Lamellenpakete 200 und 500 der Kupplungen B und E dargestellt. Dabei ist das radial unterhalb des ersten zylindrischen Abschnitts 521 des für beide Kupplungen B und E gemeinsamen Lamellenträgers ZYLBE angeordnete Lamellenpaket 500 der Kupplung E axial durch einen Sicherungsring 501 gesichert. Das Lamellenpaket 500 stützt sich bei einer Betätigung des Kolbens 514 der Servoeinrichtung der Kupplung E an diesem Sicherungsring 501 ab. Dabei ist dieser Sicherungsring 501 in eine entsprechende Nut eingelegt, die ausgehend vom Innendurchmesser des zylindrischen Abschnitts 521 radial nach außen in das Mitnahmeprofil des Lamellenträgers ZYLBE für die Außenlamellen des Lamellenpaketes 500 eingedrückt ist. Diese Eindrückung am Innendurchmesser des zylindrischen Abschnitts 521 des Lamellenträgers ZYLBE verursacht wiederum eine Material-Durchstellung 202 am Außendurchmesser des zylindrischen Abschnitts 521 im Bereich des Mitnahmeprofils des Lamellenträgers ZYLBE für die Außenlamellen des Lamellenpaketes 200. Diese Material-Durchstellung 202 der Kupplung B wird nun genutzt als axiale Anlagefläche für das Lamellenpaket 200 der Kupplung B. Bei einer Betätigung des Kolbens 214 der Servoeinrichtung der Kupplung B stützt sich das Lamellenpaket 200 also an der Material-Durchstellung 202 ab.

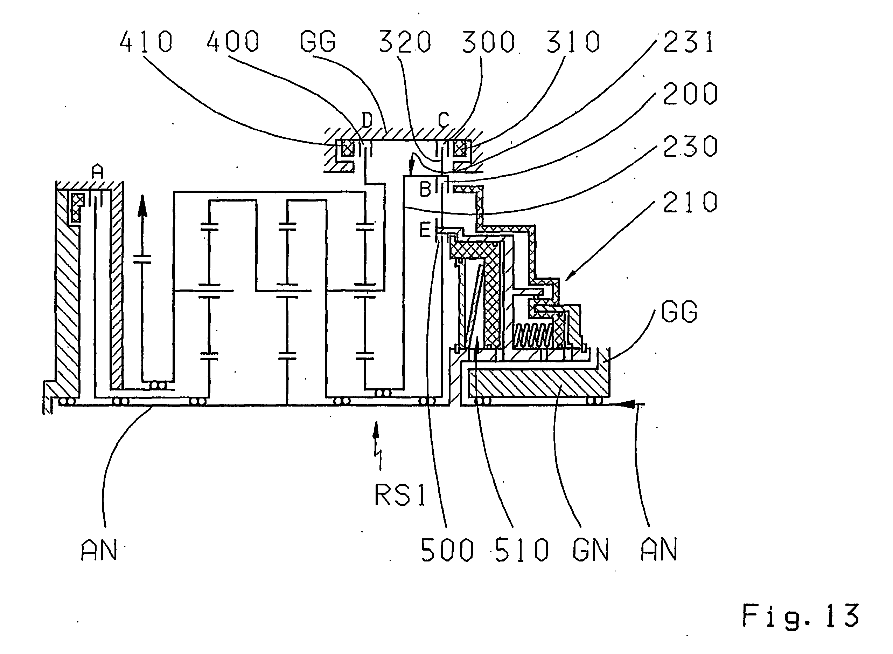

Fig. 13 zeigt nun eine beispielhafte dritte schematische Bauteilanordnung gemäß der Erfindung, basierend auf der in Fig. 8 dargestellten zweiten schematischen Bauteilanordnung. Die Änderungen gegenüber der dritten erfindungsgemäßen Bauteilanordnung betreffen im wesentlichen die räumliche Anordnung der beiden Bremsen C und D relativ zu den drei nebeneinander in Reihe angeordneten Planetenradsätzen RS1, RS2, RS3 und relativ zu der Baugruppe mit den beiden Kupplungen B, E. Wie aus Fig. 13 ersichtlich, ist die Bremse C in axialer Richtung gesehen nunmehr in einem Bereich radial über der Baugruppe der beiden Kupplungen B und E angeordnet. Die Lamellen 300 der Bremse C sind dabei zumindest weitgehend radial über dem Lamellenpaket 200 der Kupplung B angeordnet. Das als Außenlamellenträger ausgebildete Ausgangselement 230 der Kupplung B kann somit konstruktiv einfach auch gleichzeitig als Innenlamellenträger (Eingangselement 320) für die Bremse C ausgebildet sein, indem am Außendurchmesser des zylindrischen Abschnitts 231 des Ausgangselementes 230 zusätzlich ein Mitnahmeprofil für die Aufnahme der Belaglamellen des Lamellenpaketes 300 der Bremse C vorgesehen ist. Die Servoeinrichtung 310 zum Betätigen der Lamellen 300 der Bremse C ist beispielhaft auf der gleichen Lamellenseite angeordnet wie die Servoeinrichtungen 210 und 510 der Kupplung B bzw. der Kupplung E, also auf der dem Planetenradsatz RS1 abgewandten Seite des Lamellenpaketes 300.

Dem Fachmann ist klar, daß eine derartige Anordnung von drei Lamellen-Schaltelementen (E, B, C) radial übereinander einen vergleichsweise großen Getriebedurchmesser zufolge hat. Wie in Fig. 13 angedeutet, kann es also günstig sein, daß diese drei radial übereinanderliegenden Schaltelemente (E, B, C) auf der antriebmotornahen Getriebeseite angeordnet sind, weil in diesem Motorraumbereich des Fahrzeugs für das Getriebe zumeist ein vergleichsweise großer radialer Einbauraum zur Verfügung steht.

Wie in Fig. 13 weiterhin ersichtlich, ist die Bremse D räumlich gesehen nunmehr in einem Bereich über dem ersten Planetenradsatz RS1 angeordnet, also axial nahe an der Bremse C. Hierdurch können die beiden Bremsen C und D bedarfsweise als vormontierbare Baugruppe zusammengefaßt werden, wie beispielsweise zuvor in den Detailkonstruktionen gemäß Fig. 9 oder Fig. 11 angeregt.

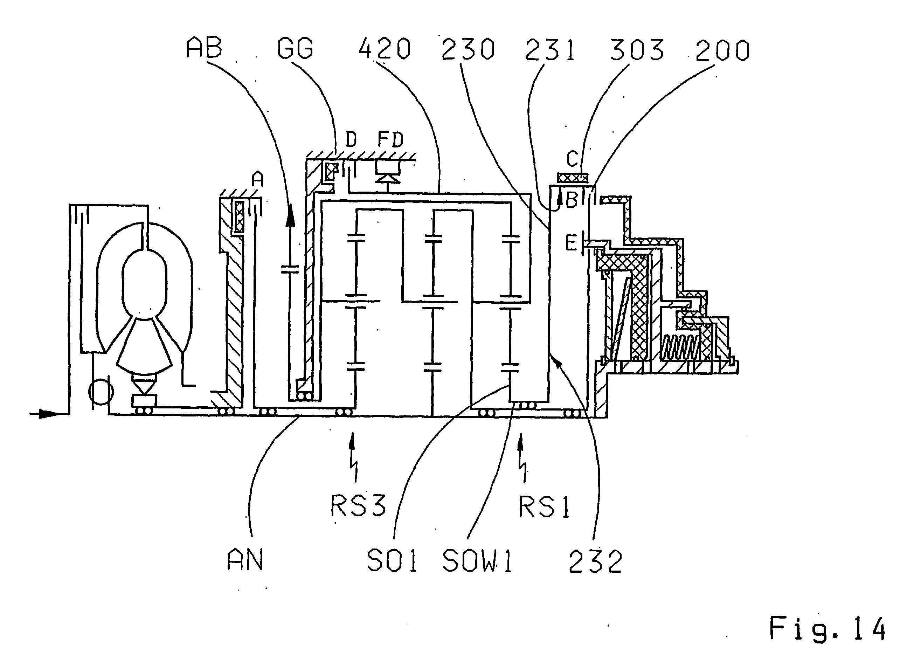

Fig. 14 zeigt nun eine beispielhafte vierte schematische Bauteilanordnung gemäß der Erfindung, basierend auf der in Fig. 13 dargestellten dritten schematischen Bauteilanordnung. Ausgehend von der räumlichen Anordnung der Bremse C in axialer Richtung gesehen radial über dem Lamellenpaket 200 der Kupplung B, ist die Bremse C - anstelle der Ausbildung als Lamellenbremse - nunmehr als Bandbremse ausgeführt. Dabei kann die Bandbremse (C) sowohl als einfach oder auch mehrfach geschlungene Simplex-Bandbremse als auch als Duplex-Bandbremse ausgeführt sein. Der Reibbelag der Bremse C ist somit geometrisch als handelsübliches Bremsband 303 ausgebildet, das über mindestens ein (in Fig. 14 zur Vereinfachung nicht dargestelltes) Schloß am Getriebegehäuse GG festgesetzt ist. Das Bremsband 303 ist in axialer Richtung gesehen zumindest teilweise radial über dem Lamellenpaket 200 der Kupplung B angeordnet.

Erfindungsgemäß bildet das Ausgangselement 230 der Kupplung B sowohl den Außenlamellenträger der Kupplung B als auch die innere Reibfläche für das Bremsband 303 als Eingangselement der Bremse C. Entsprechend ist das Ausgangselement 230 der Kupplung B als Zylinder ausgebildet, mit einem zylindrischen Abschnitt 231, an dessen Innendurchmesser ein Mitnahmeprofil angeordnet ist zur Aufnahme der Außenlamellen des Lamellenpaketes 200 der Kupplung B, und dessen Außendurchmesser als Gegenfläche für das mit dem Reibbelag versehene Bremsband 303 ausgebildet ist. Der scheibenförmige Abschnitt 232 des Ausgangselement 230. der Kupplung B verbindet den zylindrischen Abschnitt 231 mit der Sonnenwelle SOW1 bzw. dem Sonnenrad SO1 des ersten Planetenradsatzes RS1.

Durch eine derartige Ausbildung der Bremse C als Bandbremse ist der radiale Bauraumbedarf für das Automatgetriebe im Bereich der drei radial übereinander angeordneten Schaltelemente E, B, C gegenüber der zuvor in Fig. 13 dargestellten dritten erfindungsgemäßen Bauteilanordnung deutlich reduziert. Ein weiterer Vorteil ist der verbesserte Getriebewirkungsgrad in allen Getriebebetriebsbereichen, in denen die Bremse C nicht geschaltet ist, dadurch bedingt, daß Bandbremsen im nicht geschalteten Zustand bekanntlich gegenüber Lamellenbremsen einen verringerten Schleppmomentverlust aufweisen. Da eine Lamellenbremse prinzipiell konstruktiv durch eine Bandbremse ersetzbar ist, kann in anderen Ausgestaltungen des erfindungsgemäßen Automatgetriebes auch vorgesehen sein, daß anstelle der Bremse C oder auch zusätzlich zur Bremse C die im zweiten bis sechsten Vorwärtsgang nicht geschaltete Bremse D und/oder die im fünften und sechsten Vorwärtsgang sowie im Rückwärtsgang nicht geschaltete Bremse A als Bandbremse ausgeführt sind. Der Fachmann wird diese Substitution einer Lamellenbremse durch eine Bandbremse bedarfsweise sinngemäß auch bei den zuvor beschriebenen anderen erfindungsgemäßen Bauteilanordnungen vornehmen.

Als weiteres Detail ist zusätzlich ein Freilauf FD vorgesehen, der kinematisch zur Bremse D parallelgeschaltet ist und das Eingangselement 420 der Bremse D im Zugbetrieb des Getriebes (also bei einem getriebeinternen Drehmomentenverlauf von der Antriebswelle AN hin zur Abtriebswelle AB) an dem Getriebegehäuse GG (über geeignete Klemmkörper des Freilaufs FD) abstützt. Im Schubbetrieb des Getriebes (also bei einem getriebeinternen Drehmomentenverlauf von der Abtriebswelle AB hin zur Antriebswelle AN) wird der Freilauf FD überrollt. Ein derartiger Einbau eines zusätzlichen Freilaufs kann zur Erhöhung des Schaltkomforts bei der bekannt komfortkritischen Ausrollschaltung vom zweiten in den ersten Gang des Getriebes beim Ausrollen des Fahrzeugs vorgesehen sein.

Selbstverständlich wird der Fachmann die Merkmale der fünften erfindungsgemäßen Bauteilanordnung bei Bedarf sinngemäß auch mit den übrigen erfindungsgemäßen Bauteilanordnungen und Detailkonstruktionen kombinieren.

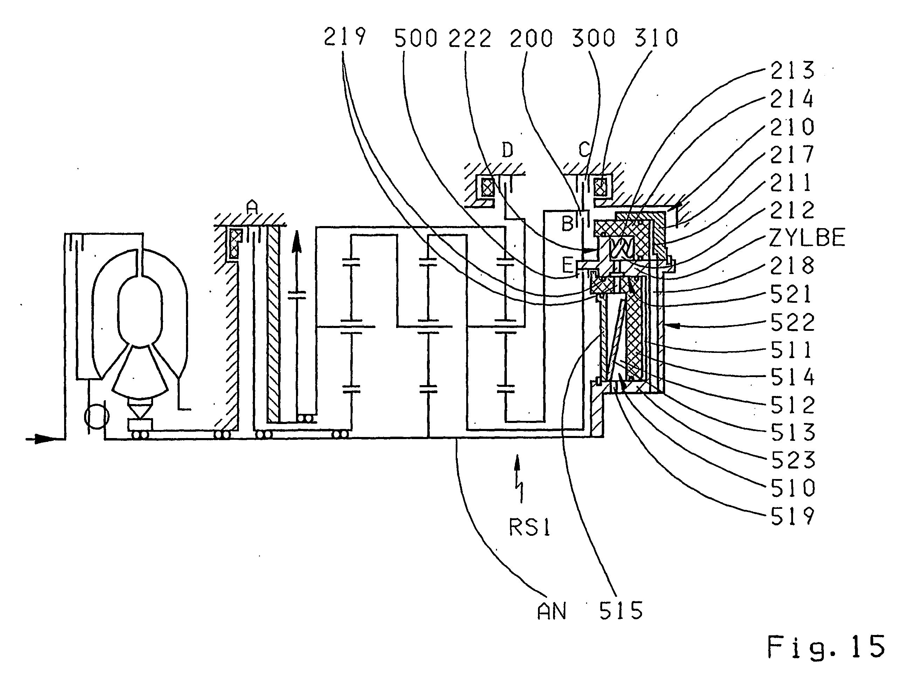

Fig. 15 zeigt nun eine beispielhafte fünfte schematische Bauteilanordnung gemäß der Erfindung. Dabei ist diese fünfte schematische Bauteilanordnung ähnlich zu der in Fig. 13 dargestellten dritten schematische Bauteilanordnung und betrifft primär die Ausbildung und Anordnung der Druckräume und Druckausgleichsräume beider Servoeinrichtungen der Baugruppe mit den beiden Kupplungen B und E. Unverändert ist für beide Kupplungen B und E ein gemeinsamer Lamellenträger ZYLBE vorgesehen, der für die Kupplung E den Außenlamellenträger und für die Kupplung B den Innenlamellenträger bildet. Unverändert sind beide Lamellenpakete 200 und 500 der Kupplungen B und E auf der dem ersten Planetenradsatz RS1 zugewandten Seite des Lamellenträgers ZYLBE angeordnet und werden von der jeweiligen Servoeinrichtung 210 bzw. 510 der Kupplung B bzw. E beim Kupplungsschließen axial in Richtung des Planetenradsatzes RS1 hin betätigt, wobei das Lamellenpaket 200 räumlich gesehen radial über dem Lamellenpaket 500 angeordnet ist. Unverändert weisen beide Servoeinrichtungen 210 und 510 jeweils auch einen dynamischen Druckausgleich auf. Gemäß Fig. 15 ist jedoch die räumliche Lage der Druck- und Druckausgleichräume 211, 511, 212, 512 beider Servoeinrichtungen 210, 510 relativ zueinander gegenüber Fig. 13 modifiziert.

Wie aus Fig. 15 ersichtlich, ist der für die Kupplungen B und E gemeinsame Lamellenträger ZYLBE geometrisch in die Abschnitte 523, 522, 521 und 222 unterteilt. Die Nabe 523, der scheibenförmige Abschnitt 522 und der zylindrische Abschnitt 521 sind dem Eingangselement der Kupplung E zuzuordnen, der scheibenförmige Abschnitt 222 dem Eingangselement der Kupplung B. Dies wird auch durch die gewählte Nomenklatur verdeutlicht. Die Nabe 523 ist mit der Antriebswelle AN verbunden. Auf der Seite der Nabe 523, die dem Planetenradsatz RS1 abgewandt ist, schließt sich der scheibenförmige Abschnitt 522 an die Nabe 523 an und erstreckt sich radial nach außen bis auf einen Durchmesser, der etwa dem Außendurchmesser des Lamellenpaketes 500 der Kupplung E entspricht. Der zylindrische Abschnitt 521 schließt sich am Außendurchmesser des scheibenförmigen Abschnitts 522 an diesen an und erstreckt sich in axialer Richtung bis über das Lamellenpaket 500 der Kupplung E, relativ nah an den ersten Planetenradsatz RS1 heran. An seinem Innendurchmesser weist der zylindrische Abschnitt 521 ein Mitnahmeprofil auf zur Aufnahme der Außenlamellen des Lamellenpaketes 500. Wie schon zuvor mehrfach beschrieben, bilden der zylindrische Abschnitt 521 und der scheibenförmige Abschnitts 522 des Lamellenträgers ZYLBE einen Kupplungsraum, innerhalb dessen die Lamellen 500 und die Servoeinrichtung 510 (samt Druckraum 511, Kolben 514, Rückstellelement 513, Druckausgleichraum 512 und Stauscheibe 515) angeordnet sind, radial oberhalb der Nabe 523 des Lamellenträgers ZYLBE. Der Druckraum 511 der Servoeinrichtung 510 wird dabei durch die Abschnitte 521, 522 und 523 des Lamellenträgers ZYLBE und den Kolben 514 der Servoeinrichtung 510 gebildet, der Druckausgleichsraum 512 durch den Kolben 514 und die Stauscheibe 515 der Servoeinrichtung 510. Der Druckausgleichsraum 512 ist näher am Planetenradsatz RS1 angeordnet als der Druckraum 511.

Weiterhin weist der zylindrische Abschnitt 521 des Lamellenträgers ZYLBE an der Seite, die dem Planetenradsatz RS1 zugewandt ist, an seinem Außendurchmesser ein Mitnahmeprofil auf zur Aufnahme der Belaglamellen des Lamellenpaketes 200 der Kupplung B. Axial neben diesem Lamellenmitnahmeprofil, auf der dem Planetenradsatz RS1 abgewandten Seite des Lamellenmitnahmeprofils, schließt sich der scheibenförmige Abschnitt 222 des Lamellenträgers ZYLBE an den zylindrischen Abschnitt 521 an und erstreckt sich - ausgehend vom Außendurchmesser des zylindrischen Abschnitts 521 - radial nach außen bis auf eine Durchmesser, der vorzugsweise kleiner ist als der mittlere Durchmesser der Außenlamellen des Lamellenpaketes 200 der Kupplung B.

Zur Bildung eines Kolben- bzw. Druckraumes 211 sowie eines Druckausgleichsraumes 212 der Servoeinrichtung 210 der Kupplung B ist eine zylinderförmige Stützscheibe 217 vorgesehen, die räumlich gesehen radial oberhalb des zylindrischen Abschnitts 521 des Lamellenträgers ZYLBE angeordnet ist. Dabei weist diese Stützscheibe 217 einen scheibenförmigen Abschnitt auf, dessen Innendurchmesser im Bereich des axial äußeren (radsatzabgewandten) Randes des zylindrischen Abschnitts 521 auf diesen zylindrischen Abschnitts 521 des Lamellenträgers ZYLBE aufgeschoben ist, axial in diesem Bereich an dem zylindrischen Abschnitts 521 gesichert ist und hierbei auch zu dem zylindrischen Abschnitts 521 hin (druckmitteldicht) abgedichtet ist. Am Außendurchmesser des scheibenförmigen Abschnittes der Stützscheibe 217 schließt sich ein zylindrischer Abschnitt an, der sich axial in Richtung des Lamellenpaketes 200 bzw. des Planetenradsatzes RS1 erstreckt. Die zylinderförmige Stützscheibe 217 und der zylindrische Abschnitts 521 des Lamellenträgers ZYLBE bilden den Kolben- bzw. Druckraum 211 der Servoeinrichtung 210, innerhalb dessen der Kolben 214 der Servoeinrichtung 210 axial verschiebbar angeordnet ist. Der Kolben 214 ist dabei gegenüber dem zylindrischen Abschnitt der Stützscheibe 217 sowie gegenüber dem zylindrischen Abschnitt 521 des Lamellenträgers ZYLBE axial verschiebbar (druckmitteldicht) abgedichtet. Die mit 218 bezeichnete Druckmittelzuführung zum Druckraum 211 verläuft abschnittsweise als Radialbohrung durch den scheibenförmigen Abschnitt 522 und die Nabe 523 des Lamellenträgers ZYLBE.

Der Kolben 214 der Servoeinrichtung 210 ist - ähnlich wie die Stützscheibe 217 - als in Richtung zum Lamellenpaket 200 hin geöffneter Zylinder ausgebildet, wobei der Zylinderboden die Trennfläche zum Druckraum 211 bildet. Der zylindrische Mantel des Kolbens 214 übergreift den scheibenförmigen Abschnitt 222 des Lamellenträgers ZYLBE und erstreckt sich in axialer Richtung bis zu dem Lamellenpaket 200 der Kupplung B. Zwischen dem Zylinderboden des Kolbens 214 und dem scheibenförmigen Abschnitt 222 des Lamellenträgers ZYLBE ist das Rückstellelement 213 der Servoeinrichtung 210 eingespannt, hier beispielhaft als ringförmiges Paket mit parallelgeschalteten Schraubenfedern.

Zur Bildung des Druckausgleichsraumes 212 der Servoeinrichtung 210 ist der zylindrische Mantel des Kolbens 214 gegenüber dem scheibenförmigen Abschnitt 222 des Lamellenträgers ZYLBE axial verschiebbar schmiermitteldicht abgedichtet. Entsprechend wird der Druckausgleichsraum 212. durch den Kolben 214, den scheibenförmigen Abschnitt 222 des Lamellenträgers ZYLBE und den zylindrischen Abschnitt 521 des Lamellenträgers ZYLBE gebildet. Mit Schmiermittel drucklos befüllt wird dieser Druckausgleichsraumes 212 von dem Druckausgleichsraum 512 der Kupplung E aus. Hierzu sind sowohl in dem zylindrischen Abschnitt 521 des Lamellenträgers ZYLBE als auch in dem Kolben 514 der Servoeinrichtung 510 der Kupplung E Radialbohrungen vorgesehen, die in dem Druckausgleichsraum 212 bzw. im Druckausgleichsraum 512 münden. Die entsprechende Schmiermittelzuführung ist mit 219 bezeichnet.

Wie aus Fig. 15 ersichtlich, ist die Servoeinrichtung 210 der Kupplung B räumlich gesehen also radial über der Servoeinrichtung 510 der Kupplung E angeordnet, wobei jeweils die beiden Druckräume 211 und 511, jeweils die beiden Druckausgleichsräume 212 und 512 und jeweils auch die Rückstelleinrichtungen 313 und 513 räumlich gesehen in etwa radial übereinander angeordnet sind. Der Abschnitt der Mantelfläche des für beide Kupplungen B, E gemeinsamen Lamellenträgers ZYLBE, welcher die beiden Druckräume 211, 511 bzw. die beiden Druckausgleichsräume 212, 512 voneinander trennt, ist also im Prinzip der zylindrische Abschnitt 521 des Lamellenträgers ZYLBE.

Wie aus Fig. 15 weiterhin ersichtlich, ist die räumliche Anordnung der beiden Bremsen C und D (mit ihren Lamellenpaketen 300 bzw. 400 und ihren Servoeinrichtungen 310 bzw. 410) relativ zu den Planetenradsätzen und der Baugruppe der Kupplungen B und E identisch zu der in Fig. 13 dargestellten vierten erfindungsgemäßen Bauteilanordnung.

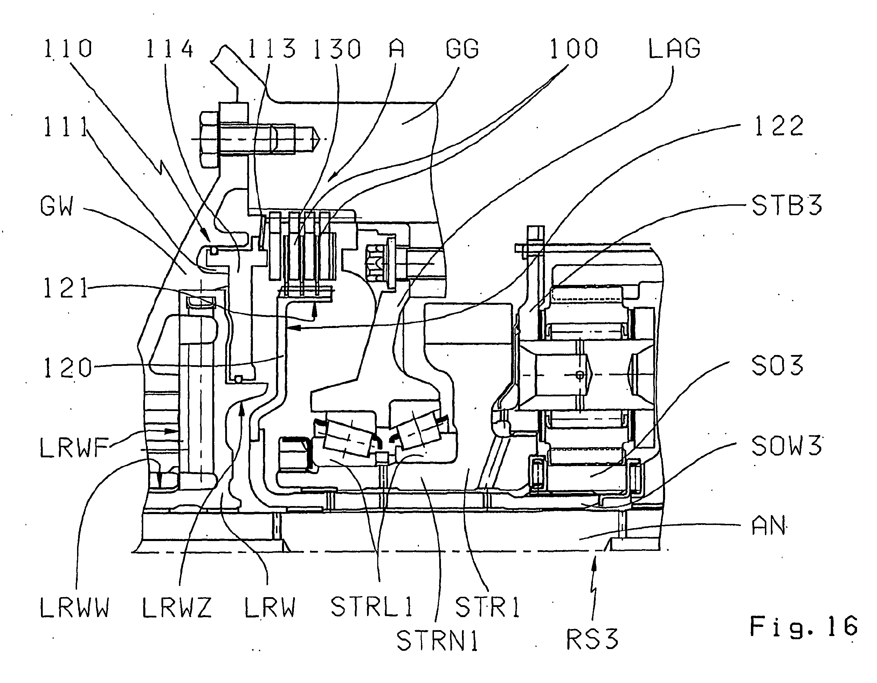

Anhand der Figuren 16 bis 18 werden im folgenden verschiedene Detailkonstruktionen näher erläutert, welche die Anordnung und Ausgestaltung der Bremse A in Verbindung mit dem Stirntrieb bzw. Kettentrieb betreffen und prinzipiell mit den zuvor beschrieben verschiedenen erfindungsgemäßen Bauteilanordnungen und Detailkonstruktionen sinngemäß kombinierbar sind. Bekanntlich stellt der genannte Stirn- bzw. Kettentrieb die kinematische Verbindung zwischen dem Ausgang des (aus den drei Einzel-Planetenradsätzen bestehenden) gekoppelten Planetengetriebes und der Abtriebswelle des Automatgetriebes her.

Fig. 16 zeigt nun einen sektionalen Getriebeschnitt mit einer fünften beispielhaften Detailkonstruktion. Das erste Stirnrad STR1 des Stirntriebs ist hierbei räumlich gesehen axial zwischen dem dritten Planetenradsatz RS3 und der Bremse A angeordnet, zum einen axial unmittelbar angrenzend an das Sonnenrad SO3 und das (auf der dem mittleren Planetenradsatz RS2 abgewandten Seite des dritten Planetenradsatzes RS3 angeordneten) Stegblech STB3 des dritten Planetenradsatzes RS3, zum anderen axial unmittelbar angrenzend an das als Innenlamellenträger ausgebildete Eingangselement 120 der Bremse A. Im dargestellten Beispiel ist zwischen Stirnrad STR1 und Stegblechs STB3 eine formschlüssige Verbindung vorgesehen, wobei das entsprechende Mitnahmeprofil räumlich gesehen am Innendurchmesser des Stegblechs STB3 angeordnet ist. Zur Abstützung der Axialkräfte einer Schrägverzahnung des ersten Stirnrades STR1 in Richtung der Planetenradsätze ist zwischen Stirnrad STR1 und Sonnenrad SO3 ein Axiallager angeordnet. Die Lagerung STRL1 des ersten Stirnrades STR1 ist als steife Kegelrollenlagerung mit zwei unmittelbar aneinandergrenzenden Kegelrollenlagern ausgeführt. Die Lagerinnenringe dieser beiden Kegelrollenlager sind auf einer Stirnradnabe STRN1 des ersten Stirnrades STR1, die sich axial in zum dritten Planetenradsatz RS3 entgegengesetzter Richtung erstreckt, axial über eine Wellenmutter eingespannt. Die Lageraußenringe dieser beiden Kegelrollenlager sind in jeweils eine Lagerbohrung einer Lagerplatte LAG eingesetzt und stützen sich jeweils an einer axial zwischen den beiden Kegelrollenlagern radial nach innen erstreckenden Anlageschulter der Lagerplatte LAG ab. Die Stirnradnabe STRN1 des Stirnrades STR1 durchgreift also die auf der radsatzabgewandten Seite des ersten Stirnrades STR1 angeordnete Lagerplatte LAG zentrisch. Selbstverständlich kann anstelle der beiden einzelnen Kegelrollenlager der Stirnradlagerung STRL1 beispielsweise auch ein Kegelrollen-Verbundlager vorgesehen sein oder auch eine Rillenkugellagerung.

Die Lagerplatte LAG selber ist direkt in eine entsprechende Lagerplattenbohrung des Getriebegehäuses GG eingesetzt, stützt sich axial an einer im Bereich dieser Lagerplattenbohrung angeordneten Anlageschulter des Getriebegehäuses GG ab und ist mit dem Getriebegehäuses GG verschraubt. Als axiale Montagerichtung ist hier beispielhaft vorgesehen, daß die (mit Stirnradlagerung STRL1 und erstem Stirnrad STR1 vormontierte) Lagerplatte LAG axial in Richtung des Planetenradsatzes RS3 in das Getriebegehäuse GG eingesetzt wird.

Die Bremse A ist auf der dem Planetenradsatz RS3 abgewandten Seite der.Lagerplatte LAG angeordnet. Das Lamellenpaket 100 und auch der Innenlamellenträger (120) der Bremse A grenzen dabei unmittelbar axial an die Lagerplatte LAG an. Der Außendurchmesser des Lamellenpaketes 100 mit Außen- und Belaglamellen der Bremse A ist hier beispielhaft etwas größer als der Außendurchmesser der Lagerplatte LAG. Der Außenlamellenträger (130) der Bremse A ist in das Getriebegehäuse GG integriert. Entsprechend weist das Getriebegehäuse GG auf der planetenradsatzabgewandten Seite der Lagerplattenbohrung des Getriebegehäuses GG, in dem Bereich unmittelbar neben dieser Lagerplattenbohrung, auf einem etwas größeren Durchmesser als diese Lagerplattenbohrung, ein geeignetes Innenprofil auf zur Aufnahme des Außenprofils der Außenlamellen des Lamellenpaketes 100 der Bremse A. Auf der der Lagerplatte LAG gegenüberliegenden Seite des Lamellenpaketes 100 der Bremse A ist die Gehäusewand GW angeordnet, in die auch die Servoeinrichtung 110. der Bremse A teilweise integriert ist. Die Servoeinrichtung 110 betätigt das Lamellenpaket 100 der Bremse A beim Schließen axial in Richtung der Lagerplatte LAG, wobei sich das Lamellenpaket 100 axial an der Lagerplatte LAG abstützt. Die Bremse A ist also unmittelbar zwischen Gehäusewand GW und Lagerplatte LAG angeordnet.

In einer alternativen Ausgestaltung zur Befestigung der Lagerplatte, an der das erste Stirnrad der Stirnradstufe gelagert ist, am Getriebegehäuse kann auch vorgesehen sein, daß der Außendurchmesser der Lagerplatte größer ist als der Außendurchmesser des Lamellenpaketes der Bremse A, wobei diese Lagerplatte nunmehr abschnittsweise an der Gehäuseaußenwand GW axial anliegt, in einem Durchmesserbereich oberhalb des Lamellenpaketes der Bremse A. In diesem Fall ist die Lagerplatte direkt vom Innenraum des Getriebegehäuses her mit der Gehäuseaußenwand verschraubt, wobei die entsprechenden kraftführenden Gewinde der Verschraubung räumlich gesehen radial über dem Lamellenpaket der Bremse A angeordnet sind. Die Gehäuseaußenwand wiederum ist in bekannter Weise mit dem Getriebegehäuse verschraubt. In vorteilhafter Weise führt der Kraftfluß der Bremse A bei deren Betätigung also nicht über eine abzudichtende Gehäusetrennfuge.

In einer alternativen konstruktiven Ausgestaltung der Lagerplatte kann auch vorgesehen sein, daß die zuvor beschriebene Nabe des ersten Stirnrades der Stirnradstufe entfällt, wobei dann die Kegelrollenlagerung bzw. Rillenkugellagerung dieses ersten Stirnrades räumlich gesehen radial unterhalb der Verzahnung des ersten Stirnrades angeordnet ist. Der Lageraußenring der Kegelrollenlagerung bzw. Rillenkugellagerung ist dabei in eine entsprechend Lagerbohrung des ersten Stirnrades eingesetzt, könnte aber auch ganz entfallen, wenn die Laufbahnen der Kegelrollen bzw. Kugeln direkt in dem ersten Stirnrad integriert sind. Der Lagerinnenring der Kegelrollenlagerung bzw. Rillenkugellagerung kann auf einem nabenförmigen Abschnitt der Lagerplatte, der sich axial in Richtung des dritten Planetenradsatzes RS3 erstreckt und dabei das erste Stirnrad zentrisch durchgreift, festgesetzt sein.

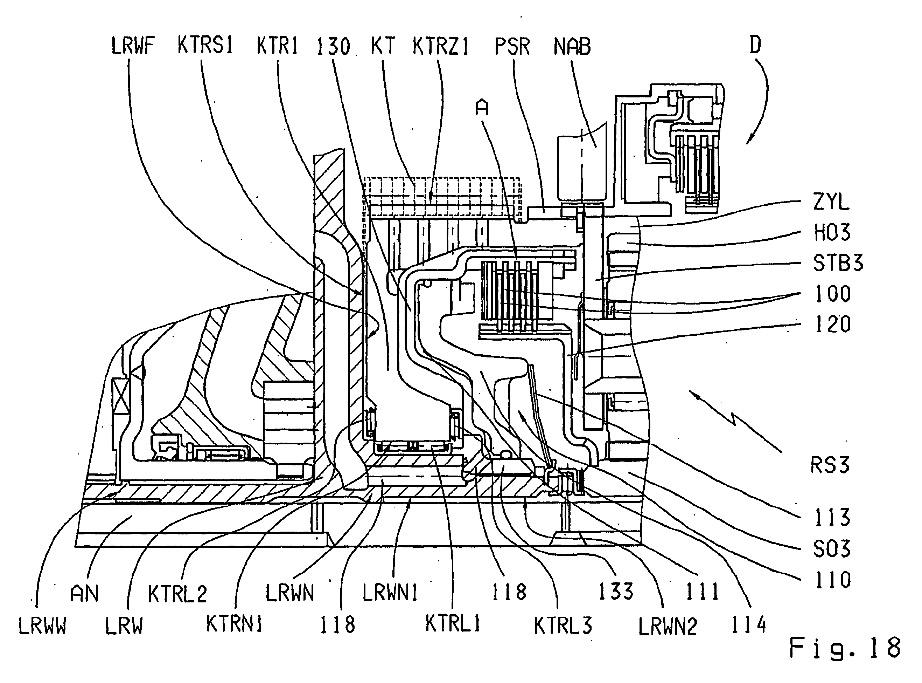

Als konstruktive Detaillösung ist in Fig. 16 - wie bereits angedeutet - die Servoeinrichtung 110 der Bremse A nur teilweise in der Gehäusewand GW integriert. In dem dargestellten Beispiel ist diese Gehäusewand GW zum einen die antriebsmotornahe Außenwand des Automatgetriebes, zum anderen aber auch gleichzeitig ein Pumpengehäuse einer Ölpumpe des Automatgetriebes zur Druckmittelversorgung der Schaltelemente und zur Schmiermittelversorgung der diversen Schaltelemente, Verzahnungen und Lagerungen. Entsprechend sind in der Gehäusewand verschiedene Kanäle zur Druck- und Schmiermittelführung integriert. Auch ist in die Gehäusewand GW eine Leitradwelle LRW verdrehfest eingesetzt, beispielsweise verschraubt. Zum einen bildet diese Leitradwelle LRW eine Art gehäusefeste Nabe zur Drehmomentabstützung eines im Kraftfluß zwischen Antriebsmotor und Antriebswelle zwischengeschalteten Anfahrelementes, beispielsweise eines Trilok-Wandlers. Kinematisch ist das Anfahrelement dabei außerhalb des Getriebeinnenraums an einem Wellen-Abschnitt LRWW der Leitradwelle LRW angebunden. Zum anderen sind auch in einem Flansch-Abschnitt LRWF dieser Leitradwelle LRW verschiedene Kanäle zur Druck- und Schmiermittelführung integriert. Weiterhin weist diese Leitradwelle LRW einen axial vergleichsweise kurzen zylindrischer Abschnitt LRWZ auf, der sich axial in Richtung Getriebeinnenraum erstreckt. Der Außendurchmesser dieses zylindrischer Abschnitt LRWZ der Leitradwelle LRW bildet den Innendurchmesser des Kolben- bzw. Druckraumes 111 der Servoeinrichtung 110 der Bremse A und entsprechend eine axiale Innen-Lauffläche des Kolbens 114 der Servoeinrichtung 110 der Bremse A, der radial oberhalb des zylindrischer Abschnitt LRWZ axial verschiebbar angeordnet ist. Der Außendurchmesser des Kolben- bzw. Druckraumes 111 der Servoeinrichtung 110 und die entsprechende axiale Außen-Lauffläche des Kolbens 114 der Servoeinrichtung 110 wird gebildet von einem axialen Einstich der Gehäusewand GW (bzw. des Pumpengehäuses), auf einem Durchmesser größer dem Außendurchmesser des Flansch-Abschnitts LRWF der Leitradwelle LRW. Somit wird der Druckraum 111 der Servoeinrichtung 110 durch den Kolben 114, die Gehäusewand GW, den Flansch-Abschnitt LRWF der Leitradwelle LRW und den zylindrischen Leitradwellen-Abschnitt LRWZ gebildet. Die (nicht rotierende) Druckmittelzuführung zu diesem Druckraum 111 ist in Fig. 18 zur Vereinfachung nicht dargestellt. Das Rückstellelement 113 der Servoeinrichtung 110 zur Kolbenrückstellung ist hier als Tellerfeder ausgeführt, die sich einerseits an dem Kolben 114 im Bereich des Kolbenaußendurchmessers axial abstützt und andererseits an dem Getriebegehäuse GG im Bereich des Lamellenmitnahmeprofils des Getriebegehäuses GG für die Außenlamellen der Bremse A.

Das Eingangselement 120 der Bremse A ist ein Innenlamellenträger und beispielhaft als zylinderförmige Blechkonstruktion ausgeführt. Dieser axial kurz bauende Innenlamellenträger (120) weist einen zylindrischen Abschnitt 121 auf, an dessen Außendurchmesser ein Mitnahmeprofil vorgesehen ist zur Aufnahme der Belaglamellen des Lamellenpaketes 100 der Bremse A. Auf der der Gehäusewand GW zugewanden Seite dieses zylindrischen Abschnitts 121 schließt sich ein zumindest teilweise scheibenförmiger; Abschnitt 122 des Innenlamellenträgers (120) der Bremse A an den zylindrischen Abschnitt 121 an und erstreckt sich parallel zum flanschförmigen Leitradwellen-Abschnitt LRWF radial nach innen bis zu einem nabenförmigen Abschnitt der Sonnenwelle SOW3, mit der dieser scheibenförmige Abschnitt 122 des Innenlamellenträgers (120) der Bremse A verschweißt ist. Die Sonnenwelle SOW3 wiederum ist mit dem Sonnenrad SO3 des dritten Planetenradsatzes RS3 über ein geeignetes Mitnahmeprofil formschlüssig verbunden, sodaß die Sonnenwelle SOW3 auch als Nabe des Innenlamellenträgers (120) der Bremse A interpretiert werden kann. Die Antriebswelle AN wiederum verläuft radial innerhalb der Sonnenwelle SOW3 und durchdringt die in die Gehäusewand GW eingesetzte Leitradwelle LRW zentrisch.

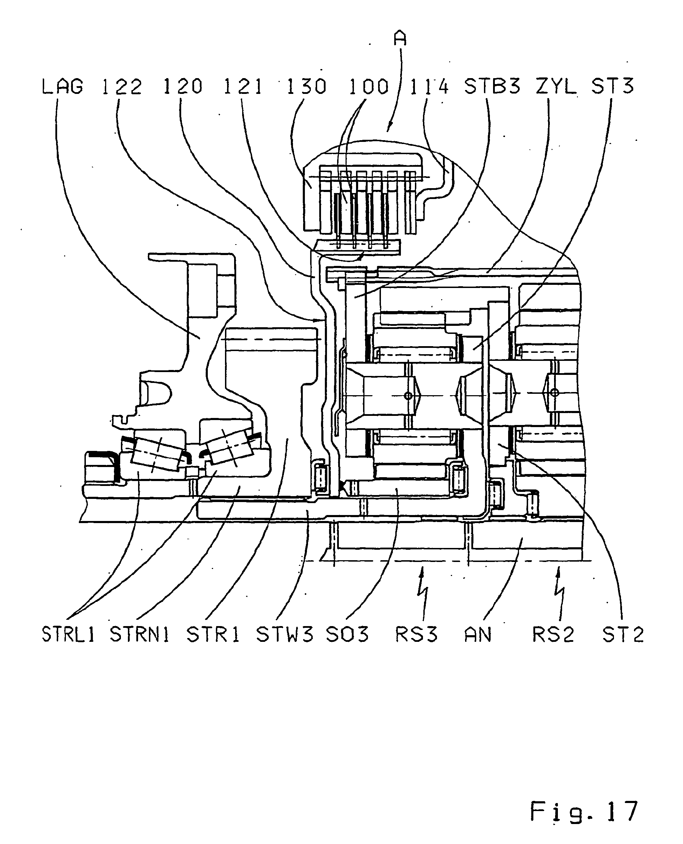

Fig. 17 zeigt nun einen sektionalen Getriebeschnitt mit einer siebten beispielhaften Detailkonstruktion und betrifft-eine gegenüber Fig. 18 veränderte räumliche Anordnung der Bremse A relativ zum dritten Planetenradsatz RS3 und zum ersten Stirnrad STR1 des Stirntriebs. Die Lagerung des Stirnrades STR1 am Getriebegehäuse ist aus Fig. 18 übernommen. Entsprechend weist das Stirnrades STR1 eine Stirnradnabe STRN1 auf, die sich axial in die zum Planetenradsatz RS3 entgegengesetzter Richtung erstreckt. Auf dem Außendurchmesser der Stirnradnabe STRN1 sind die Lagerinnenringe der zwei unmittelbar nebeneinander angeordneten Kegelrollenlager der Stirnradlagerung STRL1 aufgeschoben und axial über eine Wellenmutter auf der Stirnradnabe STRN1 fixiert. Die Lageraußenringe der beiden Kegelrollenlager sind in der getriebegehäusefesten Lagerplatte LAG gelagert. Zur kinematischen Anbindung des Stirnrades STR1 an den Steg ST3 des dritten Planetenradsatzes RS3 ist am Innendurchmesser der Stirnradnabe STRN1, in axialer Richtung gesehen radial unterhalb der Verzahnung des Stirnrades STR1, ein Mitnahme-Innenprofil vorgesehen, in das ein korrespondierendes Mitnahme-Außenprofil einer Stegwelle STW3 eingreift. Diese Stegwelle STW3 erstreckt sich, ausgehend von dem genannten Mitnahmeprofil, axial in Richtung des zweiten (mittleren) Planetenradsatzes RS2 bis zu dessem Steg ST2 und durchgreift dabei das Sonnenrad SO3 des dritten Planetenradsatzes RS3 zentrisch. Auf der dem zweiten Planetenradsatz RS2 zugewandten Seite des dritten Planetenradsatzes RS3 ist die Stegwelle STW3 mit dem Steg ST3 des dritten Planetenradsatzes RS3 verbunden. In dem in Fig. 17 dargestellten Beispiel sind Steg ST3 und Stegwelle STW3 einstückig ausgeführt.

Die Bremse A ist räumlich gesehen radial über dem dritten Planetenradsatz RS3 angeordnet. Das Eingangselement 120 der Bremse A ist als zylinderförmiger Innenlamellenträger ausgebildet, der den dritten Planetenradsatz RS3 abschnittsweise übergreift. Der scheibenförmige Abschnitt 122 dieses Innenlamellenträgers (120) erstreckt sich parallel zum Stegblech STB3 des dritten Planetenradsatzes RS3 und trennt den dritten Planetenradsatz RS3 räumlich von dem Stirnrad STR1. An seinem Innendurchmesser ist der scheibenförmige Abschnitt 122 mit dem Sonnenrad SO3 des dritten Planetenradsatzes RS3 verbunden, hier beispielhaft verschweißt. In diesem Bereich ist auch ein Axiallager angeordnet, welches den scheibenförmigen Abschnitt 122 des Innenlamellenträgers (120) der Bremse A von dem Stirnrad STR1 trennt. Der scheibenförmige Abschnitt 122 des Innenlamellenträgers (120) erstreckt sich radial nach außen bis auf einen Durchmesser, der etwas größer ist als der Außendurchmesser des Stegblechs STB3 des dritten Planetenradsatzes RS3 bzw. etwas größer ist als der Außendurchmesser des Zylinders ZYL, über den das Stegblechs STB3 mit einem (hier nicht dargestellten) anderen Planetenradsatzelement verbunden ist. Am Außendurchmesser des scheibenförmigen Abschnitts 122 schließt sich der zylindrische Abschnitt 121 des Innenlamellenträgers (120) der Bremse A an und erstreckt sich axial in Richtung des zweiten (mittleren) Planetenradsatzes RS2. Am Außendurchmesser des zylindrischen Abschnitts 121 ist ein Mitnahmeprofil vorgesehen zur Aufnahme der Belaglamellen des Lamellenpaketes 100 der Bremse A. In Fig. 19 nur angedeutet sind das als Außenlamellenträger ausgebildete Ausgangselement 130 der Bremse A und die Servoeinrichtung (von der hier nur ein Teil des Kolbens 114 dargestellt ist) zur Betätigung des Lamellenpaketes 100.

Fig. 18 schließlich zeigt nun einen sektionalen Getriebeschnitt mit einer siebten beispielhaften Detailkonstruktion und betrifft wiederum eine veränderte räumliche Anordnung der Bremse A relativ zum dritten Planetenradsatz RS3, diesmal in Verbindung mit einem Kettentrieb. Die wesentlichen Elemente dieser Detailkonstruktion gemäß Fig. 18 sind Gegenstand der nicht vorveröffentlichten Deutschen Patentanmeldung DE 10236607.1 der Anmelderin, deren Offenbarung auch zum Inhalt der vorliegenden Erfindung zählen soll.

Entsprechend der siebten Detailkonstruktion gemäß Fig. 18 ist als Wirkverbindung zwischen dem Ausgangselement des aus den drei Einzel-Planetenradsätzen gekoppelten Planetengetriebes mit der Abtriebswelle des Automatgetriebes ein Kettentrieb vorgesehen. Die in Fig. 18 angedeutete Kette dieses Kettentriebs ist mit KT bezeichnet, das planetengetriebeseitige (erste) Kettenrad dieses Kettentriebs mit KTR1. Dieses angetriebene (erste) Kettenrad KTR1 und die Bremse A grenzen beide axial an den dritten Planetenradsatz RS3 an, wobei die Bremse A radial unterhalb einer Kettenrad-Verzahnung des Kettenrades KTR1 angeordnet ist.

Dieses angetriebene (erste) Kettenrad KTR1 ist geometrisch als ein in Richtung des (dritten) Planetenradsatz RS3 hin geöffneter Zylinder ausgebildet, mit einem Nabenabschnitt KTRN1, einem scheibenförmigen Kettenradabschnitt KTRS1 und einem zylindrischen Kettenradabschnitt KTRZ1. Dieser zylindrische Kettenradabschnitt KTRZ1 erstreckt sich in axialer Richtung auf einem Durchmesser, der größer ist als der Außendurchmesser der Bremse A, insbesondere größer als der Außendurchmesser des als Außenlamellenträger ausgebildeten Ausgangselementes 130 der Bremse A. An seinem Außendurchmesser weist zylindrische Kettenradabschnitt KTRZ1 zum einen eine geeignete Ketten-Verzahnung auf, in welche die Kette KT zur Drehzahl- und Drehmomentübertragung eingreift, zum anderen hier beispielhaft zusätzlich eine Parksperren-Verzahnung, in die eine (hier zur Vereinfachung nicht dargestellte) Parksperrenklinke zum Verblocken der Abtriebswelle am Getriebegehäuse des Automatgetriebes eingreifen kann. Der zylindrische Kettenradabschnitt KTRZ1 des Kettenrades KTR1 bildet also gleichzeitig ein Parksperrenrad PSR. In dem in Fig. 18 dargestellten Beispiel ist die (dem Parksperrenrad PSR zuzuordnende) Parksperren-Verzahnung näher am dritten Planetenradsatz RS3 angeordnet als die Ketten-Verzahnung des Kettenrades KTR1. An der dem Planetenradsatz RS3 abgewandten Seite des zylindrischen Kettenradabschnitts KTRZ1 schließt sich der scheibenförmigen Kettenradabschnitt KTRS1 an den zylindrischen Kettenradabschnitt KTRZ1 an und erstreckt sich radial nach innen bis zu dem Nabenabschnitt KTRN1 des Kettenrades KTR1. Wie später noch im Detail erläutert wird, ist dieser Nabenabschnitt KTRN1 wiederum auf einer Nabe LRWN einer getriebegehäusefesten Leitradwelle LRW gelagert. An seiner dem Planetenradsatz RS3 zugewandten Seite ist der zylindrische Kettenradabschnitt KTRZ1 mit dem Stegblech STB3 des dritten Planetenradsatzes RS3 vorzugsweise formschlüssig verbunden. Im dargestellten Beispiel greifen entsprechend ausgebildete Finger axialer Erstreckung des zylindrischen Kettenradabschnittes KTRZ1 in korrespondierende axiale Ausnehmungen des Stegblechs STB3 ein, die in Umfangsrichtung verteilt etwa auf dem Durchmesser des Hohlrades HO3 des dritten Planetenradsatzes RS3 angeordnet sind.

Der zylindrische Kettenradabschnitt KTRZ1 des angetriebenen Kettenrades KTR1 bildet also einen Zylinderraum, innerhalb dessen die Bremse A angeordnet ist. Wie bereits erwähnt, grenzt das Lamellenpaket 100 mit Außen- und Belaglamellen unmittelbar axial an das Stegblech STB3 des Planetenradsatzes RS3 an. Das als Innenlamellenträger ausgebildete Eingangselement 120 der Bremse A weist geometrisch die Form eines in Richtung des Planetenradsatzes RS3 hin geschlossenen Topfes auf, mit einer zylindrischen Mantelfläche, an derem Außendurchmesser ein Mitnahmeprofil vorgesehen ist zur Aufnahme der Belaglamellen des Lamellenpaketes 100, und mit einem Boden, der sich parallel zum Stegblech STB3 radial nach innen erstreckt und an seinem Innendurchmesser mit dem Sonnrad SO3 des dritten Planetenradsatzes RS3 verbunden, hier beispielhaft verschweißt ist. Entsprechend ist das als Außenlamellenträger ausgebildete Ausgangselement 130 der Bremse A geometrisch als in Richtung des Planetenradsatzes RS3 hin geöffneter Topf ausgebildet, innerhalb dessen die Servoeinrichtung 110 und das Lamellenpaket 100 der Bremse A angeordnet sind. In dem dargestellten Beispiel weist dieser Außenlamellenträger (130) eine Nabe 133 auf, die über ein geeignetes Mitnahmeprofil formschlüssig mit der getriebegehäusefesten Leitradwelle LRW verbunden ist. Am Innendurchmesser der zylindrischen Mantelfläche des Außenlamellenträgers (130) der Bremse A ist ein Mitnahmeprofil vorgesehen zur Aufnahme der Außenlamellen des Lamellenpaketes 100. Der Kolben 114 der Servoeinrichtung 110 grenzt an die scheiben- und nabenförmige Mantelfläche dieses Außenlamellenträgers (130) an und bildet zusammen mit diesen Mantelflächenabschnitten den Druckraum 111 der Servoeinrichtung 110. Dabei ist der Kolben 114 abschnittsweise axial zwischen der scheibenförmigen Mantelfläche des Außenlamellenträgers (130) und dem Lamellenpaket 100 angeordnet und abschnittsweise in axialer Richtung gesehen radial unterhalb dem Lamellenpaket 100. Bei einer Druckbeaufschlagung des Druckraumes 111 betätigt der Kolben 114 das Lamellenpaket 100 also axial in Richtung des benachbarten Planetenradsatzes RS3, gegen die Kraft des Rückstellelementes 113, das hier beispielhaft aus zwei in Reihe geschalteten Tellerfedern besteht, die sich an der Nabe 133 abstützen.

Ähnlich wie in Fig. 16, bildet die getriebegehäusefeste Leitradwelle LRW zum einen eine Art gehäusefeste Nabe zur Drehmomentabstützung eines im Kraftfluß zwischen Antriebsmotor und Antriebswelle zwischengeschalteten Anfahrelementes, beispielsweise eines Trilok-Wandlers. Kinematisch ist das Anfahrelement dabei außerhalb des Getriebeinnenraums an einem Wellen-Abschnitt LRWW der Leitradwelle LRW angebunden. Zum anderen weist die Leitradwelle LRW auch einem Flansch-Abschnitt LRWF radialer Erstreckung auf, der den Getriebeinnenraum auf der dem Planetenradsatz RS3 abgewandten Seite des Kettenrades KTR1 abschließt. Weiterhin weist diese Leitradwelle LRW einen zylindrischen Naben-Abschnitt LRWN auf, der sich axial in Richtung Getriebeinnenraum erstreckt, der geometrisch in zwei Abschnitte LRWN1 und LRWN2 unterteilt ist, wobei der flanschnahe Abschnitt mit LRWN1 bezeichnet ist und der planetenradsatznahe Abschnitt mit LRW2. Räumlich gesehen radial über dem flanschnahen Abschnitt LRWN1 ist das Kettenrad KTR1 gelagert. Das entsprechende Lager ist beispielhaft als bauraumsparendes Radial-Nadellager ausgebildet und mit KTRL1 bezeichnet. Zur axialen Abstützung des Kettenrades KTR1 sind zwei Axial-Nadellager KTRL2 und KTRL3 vorgesehen, wobei das Axial-Nadellager KTRL2 axial zwischen dem Flansch-Abschnitt LRWF der getriebegehäusefesten Leitradwelle LRW und dem Kettenrad KTR1 angeordnet ist, und das Axial-Nadellager KTRL3 axial zwischen dem Kettenrad KTR1 und der nabennahen Mantelfläche des Außenlamellenträgers (130) der Bremse A.

Weiterhin eingezeichnet ist in Fig. 18 eine Druckmittelzuführung 118 zum Druckraum 111 der Servoeinrichtung 110 der Bremse A, die abschnittsweise innerhalb der Leitradwelle LRW und der Nabe 133 des Außenlamellenträgers (130) der Bremse A verläuft.

Dem Fachmann ist klar, daß der Flansch-Abschnitt LRWF und der Nabenabschnitt LRWN der Leitradwelle LRW auch als Teil des Getriebegehäuses bzw. einer Getriebgehäusewand ausgeführt sein kann.

Als weiteres Detail ist in Fig. 18 ein Abtriebsdrehzahlsensor NAB üblicher Bauart eingezeichnet, der zur Bestimmung einer Drehzahl und/oder Drehrichtung der Abtriebswelle des Automatgetriebes das Zahnprofil des Parksperrenrades PSR abtastet.

Wie bereits erwähnt, sind die zuvor beschriebene Getriebeschemata hinsichtlich der achsparallelen Anordnung von Antriebs- und Abtriebswelle des Automatgetriebes relativ zueinander als beispielhaft anzusehen. Der Fachmann wird die wesentlichen Merkmale der vorgeschlagenen einzelnen erfindungsgemäßen Bauteilanordnungen und Detailkonstruktionen bedarfsweise sinngemäß auch bei anderen räumliche Anordnungen von Antriebs- und Abtriebswelle relativ zueinander anwenden. So kann als Variante der nicht Wellenanordnung auch vorgesehen sein, daß Antriebs- und Abtriebswelle des Automatgetriebes winklig zueinander verlaufen, beispielsweise mit einem relativen Winkel zueinander von 90 Grad für einen Eahrzeug-Antriebsstrang mit längs zur Fahrtrichtung liegendem Antriebsmotor ("Front-Längs-Antrieb" oder "Heck-Längs-Antrieb"), oder beispielsweise auch mit einem relativen Winkel zueinander von ungleich 90 Grad zur Anpassung des Antriebsstranges an beengte Einbauräume im Kraftfahrzeug. Für derartige Anwendungen kann in dem Automatgetriebe anstelle des Stirntriebs bzw. Kettentriebs ein Kegeltrieb (bedarfsweise mit Hypoidverzahnung) oder auch ein Stirntrieb mit Beveloid-Verzahnung vorgesehen sein. Eine weite Verbreitung haben auch Fahrzeuge mit koaxial zueinander verlaufender Antriebs- und Abtriebswelle des Automatgetriebes ("Standard-Antrieb"). Wesentliche Merkmale der vorgeschlagenen einzelnen erfindungsgemäßen Bauteilanordnungen und Detailkonstruktionen sind sinngemäß auch auf derartige Automatgetriebe mit koaxialer Antriebs- und Abtriebswelle einfach übertragbar. So wird in diesem Fall zweckmäßigerweise die (zur Antriebswelle koaxial verlaufende) Abtriebswelle auf der dem zweiten Planetenradsatz RS2 abgewandten Seite des dritten Planetenradsatzes RS3 angeordnet sein, an der Seite des Automatgetriebes, an der auch die Bremse A angeordnet ist. Hierbei wird die Abtriebswelle sowohl die Bremse A als auch den dritten Planetenradsatz RS3 zentrisch durchgreifen.

Wie bereits erwähnt, sind die den Figuren 3 bis 18 zugrundeliegenden Getriebeschemata für die kinematische Koppelung der Radsatzelemente der drei Einzel-Planetenradsätze untereinander und zu den fünf Schaltelementen sowie zu An- und Abtriebswelle des Automatgetriebes als beispielhaft anzusehen. Aus dem Stand der Technik der DE 199 12 480 A1 ist eine modifizierte kinematische Koppelung einzelner Radsatzelemente bekannt, bei der im Unterschied zu der den Figuren 3 bis 20 zugrundeliegende bisherigen kinematischem Radsatzkoppelung das Hohlrad HO1 des ersten Planetenradsatzes RS1 und der Steg ST2 des zweiten Planetenradsatzes RS2 und die Abtriebswelle AB ständig miteinander verbunden sind, sowie der Steg ST3 des dritten Planetenradsatzes RS3 ständig mit dem Hohlrad HO2 des zweiten Planetenradsatzes RS2 und der Steg ST1 des ersten Planetenradsatzes RS1 ständig mit dem Hohlrad HO3 des dritten Planetenradsatzes RS3 sind, bei ansonsten unveränderter kinematischen Koppelung der drei Einzel-Planetenradsätze RS1, RS2, RS3 an die fünf Schaltelemente A bis E und an die Antriebswelle. Der Fachmann wird die erfindungswesentlichen Merkmale der zuvor in Fig. 3 bis Fig. 20 vorgeschlagenen Anordnungen und Konstruktionsdetails für die einzelnen Schaltelemente und den abtriebsseitigen Stirn- bzw. Kettentrieb bei Bedarf sinngemäß auch auf diese modifizierte Radsatzkoppelung übertragen.

### Bezugszeichen

- A: erstes Schaltelement, Bremse
- B: zweites Schaltelement, Kupplung
- C: drittes Schaltelement, Bremse
- D: viertes Schaltelement, Bremse
- E: fünftes Schaltelement, Kupplung
- FD: Freilauf des vierten Schaltelementes
- ZYLBE: Lamellenträger des zweiten und fünften Schaltelementes
- ZYLCD: Außenlamellenträger des dritten und vierten Schaltelementes

- AN: Antriebswelle
- AB: Abtriebswelle

- GG: Getriebegehäuse
- GW: Gehäusewand
- GN: getriebegehäusefeste Nabe
- GZ: Gehäusezwischenwand
- LAG: Lagerplatte

- LRW: Leitradwelle
- LRWF: Flansch-Abschnitt der Leitradwelle
- LRWW: Wellen-Abschnitt der Leitradwelle
- LRWZ: zylindrischer Abschnitt der Leitradwelle
- LRWN: Naben-Abschnitt der Leitradwelle
- LRWN1: flanschnaher Leitradwellen-Nabenabschnitt
- LRWN2: planetenradsatznaher Leitradwellen-Nabenabschnitt

- NAN: Antriebsdrehzahlsensor
- NAB: Abtriebsdrehzahlsensor
- PSR: Parksperrenrad
- ZYL: Zylinder

- STST: Stirnradstufe, Stirntrieb
- STR1: erstes Stirnrad der Stirnradstufe
- STR2: zweites Stirnrad der Stirnradstufe
- STR3: drittes Stirnrad der Stirnradstufe
- STRL1: Lagerung des ersten Stirnrades der Stirnradstufe
- STRN1: Nabe des ersten Stirnrades der Stirnradstufe
- DIFF: Differential

- KT: Kette
- KTR1: (angetriebenes, erstes) Kettenrad
- KTRL1: Radiallager des (ersten) Kettenrades
- KTRL2: gehäuseseitiges Axiallager des (ersten) Kettenrades
- KTRL3: schaltelementseitiges Axiallager des (ersten) Kettenrades
- KTRN1: Nabenabschnitt des (ersten) Kettenrades
- KTRS1: scheibenförmiger Abschnitt des (ersten) Kettenrades
- KTRZ1: zylinderförmiger Abschnitt des (ersten) Kettenrades

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenrad des ersten Planetenradsatzes
- SOW1: Sonnenwelle des ersten Planetenradsatzes
- STB11: erstes Stegblech des ersten Planetenradsatzes
- STB12: zweites Stegblech des ersten Planetenradsatzes
- STW1: Stegwelle des ersten Planetenradsatzes

- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenrad des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenrad des dritten Planetenradsatzes
- SOW3: Sonnenwelle des dritten Planetenradsatzes
- STB3: Stegblech des dritten Planetenradsatzes
- STW3: Stegwelle des dritten Planetenradsatzes

- 100: Lamellen des ersten Schaltelementes
- 110: Servoeinrichtung des ersten Schaltelementes
- 111: Druckraum der Servoeinrichtung des ersten Schaltelementes
- 113: Rückstellelement der Servoeinrichtung des ersten Schaltelementes
- 114: Kolben der Servoeinrichtung des ersten Schaltelementes
- 118: Druckmittelzuführung zum Druckraum des ersten Schaltelementes
- 120: Eingangselement des ersten Schaltelementes
- 121: zylindrischer Abschnitt des Eingangselementes des ersten Schaltelementes
- 122: scheibenförmiger Abschnitt des Eingangselementes des ersten Schaltelementes
- 130: Ausgangselement des ersten Schaltelementes
- 133: Nabe des Ausgangselementes des ersten Schaltelementes

- 200: Lamellen des zweiten Schaltelementes
- 201: Sicherungsring für die Lamellen des zweiten Schaltelementes
- 202: Material-Durchstellung, Anlagefläche für die Lamellen des zweiten Schaltelementes
- 210: Servoeinrichtung des zweiten Schaltelementes
- 211: Druckraum der Servoeinrichtung des zweiten Schaltelementes
- 212: Druckausgleichsraum der Servoeinrichtung des zweiten Schaltelementes
- 212a: Kühlmittelraum
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 216: Betätigungs-Stempel der Servoeinrichtung des zweiten Schaltelementes
- 217: zylinderförmige Stützscheibe der Servoeinrichtung des zweiten Schaltelementes
- 218: Druckmittelzuführung zum Druckraum des zweiten Schaltelementes
- 219: Schmiermittelzuführung zum Druckausgleichsraum des zweiten Schaltelementes
- 219a: Kühlmittelbohrung
- 219b: Kühlmittelzuführung zu den Lamellen des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes

- 230: Ausgangselement des zweiten Schaltelementes
- 231: zylindrischer Abschnitt des Ausgangselementes des zweiten Schaltelementes
- 232: scheibenförmiger Abschnitt des Ausgangselementes des zweiten Schaltelementes

- 300: Lamellen des dritten Schaltelementes
- 303: Bremsband des dritten Schaltelementes
- 310: Servoeinrichtung des dritten Schaltelementes
- 311: Druckraum der Servoeinrichtung des dritten Schaltelementes
- 313: Rückstellelement der Servoeinrichtung des dritten. Schaltelementes
- 313a: Druckteller
- 313b: ringförmiger Abschnitt des Drucktellers, Kolbenanlagefläche des Drucktellers
- 313c: geschlitzter Abschnitt des Drucktellers
- 314: Kolben der Servoeinrichtung des dritten Schaltelementes
- 318: Druckmittelzuführung zum Druckraum des dritten Schaltelementes
- 320: Eingangselement des dritten Schaltelementes
- 321: zylindrischer Abschnitt des Eingangselementes des dritten Schaltelementes
- 322: scheibenförmiger Abschnitt des Eingangselementes des dritten Schaltelementes
- 330: Ausgangselement des dritten Schaltelementes

- 400: Lamellen des vierten Schaltelementes
- 410: Servoeinrichtung des vierten Schaltelementes
- 411: Druckraum der Servoeinrichtung des vierten Schaltelementes
- 413: Rückstellelement der Servoeinrichtung des vierten Schaltelementes
- 414: Kolben der Servoeinrichtung des vierten Schaltelementes
- 420: Eingangselement des vierten Schaltelementes
- 421: zylindrischer Abschnitt des Eingangselementes des vierten Schaltelementes
- 430: Ausgangselement des vierten Schaltelementes

- 500: Lamellen des fünften Schaltelementes
- 501: Sicherungsring für die Lamellen des fünften Schaltelementes
- 510: Servoeinrichtung des fünften Schaltelementes
- 511: Druckraum des fünften Schaltelementes
- 512: Druckausgleichsraum des fünften Schaltelementes
- 513: Rückstellelement der Servoeinrichtung des fünften Schaltelementes
- 514: Kolben der Servoeinrichtung des fünften Schaltelementes
- 515: Stauscheibe der Servoeinrichtung des fünften Schaltelementes
- 518: Druckmittelzuführung zum Druckraum des fünften Schaltelementes
- 519: Schmiermittelzuführung zum Druckausgleichsraum des fünften Schaltelementes
- 520: Eingangselement des fünften Schaltelementes
- 521: (erster) zylindrischer Abschnitt des Eingangselementes des fünften Schaltelementes

- 522: (erster) scheibenförmiger Abschnitt des Eingangselementes des fünften Schaltelementes
- 523: Nabe des Eingangselementes des fünften Schaltelementes
- 524: zweiter zylindrischer Abschnitt des Eingangselementes des fünften Schaltelementes
- 525: zweiter scheibenförmiger Abschnitt des Eingangselementes des fünften Schaltelementes
- 526: erster zylindrischer Nabenabschnitt der Nabe des Eingangselementes des fünften Schaltelementes
- 527: zweiter zylindrischer Nabenabschnitt der Nabe des Eingangselementes des fünften Schaltelementes
- 530: Ausgangselement des fünften Schaltelementes
- 531: zylindrischer Abschnitt des Ausgangselementes des fünften Schaltelementes
- 532: scheibenförmiger Abschnitt des Ausgangselementes des fünften Schaltelementes

## Patentansprüche

1. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial in Reihe nebeneinander angeordnet sind,
- der zweite Planetenradsatz (RS2) räumlich gesehen zwischen dem ersten und dritten Planetenradsatz (RS1, RS3) angeordnet ist,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist, die Antriebswelle (AN) über das zweite Schaltelement (B) mit einem Sonnenrad (SO1) des ersten Planetenradsatzes (RS1) und über das fünfte Schaltelement (E) mit einem Steg (ST1) des ersten Planetenradsatzes (RS1) verbindbar ist,
- das Sonnenrad (SO1) des ersten Planetenradsatzes (RS1) über das dritte Schaltelement (C) und der Steg (ST1) des ersten Planetenradsatzes (RS1) über das vierte Schaltelement (D) an dem Getriebegehäuse (GG) festsetzbar ist,
- die Abtriebswelle (AB) und ein Hohlrad (HO1) des ersten Planetenradsatzes (RS1) und ein Steg (ST3) des dritten Planetenradsatzes (RS3) miteinander verbunden sind und ein Steg (ST2) des zweiten Planetenradsatzes (RS2) mit einem Hohlrad (HO3) des dritten Planetenradsatzes (RS3) verbunden ist und der Steg (ST1) des ersten Planetenradsatzes (RS1) mit einem Hohlrad (HO2) des zweiten Planetenradsatzes (RS2) verbunden ist,
**dadurch gekennzeichnet,**
**dass** das zweite und fünfte Schaltelement (B, E) als eine Baugruppe zusammengefasst sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaltelementes (B, E) sowie
- einem für das zweite und fünfte Schaltelement (B, E) gemeinsamen, einteiligen Lamellenträger (ZYLBE) zur Aufnahme der Lamellenpakete (200, 500) und zumindest der Servoeinrichtung (510) des fünften Schaltelementes (E),
wobei das Lamellenpaket (200) des zweiten Schaltelementes (B) einen größeren Durchmesser aufweist als das Lamellenpaket (500) des fünften Schaltelementes (E),
**dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Servoenrichtungen (210, 510) des zweiten und fünften Schaltelementes (B, E) jeweils mindestens einen Druckraum (211, 511) und einen Kolben (214, 514) aufweisen und
- die Druckräume (211, 511) der Servoeinrichtungen (210, 510) des zweiten und fünften Schaltelementes (B, E) durch eine Mantelfläche des für das zweite und fünfte Schaltelement (B, E) gemeinsamen Lamellenträgers (ZYLBE) voneinander getrennt sind,
**dass** die Betätigungsrichtungen der Servoeinrichtungen (210, 510) des zweiten und fünften Schaltelementes (B, E) beim Betätigen des jeweiligen Lamellenpaketes (200, 500) gleichgerichtet sind,
**dass** die Servoeinrichtung (210) des zweiten Schaltelementes (B) räumlich gesehen zumindest überwiegend radial über der Servoeinrichtung (510) des fünften Schaltelementes (E) angeordnet ist, insbesondere dass der Druckraum (211) der Servoeinrichtung (210) des zweiten Schaltelementes (B) räumlich gesehen zumindest überwiegend radial über dem Druckraum (511) der Servoeinrichtung (510) des fünften Schaltelementes (E) angeordnet ist und/oder dass ein Kolben (214) der Servoeinrichtung (210) des zweiten Schaltelementes (B) räumlich gesehen zumindest überwiegend radial über einem Kolben (514) der Servoeinrichtung (510) des fünften Schaltelementes (E) angeordnet ist,
und **dass**
- die Servoeinrichtungen (210, 510) des zweiten und fünften Schaltelementes (B, E) für ihren dynamischen Druckausgleich jeweils einen Druckausgleichsraum (212, 512) aufweisen,
- der Druckausgleichsraum (212) der Servoeinrichtung (210) des zweiten Schaltelementes (B) räumlich gesehen zumindest überwiegend radial über einem Druckausgleichsraum (512) der Servoeinrichtung (510) des fünften Schaltelementes (E) angeordnet ist und
- der Druckausgleichsraum (212) der Servoeinrichtung (210) des zweiten Schaftelementes (B) über den Druckausgleichsraum (512) der Servoeinrichtung (510) des fünften Schaltelementes (E) drucklos mit Schmiermittel versorgt wird.

2. Mehrstufen-Automatgetriebe nach dem Oberbegriff von Anspruch 1,
**dadurch gekennzeichnet,**
**dass** das zweite und fünfte Schaltelement (B, E) als eine Baugruppe zusammengefasst sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaftelementes (B, E) sowie
- einem für das zweite und fünfte Schaltelement (B, E) gemeinsamen, einteiligen Lamellenträger (ZYLBE) zur Aufnahme der Lamellenpakete (200, 500) und zumindest der Servoeinrichtung (510) des fünften Schaltelementes (E),
wobei das Lamellenpaket (200) des zweiten Schaltelementes (B) einen größeren Durchmesser aufweist als das Lamellenpaket (500) des fünften Schaltelementes (E),
**dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Servoeinrichtungen (210, 510) des zweiten und fünften Schaltelementes (B, E) jeweils mindestens einen Druckraum (211, 511) und einen Kolben (214, 514) aufweisen und
- die Druckräume (211, 511) der Servoeinrichtungen (210, 510) des zweiten und fünften Schaltelementes (B, E) durch eine Mantelfläche des für das zweite und fünfte Schaltelement (B, E) gemeinsamen Lamellenträgers (ZYLBE) voneinander getrennt sind,
**dass** die Betätigungsrichtungen der Servoeinrichtungen (210, 510) des zweiten und fünften Schaltelementes (B, E) beim Betätigen des jeweiligen Lamellenpaketes (200, 500) gleichgerichtet sind,
und **dass**
- die Servoeinrichtung (210) des zweiten Schaltelementes (B) für ihren dynamischen Druckausgleich einen Druckausgleichsraum (212) aufweist, der auf der Seite des Druckraums (211) der Servoeinrichtung (210) des zweiten Schaltelementes (B) angeordnet ist, die dem Druckraum (511) der Servoeinrichtung (510) des fünften Schaltelementes (E) zugewandt ist,
- die Servoeinrichtung (510) des fünften Schaltelementes (E) für ihren dynamischen Druckausgleich einen Druckausgleichsraum (512) aufweist, der auf der Seite des Druckraums (511) der Servoeinrichtung (510) des fünften Schaltelementes (E) angeordnet ist, die dem Druckraum (211) der Servoeinrichtung (210) des zweiten Schaltelementes (B) gegenüber liegt und
- der Druckraum (511) der Servoeinrichtung (510) des fünften Schaltelementes (E) und der Druckausgleichsraum (212) der Servoeinrichtung (210) des zweiten Schaltelementes (B) unmittelbar an die Mantelfläche des für das zweite und fünfte Schaltelement (B, E) gemeinsamen Lamellenträgers (ZYLBE) angrenzen.

3. Mehrstufen-Automatgetriebe nach dem Oberbegriff des Anspruchs 1,
**dadurch gekennzeichnet,**
**dass** das zweite und fünfte Schaltelement (B, E) als eine Baugruppe zusammengefasst sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaltelementes (B, E) sowie
- einem für das zweite und fünfte Schaltelement (B, E) gemeinsamen, einteiligen Lamellenträger (ZYLBE) zur Aufnahme der Lamellenpakete (200, 500) und zumindest der Servoeinrichtung (510) des fünften Schaltelementes (E),
wobei das Lamellenpaket (200) des zweiten Schaltelementes (B) einen größeren Durchmesser aufweist als das Lamellenpaket (500) des fünften Schaltelementes (E),
**dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Servoeinrichtungen (210, 510) des zweiten und fünften Schaltelementes (B, E) jeweils mindestens einen Druckraum (211, 511) und einen Kolben (214, 514) aufweisen und
- die Druckräume (211, 511) der Servoeinrichtungen (210, 510) des zweiten und fünften Schaltelementes (B, E) durch eine Mantelfläche des für das zweite und fünfte Schaltelement (B, E) gemeinsamen Lamellenträgers (ZYLBE) voneinander getrennt sind, und dass
- die Betätigungsrichtungen der Servoeinrichtungen (210, 510) des zweiten und fünften Schaltelementes (B, E) beim Betätigen des jeweiligen Lamellenpaketes (200, 500) entgegengesetzt sind,
- die Druckräume (211, 511) der Servoeinrichtungen (210, 510) des zweiten und fünften Schaltelementes (B, E) unmittelbar benachbart zueinander angeordnet sind und
- der Kolben (214) der Servoeinrichtung (210) des zweiten Schaltelementes (B) das Lamellenpaket (200) des zweiten Schaltelementes (B) in axialer Richtung radial außen vollständig übergreift und einen Betätigungs-Stempel (216) aufweist, welcher von der Seite des Lamellenpaketes (200) des zweiten Schaltelementes (B) aus auf dieses Lamellenpaket (200) wirkt, die dem Druckraum (211) der Servoeinrichtung (210) des zweiten Schaltelementes (B) gegenüberliegt.

4. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial in Reihe nebeneinander angeordnet sind,
- der zweite Planetenradsatz (RS2) räumlich gesehen zwischen dem ersten und dritten Planetenradsatz (RS1, RS3) angeordnet ist,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist,
- die Antriebswelle (AN) über das zweite Schaltelement (B) mit einem Sonnenrad (SO1) des ersten Planetenradsatzes (RS1) und über das fünfte Schaltelement (E) mit einem Steg (ST1) des ersten Planetenradsatzes (RS1) verbindbar ist,
- das Sonnenrad (SO1) des ersten Planetenradsatzes (RS1) über das dritte Schaltelement (C) und der Steg (ST1) des ersten Planetenradsatzes (RS1) über das vierte Schaftelement (D) an dem Getriebegehäuse (GG) festsetzbar ist,
- die Abtriebswelle (AB) und das Hohlrad (HO1) des ersten Planetenradsatzes (RS1) und der Steg (ST2) des zweiten Planetenradsatzes (RS2) miteinander verbunden sind und der Steg (ST3) des dritten Planetenradsatzes (RS3) mit dem Hohlrad (HO2) des zweiten Planetenradsatzes (RS2) verbunden ist und der Steg (ST1) des ersten Planetenradsatzes (RS1) mit dem Hohlrad (HO3) des dritten Planetenradsatzes (RS3) verbunden ist,
**dadurch gekennzeichnet,**
**dass** das zweite und fünften Schaltelement (B, E) als eine Baugruppe zusammengefasst sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaltelementes (B, E) sowie
- einem für das zweite und fünfte Schaltelement (B, E) gemeinsamen, einteiligen Lamellenträger (ZYLBE) zur Aufnahme der Lamellenpakete (200, 500) und zumindest der Servoeinrichtung (510) des fünften Schaltelementes (E),
wobei das Lamellenpaket (200) des zweiten Schaltelementes (B) einen größeren Durchmesser aufweist als das Lamellenpaket (500) des fünften Schaltelementes (E),
**dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Servoeinrichtungen (210, 510) des zweiten und fünften Schaltelementes (B, E) jeweils mindestens einen Druckraum (211, 511) und einen Kolben (214, 514) aufweisen und
- die Druckräume (211, 511) der Semoeinrichtungen (210, 510) des zweiten und fünften Schaltelementes (B, E) durch eine Mantelfläche des für das zweite und fünfte Schaltelement (B, E) gemeinsamen Lamellenträgers (ZYLBE) voneinander getrennt sind,
**dass** die Betätigungsrichtungen der Servoeinrichtungen (210, 510) des zweiten und fünften Schaltelementes (B, E) beim Betätigen des jeweiligen Lamellenpaketes (200, 500) gleichgerichtet sind,
**dass** die Servoeinrichtung (210) des zweiten Schaltelementes (B) räumlich gesehen zumindest überwiegend radial über der Servoeinrichtung (510) des fünften Schaltelementes (E) angeordnet ist, insbesondere dass der Druckraum (211) der Servoeinrichtung (210) des zweiten Schaltelementes (B) räumlich gesehen zumindest überwiegend radial über dem Druckraum (511) der Servoeinrichtung (510) des fünften Schaltelementes (E) angeordnet ist und/oder dass ein Kolben (214) der Servoeinrichtung (210) des zweiten Schaltelementes (B) räumlich gesehen zumindest überwiegend radial über einem Kolben (514) der Servoeinrichtung (510) des fünften Schaltelementes (E) angeordnet ist,
und **dass**
- die Servoeinrichtungen (210, 510) des zweiten und fünften Schaltelementes (B, E) für ihren dynamischen Druckausgleich jeweils einen Druckausgleichsraum (212, 512) aufweisen,
- der Druckausgleichsraum (212) der Servoeinrichtung (210) des zweiten Schaltelementes (B) räumlich gesehen zumindest überwiegend radial über einem Druckausgleichsraum (512) der Servoeinrichtung (510) des fünften Schaltelementes (E) angeordnet ist und
- der Druckausgleichsraum (212) der Servoeinrichtung (210) des zweiten Schaltelementes (B) über den Druckausgleichsraum (512) der Servoeinrichtung (510) des fünften Schaltelementes (E) drucklos mit Schmiermittel versorgt wird.

5. Mehrstufen-Automatgetriebe nach dem Oberbegriff von Anspruch 4,
**dadurch gekennzeichnet,**
**dass** das zweite und fünfte Schaltelement (B, E) als eine Baugruppe zusammengefasst sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaltelementes (B, E) sowie
- einem für das zweite und fünfte Schaltelement (B, E) gemeinsamen, einteiligen Lamellenträger (ZYLBE) zur Aufnahme der Lamellenpakete (200, 500) und zumindest der Servoeinrichtung (510) des fünften Schaltelementes (E),
wobei das Lamellenpaket (200) des zweiten Schaltelementes (B) einen größeren Durchmesser aufweist als das Lamellenpaket (500) des fünften Schaltelementes (E),
**dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Servoeinrichtungen (210, 510) des zweiten und fünften Schaltelementes (B, E) jeweils mindestens einen Druckraum (211, 511) und einen Kolben (214, 514) aufweisen und
- die Druckräume (211, 511) der Servooinrichtungen (210, 510) des zweiten und fünften Schaltelementes (B, E) durch eine Mantelfläche des für das zweite und fünfte Schaltelement (B, E) gemeinsamen Lamellenträgers (ZYLBE) voneinander getrennt sind,
**dass** die Betätigungsrichtungen der Servoeinrichtungen (210, 510) des zweiten und fünften Schaltelementes (B, E) beim Betätigen des jeweiligen Lamellenpaketes (200, 500) gleichgerichtet sind,
und **dass**
- die Servoeinrichtung (210) des zweiten Schaltelementes (B) für ihren dynamischen Druckausgleich einen Druckausgleichsraum (212) aufweist, der auf der Seite des Druckraums (211) der Servoeinrichtung (210) des zweiten Schaltelementes (B) angeordnet ist, die dem Druckraum (511) der Servoeinrichtung (510) des fünften Schaltelementes (E) zugewandt ist,
- die Servoeinrichtung (510) des fünften Schaltelementes (E) für ihren dynamischen Druckausgleich einen Druckausgleichsrsum (512) aufweist, der auf der Seite des Druckraums (511) der Servoeinrichtung (510) des fünften Schaltelementes (E) angeordnet ist, die dem Druckraum (211) der Servoeinrichtung (210) des zweiten Schaltelementes (B) gegenüber liegt und
- der Druckraum (511) der Servoeinrichtung (510) des fünften Schaltelementes (E) und der Druckausgleichsraum (212) der Servoeinrichtung (210) des zweiten Schaltelementes (B) unmittelbar an die Mantelfläche des für das zweite und fünfte Schaltelement (B, E) ge-meinsamen Lamellenträgers (ZYLBE) angrenzen.

6. Mehrstufen-Automatgetriebe nach dem Oberbegriff des Anspruchs 4,
**dadurch gekennzeichnet,**
**dass** das zweite und fünfte Schaltelement (B, E) als eine Baugruppe zusammengefasst sind, mit
- je einem Lamellenpaket (200, 500) des zweiten und fünften Schaltelementes (B, E),
- je einer Servoeinrichtung (210, 510) des zweiten und fünften Schaltelementes (B, E) zur Betätigung der jeweiligen Lamellenpakete (200, 500) des zweiten bzw. fünften Schaltelementes (B, E) sowie
- einem für das zweite und fünfte Schaltelement (B, E) gemeinsamen, einteiligen Lamellenträger (ZYLBE) zur Aufnahme der Lamellenpakete (200, 500) und zumindest der Servoeinrichtung (510) des fünften Schaltelementes (E),
wobei das Lamellenpaket (200) des zweiten Schaltelementes (B) einen größeren Durchmesser aufweist als das Lamellenpaket (500) des fünften Schaltelementes (E),
**dass**
- der für das zweite und fünfte Schaltelement (B, E) gemeinsame Lamellenträger (ZYLBE) einen Kupplungsraum bildet, innerhalb dessen das Lamellenpaket (500) des fünften Schaltelementes (E) und die Servoeinrichtung (510) des fünften Schaltelementes (E) angeordnet ist,
- die Servoeinrichtungen (210, 510) des zweiten und fünften Schaltelementes (B, E) jeweils mindestens einen Druckraum (211, 511) und einen Kolben (214, 514) aufweisen und
- die Druckräume (211, 511) der Servoeinrichtungen (210, 510) des zweiten und fünften Schaltelementes (B, E) durch eine Mantelfläche des für das zweite und fünfte Schaltelement (B, E) gemeinsamen Lamellenträgers (ZYLBE) voneinander getrennt sind,
und **dass**
- die Betätigungsrichtungen der Servoeinrichtungen (210, 510) des zweiten und fünften Schaltelementes (B, E) beim Betätigen des jeweiligen Lamellenpaketes (200, 500) entgegengesetzt sind,
- die Druckräume (211, 511) der Servoeinrichtungen (210, 510) des zweiten und fünften Schaltelementes (B, E) unmittelbar benachbart zueinander angeordnet sind und
- der Kolben (214) der Servoeinrichtung (210) des zweiten Schaltelementes (B) das Lamellenpaket (200) des zweiten Schaltelementes (B) in axialer Richtung radial außen vollständig übergreift und einen Betätigungs-Stempel (216) aufweist, welcher von der Seite des Lamellenpaketes (200) des zweiten Schaltelementes (B) aus auf dieses Lamellenpaket (200) wirkt, die dem Druckraum (211) der Servoeinrichtung (210) des zweiten Schaltelementes (B) gegenüberliegt.

7. Mehrstufen-Automatgetriebe nach Anspruch 3 oder 6 **dadurch gekennzeichnet, dass**
- die Servoeinrichtung (210) des zweiten Schaltelementes (B) für ihren dynamischen Druckausgleich einen Druckausgleichsraum (212) aufweist, der auf der Seite des Druckraums (211) der Servoeinrichtung (210) des zweiten Schaltelementes (B) angeordnet ist, die dem Druckraum (511) der Servoeinrichtung (510) des fünften Schaltelementes (E) gegenüber liegt,
- die Servoeinrichtung (510) des fünften Schaltelementes (E) für ihren dynamischen Druckausgleich einen Druckausgleichsraum (512) aufweist, der auf der Seite des Druckraums (511) der Servoeinrichtung (510) des fünften Schaltelementes (E) angeordnet ist, die dem Druckraum (211) der Servoeinrichtung (210) des zweiten Schaltelementes (B) gegenüber liegt und
- die Druckräume (211. 511) der Servoeinrichtungen (210, 510) des zweiten und fünften Schaltelementes (B, E) unmittelbar an die Mantelfläche des für das zweite und fünfte Schaltelement (B, E) gemeinsamen Lamellenträgers (ZYLBE) angrenzen.

8. Mehrstufen-Automatgetriebe nach Anspruch 3 oder 6 oder 7, **dadurch gekennzeichnet, dass** die Servoeinrichtung (510) des fünften Schaltelementes (E) das Lamellenpaket (500) des fünften Schaltelementes (E) axial in Richtung des ersten Planetenradsatzes (RS1) betätigt, und dass die Servoeinrichtung (210) des zweiten Schaltelementes (B) das Lamellenpaket (200) des zweiten Schaltelementes (B) axial in zum ersten Planetenradsatzes (RS1) entgegengesetzter Richtung betätigt.

9. Mehrstufen-Automatgetriebe nach einem der Ansprüche 1 bis 8, **dadurch gekennzeichnet, dass** die Kontur eines Kolbens (214) der Servoeinrichtung (210) des zweiten Schaltelementes (B) einer Außenkontur des für das zweite und fünften Schaltelement (B, E) gemeinsamen Lamellenträgers (ZYLBE) angepaßt ist.

10. Mehrstufen-Automatgetriebe nach einem der Ansprüche 1 bis 9, **dadurch gekennzeichnet, dass** das Lamellenpaket (200) des zweiten Schaltelementes (B) räumlich gesehen zumindest weitgehend radial über dem Lamellenpaket (500) des fünften Schaltelementes (E) angeordnet ist.

11. Mehrstufen-Automatgetriebe nach einem der Ansprüche 1 bis 9, **dadurch gekennzeichnet, dass** das Lamellenpaket (200) des zweiten Schaltelementes (B) räumlich gesehen zumindest teilweise axial neben dem Lamellenpaket (500) des fünften Schaltelementes (E) angeordnet ist,
wobei das Lamellenpaket (200) des zweiten Schaltelementes (B) in axialer Richtung gesehen zumindest teilweise radial oberhalb des ersten Planetenradsatzes (RS1) angeordnet ist, und wobei das Lamellenpaket (500) des fünften Schaltelementes (E) in radialer Richtung gesehen zumindest teilweise axial neben dem ersten Planetenradsatz (RS1) angeordnet ist.

12. Mehrstufen-Automatgetriebe nach einem der Ansprüche 1 bis 11, **dadurch gekennzeichnet, dass** das dritte Schaltelementes (C), insbesondere ein Lamellenpaket (300) oder ein Bremsband (303) des dritten Schaltelementes (C), räumlich gesehen zumindest weitgehend radial über dem Lamellenpaket (200) des zweiten Schaltelementes (B) angeordnet ist.

13. Mehrstufen-Automatgetriebe nach einem der Ansprüche 1 bis 11, **dadurch gekennzeichnet,**
**dass** das dritte Schaltelement (C), insbesondere ein Lamellenpaket (300) oder ein Bremsband (303) des dritten Schaltelementes (C), räumlich gesehen axial neben dem Lamellenpaket (200) des zweiten Schaltelementes (B) angeordnet ist,
**dass** das fünfte und zweite Schaltelement (E, B) räumlich gesehen auf der dem zweiten Planetenradsatz (RS2) abgewandten Seite des ersten Planetenradsatzes (RS1) angeordnet sind,
und **dass** das dritte Schaltelement (C) räumlich gesehen in einem Bereich radial über den Planetenradsätzen (RS1, RS2, RS3), insbesondere in axialer Richtung gesehen radial oberhalb des ersten und/oder zweiten Planetenradsatzes (RS1, RS2) angeordnet ist.

14. Mehrstufen-Automatgetriebe nach einem der Ansprüche 1 bis 13, **dadurch gekennzeichnet,**
**dass** das vierte Schaltelement (D) räumlich gesehen in einem Bereich radial über den Planetenradsätzen (RS1, RS2, RS3) angeordnet ist, insbesondere in axialer Richtung gesehen radial oberhalb des zweiten und/oder dritten Planetenradsatzes (RS2, RS3),
wobei die Betätigungsrichtung einer Servoeinrichtung (310) des dritten Schaltelementes (C) und die Betätigungsrichtung einer Servoeinrichtung (410) des vierten Schaltelementes (D) beim Zuschalten des jeweiligen Schaltelementes (C, D) zueinander entgegengesetzt sind.

15. Mehrstufen-Automatgetriebe nach einem der Ansprüche 1 bis 13, **dadurch gekennzeichnet,**
**dass** das vierte Schaltelement (D) räumlich gesehen in einem Bereich radial über den Planetenradsätzen (RS1, RS2, RS3) angeordnet ist, insbesondere in axialer Richtung gesehen radial oberhalb des zweiten und/oder dritten Planetenradsatzes (RS2, RS3),
wobei das vierte Schaltelement (D) räumlich gesehen näher am dritten Planetenradsatz (RS3) angeordnet ist als das dritte Schaltelement (C),
und wobei die Betätigungsrichtung einer Servoeinrichtung (310) des dritten Schaltelementes (C) und die Betätigungsrichtung einer Servoeinrichtung (410) des vierten Schaltelementes (D) beim Zuschalten des jeweiligen Schaltelementes (C, D) gleichgerichtet sind.

16. Mehrstufen-Automatgetriebe nach einem der Ansprüche 1 bis 15, **dadurch gekennzeichnet, dass** mindestens eine der beiden Servoeinrichtungen (310, 410) des dritten und vierten Schaltelementes (C, D) axial zwischen den Lamellenpaketen (300, 400) des dritten und vierten Schaltelementes (C, D) angeordnet ist.

17. Mehrstufen-Automatgetriebe nach einem der Ansprüche 1 bis 16, **dadurch gekennzeichnet,**
**dass** Antriebswelle (AN) und Abtriebswelle (AB) nicht koaxial zueinander verlaufen,
und **dass** eine Stirnradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist,
wobei ein erstes Stirnrad (STR1) der Stimradstufe (STST) bzw. ein erstes Kettenrad (KTR1) des Kettentriebs axial zwischen dem dritten Planetenradsatz (RS3) und dem ersten Schattelement (A) angeordnet ist.

18. Mehrstufen-Automatgetriebe nach Anspruch 17, **dadurch gekennzeichnet, dass** das erste Stirnrad (STR1) der Stimradstufe (STST) bzw. das erste Kettenrad (KTR1) des Kettentriebs an einer Gehäusezwischenwand (GZ) gelagert ist, die axial zwischen Stimradstufe (STST) bzw. Kettentrieb und drittem Planetenradsatz (RS3) angeordnet ist, wobei diese Gehäusezwischenwand (GZ) verdrehfest mit dem Getriebegehäuse (GG) verbunden oder zusammen mit dem Getriebegehäuse (GG) einstückig ausgeführt ist.

19. Mehrstufen-Automatgetriebe nach Anspruch 17, **dadurch gekennzeichnet, dass** das erste Stimrad (STR1) der Stimradstufe (STST) bzw. das erste Kettenrad (KTR1) des Kettentriebs an einer Gehäusezwischenwand (GZ) bzw. an einer Lagerplatte (LAG) gelagert ist, die axial zwischen Stimradstufe (STST) bzw. Kettentrieb und erstem Schaltelement (A) angeordnet ist, wobei diese Gehäusezwischenwand (GZ) bzw. Lagerplatte (LAG) verdrehfest mit dem Getriebegehäuse (GG) verbunden oder zusammen mit dem Getriebegehäuse (GG) einstückig ausgeführt ist, oder wobei die Lagerplatte (LAG) verdrehfest mit einer getriebegehäusefesten Gehäusewand (GW) verbunden ist.

20. Mehrstufen-Automatgetriebe nach einem der Ansprüche 1 bis 16, **dadurch gekennzeichnet,**
**dass** Antriebswelle (AN) und Abtriebswelle (AB) nicht koaxial zueinander verlaufen,
**dass** eine Stimradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist, wobei ein erstes Stirnrad (STR1) der Stimradstufe (STST) bzw. ein erstes Kettenrad (KTR1) des Kettentriebs an eine Außenwand des Getriebegehäuses (GG) oder einen getriebegehäusefesten Gehäusedeckel angrenzt,
**dass** das erste Stirnrad (STR1) der Stimradstufe (STST) bzw. das erste Kettenrad (KTR1) des Kettentriebs an der Außenwand des Getriebegehäuses (GG) bzw. dem getriebegehäusefesten Gehäusedeckel und/oder auf der Antriebswelle (AN) gelagert ist,
und **dass** das erste Schaltelement (A) räumlich gesehen zwischen dem dritten Planetenradsatz (RS3) und dem ersten Stirnrad (STR1) der Stimradstufe (STST) bzw. zwischen dem dritten Planetenradsatz (RS3) und dem ersten Kettenrad (KTR1) des Kettentriebs angeordnet ist.

21. Mehrstufen-Automatgetriebe nach einem der Ansprüche 1 bis 16, **dadurch gekennzeichnet,**
**dass** Antriebswelle (AN) und Abtriebswelle (AB) nicht koaxial zueinander verlaufen,
**dass** eine Stimradstufe (STST) oder ein Kettentrieb vorgesehen ist, über den das Hohlrad (HO1) des ersten Planetenradsatzes (RS1) und der mit diesem Hohlrad (HO1) verbundene Steg (ST3, ST2) des dritten oder zweiten Planetenradsatzes (RS3, RS2) mit der Abtriebswelle (AB) wirkverbunden ist,
**dass** ein erstes Stirnrad (STR1) der Stimradstufe (STST) bzw. ein erstes Kettenrad (KTR1) des Kettentriebs an eine Außenwand des Getriebegehäuses (GG) oder einen getriebegehäusefesten Gehäusedeckel angrenzt,
**dass** das erste Stirnrad (STR1) der Stimradstufe (STST) bzw. das erste Kettenrad (KTR1) des Kettentriebs an der Außenwand des Getriebegehäuses (GG) bzw. dem getriebegehäusefesten Gehäusedeckel und/oder auf der Antriebswelle (AN) gelagert ist,
und **dass** das erste Schaltelement (A) räumlich gesehen innerhalb eines Zylinderraumes angeordnet ist, der durch das erste Kettenrad (KTR1) des Kettentriebs gebildet wird, wobei das erste Schaltelement (A) axial an den dritten Planetenradsatz (RS3) angrenzt.

## Claims

1. Multi-stage automatic transmission, having an input shaft (AN), an output shaft (AB), at least three single planetary gear trains (RS1, RS2, RS3), and at least five shifting elements (A to E),
- the three planetary gear trains (RS1, RS2, RS3) being arranged coaxially in series next to one another,
- the second planetary gear train (RS2), when viewed spatially, being arranged between the first and third planetary gear trains (RS1, RS3),
- a sun gear (SO3) of the third planetary gear train (RS3) being fixable to a transmission housing (GG) of the multi-stage automatic transmission via the first shifting element (A),
- the input shaft (AN) being connected to a sun gear (SO2) of the second planetary gear train (RS2),
- the input shaft (AN) being connectable to a sun gear (SO1) of the first planetary gear train (RS1) via the second shifting element (B) and to a planet carrier (ST1) of the first planetary gear train (RS1) via the fifth shifting element (E),
- the sun gear (SO1) of the first planetary gear train (RS1) being fixable to the transmission housing (GG) via the third shifting element (C) and the planet carrier (ST1) of the first planetary gear train (RS1) being fixable to the transmission housing (GG) via the fourth shifting element (D),
- the output shaft (AB) and a ring gear (HO1) of the first planetary gear train (RS1) and a planet carrier (ST3) of the third planetary gear train (RS3) being connected to one another, and a planet carrier (ST2) of the second planetary gear train (RS2) being connected to a ring gear (HO3) of the third planetary gear train (RS3), and the planet carrier (ST1) of the first planetary gear train (RS1) being connected to a ring gear (HO2) of the second planetary gear train (RS2),
**characterised in that** the second and fifth shifting elements (B, E) are combined as a unit, having
- a respective disc pack (200, 500) of the second and fifth shifting elements (B, E),
- a respective servo device (210, 510) of the second and fifth shifting elements (B, E) for actuating the respective disc packs (200, 500) of the second and fifth shifting elements (B, E) and
- a one-piece disc support (ZYLBE), common to the second and fifth shifting elements (B, E), for holding the disc packs (200, 500) and at least the servo device (510) of the fifth shifting elements (E),
- the disc pack (200) of the second shifting element (B) having a larger diameter than the disc pack (500) of the fifth shifting element (E),
**in that**
- the disc support (ZYLBE) common to the second and fifth shifting elements (B, E) forms a coupling space within which are arranged the disc pack (500) of the fifth shifting element (E) and the servo device (510) of the fifth shifting element (E),
- the servo devices (210, 510) of the second and fifth shifting elements (B, E) each have at least one pressure space (211, 511) and a piston (214, 514), and
- the pressure spaces (211, 511) of the servo devices (210, 510) of the second and fifth shifting elements (B, E) are separated from one another by an outer surface of the disc support (ZYLBE) common to the second and fifth shifting elements (B, E),
**in that** the actuation directions of the servo devices (210, 510) of the second and fifth shifting elements (B, E) upon the actuation of the respective disc packs (200, 500) are the same,
**in that** the servo device (210) of the second shifting element (B), when viewed spatially, is arranged at least predominantly radially above the servo device (510) of the fifth shifting element (E), in particular in that the pressure space (211) of the servo device (210) of the second shifting element (B), when viewed spatially, is arranged at least predominantly radially above the pressure space (511) of the servo device (510) of the fifth shifting element (E), and/or **in that** a piston (214) of the servo device (210) of the second shifting element (B), when viewed spatially, is arranged at least predominantly radially above a piston (514) of the servo device (510) of the fifth shifting element (E),
and **in that**
- the servo devices (210, 510) of the second and fifth shifting elements (B, E) have respective pressure compensation spaces (212, 512) for their dynamic pressure compensation,
- the pressure compensation space (212) of the servo device (210) of the second shifting element (B), when viewed spatially, is arranged at least predominantly radially above a pressure compensation space (512) of the servo device (510) of the fifth shifting element (E), and
- the pressure compensation space (212) of the servo device (210) of the second shifting element (B) is supplied with lubricant, without pressurisation, via the pressure compensation space (512) of the servo device (510) of the fifth shifting element (E).

2. Multi-stage automatic transmission according to the preamble of Claim 1, **characterised in that** the second and fifth shifting elements (B, E) are combined as a unit, having
- a respective disc pack (200, 500) of the second and fifth shifting elements (B, E),
- a respective servo device (210, 510) of the second and fifth shifting elements (B, E) for actuating the respective disc packs (200, 500) of the second and fifth shifting elements (B, E) and
- a one-piece disc support (ZYLBE), common to the second and fifth shifting elements (B, E), for holding the disc packs (200, 500) and at least the servo device (510) of the fifth shifting elements (E),
- the disc pack (200) of the second shifting element (B) having a larger diameter than the disc pack (500) of the fifth shifting element (E),
**in that**
- the disc support (ZYLBE) common to the second and fifth shifting elements (B, E) forms a coupling space within which are arranged the disc pack (500) of the fifth shifting element (E) and the servo device (510) of the fifth shifting element (E),
- the servo devices (210, 510) of the second and fifth shifting elements (B, E) each have at least one pressure space (211, 511) and a piston (214, 514), and
- the pressure spaces (211, 511) of the servo devices (210, 510) of the second and fifth shifting elements (B, E) are separated from one another by an outer surface of the disc support (ZYLBE) common to the second and fifth shifting elements (B, E),
**in that** the actuation directions of the servo devices (210, 510) of the second and fifth shifting elements (B, E) upon the actuation of the respective disc packs (200, 500) are the same, and
**in that**
- the servo device (210) of the second shifting element (B) has, for its dynamic pressure compensation, a pressure compensation space (212) which is arranged on the side of the pressure space (211) of the servo device (210) of the second shifting element (B) facing towards the pressure space (511) of the servo device (510) of the fifth shifting element (E),
- the servo device (510) of the fifth shifting element (E) has, for its dynamic pressure compensation, a pressure compensation space (512) which is arranged on the side of the pressure space (511) of the servo device (510) of the fifth shifting element (E) opposite the pressure space (211) of the servo device (210) of the second shifting element (B), and
- the pressure space (511) of the servo device (510) of the fifth shifting element (E) and the pressure compensation space (212) of the servo device (210) of the second shifting element (B) are directly adjacent to the outer surface of the disc support (ZYLBE) common to the second and fifth shifting elements (B, E).

3. Multi-stage automatic transmission according to the preamble of Claim 1, **characterised in that** the second and fifth shifting elements (B, E) are combined as a unit, having
- a respective disc pack (200, 500) of the second and fifth shifting elements (B, E),
- a respective servo device (210, 510) of the second and fifth shifting elements (B, E) for actuating the respective disc packs (200, 500) of the second and fifth shifting elements (B, E) and
- a one-piece disc support (ZYLBE), common to the second and fifth shifting elements (B, E), for holding the disc packs (200, 500) and at least the servo device (510) of the fifth shifting elements (E),
- the disc pack (200) of the second shifting element (B) having a larger diameter than the disc pack (500) of the fifth shifting element (E),
**in that**
- the disc support (ZYLBE) common to the second and fifth shifting elements (B, E) forms a coupling space within which are arranged the disc pack (500) of the fifth shifting element (E) and the servo device (510) of the fifth shifting element (E),
- the servo devices (210, 510) of the second and fifth shifting elements (B, E) each have at least one pressure space (211, 511) and a piston (214, 514), and
- the pressure spaces (211, 511) of the servo devices (210, 510) of the second and fifth shifting elements (B, E) are separated from one another by an outer surface of the disc support (ZYLBE) common to the second and fifth shifting elements (B, E),
and **in that**
- the actuation directions of the servo devices (210, 510) of the second and fifth shifting elements (B, E) upon the actuation of the respective disc packs (200, 500) are opposite,
- the pressure spaces (211, 511) of the servo devices (210, 510) of the second and fifth shifting elements (B, E) being arranged directly adjacent to one another, and
- the piston (214) of the servo device (210) of the second shifting element (B) reaching completely over the disc pack (200) of the second shifting element (B) radially on the outside in the axial direction, and having an actuating plunger (216) which acts on the disc pack (200) of the second shifting element (B) from the side of this disc pack (200) opposite the pressure space (211) of the servo device (210) of the second shifting element (B).

4. Multi-stage automatic transmission, having an input shaft (AN), an output shaft (AB), at least three single planetary gear trains (RS1, RS2, RS3), and at least five shifting elements (A to E),
- the three planetary gear trains (RS1, RS2, RS3) being arranged coaxially in series next to one another,
- the second planetary gear train (RS2), when viewed spatially, being arranged between the first and third planetary gear trains (RS1, RS3),
- a sun gear (SO3) of the third planetary gear train (RS3) being fixable to a transmission housing (GG) of the multi-stage automatic transmission via the first shifting element (A),
- the input shaft (AN) being connected to a sun gear (SO2) of the second planetary gear train (RS2),
- the input shaft (AN) being connectable to a sun gear (SO1) of the first planetary gear train (RS1) via the second shifting element (B) and to a planet carrier (ST1) of the first planetary gear train (RS1) via the fifth shifting element (E),
- the sun gear (SO1) of the first planetary gear train (RS1) being fixable to the transmission housing (GG) via the third shifting element (C) and the planet carrier (ST1) of the first planetary gear train (RS1) being fixable to the transmission housing (GG) via the fourth shifting element (D),
- the output shaft (AB) and the ring gear (HO1) of the first planetary gear train (RS1) and the planet carrier (ST2) of the second planetary gear train (RS2) being connected to one another, and the planet carrier (ST3) of the third planetary gear train (RS3) being connected to the ring gear (HO2) of the second planetary gear train (RS2), and the planet carrier (ST1) of the first planetary gear train (RS1) being connected to a ring gear (HO3) of the third planetary gear train (RS3),
**characterised in that** the second and fifth shifting elements (B, E) are combined as a unit, having
- a respective disc pack (200, 500) of the second and fifth shifting elements (B, E),
- a respective servo device (210, 510) of the second and fifth shifting elements (B, E) for actuating the respective disc packs (200, 500) of the second and fifth shifting elements (B, E) and
- a one-piece disc support (ZYLBE), common to the second and fifth shifting elements (B, E), for holding the disc packs (200, 500) and at least the servo device (510) of the fifth shifting elements (E),
- the disc pack (200) of the second shifting element (B) having a larger diameter than the disc pack (500) of the fifth shifting element (E),
**in that**
- the disc support (ZYLBE) common to the second and fifth shifting elements (B, E) forms a coupling space within which are arranged the disc pack (500) of the fifth shifting element (E) and the servo device (510) of the fifth shifting element (E),
- the servo devices (210, 510) of the second and fifth shifting elements (B, E) each have at least one pressure space (211, 511) and a piston (214, 514), and
- the pressure spaces (211, 511) of the servo devices (210, 510) of the second and fifth shifting elements (B, E) are separated from one another by an outer surface of the disc support (ZYLBE) common to the second and fifth shifting elements (B, E),
**in that** the actuation directions of the servo devices (210, 510) of the second and fifth shifting elements (B, E) upon the actuation of the respective disc packs (200, 500) are the same,
**in that** the servo device (210) of the second shifting element (B), when viewed spatially, is arranged at least predominantly radially above the servo device (510) of the fifth shifting element (E), in particular in that the pressure space (211) of the servo device (210) of the second shifting element (B), when viewed spatially, is arranged at least predominantly radially above the pressure space (511) of the servo device (510) of the fifth shifting element (E), and/or **in that** a piston (214) of the servo device (210) of the second shifting element (B), when viewed spatially, is arranged at least predominantly radially above a piston (514) of the servo device (510) of the fifth shifting element (E),
and **in that**
- the servo devices (210, 510) of the second and fifth shifting elements (B, E) have respective pressure compensation spaces (212, 512) for their dynamic pressure compensation,
- the pressure compensation space (212) of the servo device (210) of the second shifting element (B), when viewed spatially, is arranged at least predominantly radially above a pressure compensation space (512) of the servo device (510) of the fifth shifting element (E), and
- the pressure compensation space (212) of the servo device (210) of the second shifting element (B) is supplied with lubricant, without pressurisation, via the pressure compensation space (512) of the servo device (510) of the fifth shifting element (E).

5. Multi-stage automatic transmission according to the preamble of Claim 4, **characterised in that** the second and fifth shifting elements (B, E) are combined as a unit, having
- a respective disc pack (200, 500) of the second and fifth shifting elements (B, E),
- a respective servo device (210, 510) of the second and fifth shifting elements (B, E) for actuating the respective disc packs (200, 500) of the second and fifth shifting elements (B, E) and
- a one-piece disc support (ZYLBE), common to the second and fifth shifting elements (B, E), for holding the disc packs (200, 500) and at least the servo device (510) of the fifth shifting elements (E),
- the disc pack (200) of the second shifting element (B) having a larger diameter than the disc pack (500) of the fifth shifting element (E),
**in that**
- the disc support (ZYLBE) common to the second and fifth shifting elements (B, E) forms a coupling space within which are arranged the disc pack (500) of the fifth shifting element (E) and the servo device (510) of the fifth shifting element (E),
- the servo devices (210, 510) of the second and fifth shifting elements (B, E) each have at least one pressure space (211, 511) and a piston (214, 514), and
- the pressure spaces (211, 511) of the servo devices (210, 510) of the second and fifth shifting elements (B, E) are separated from one another by an outer surface of the disc support (ZYLBE) common to the second and fifth shifting elements (B, E),
**in that** the actuation directions of the servo devices (210, 510) of the second and fifth shifting elements (B, E) upon the actuation of the respective disc packs (200, 500) are the same, and
**in that**
- the servo device (210) of the second shifting element (B) has, for its dynamic pressure compensation, a pressure compensation space (212) which is arranged on the side of the pressure space (211) of the servo device (210) of the second shifting element (B) facing towards the pressure space (511) of the servo device (510) of the fifth shifting element (E),
- the servo device (510) of the fifth shifting element (E) has, for its dynamic pressure compensation, a pressure compensation space (512) which is arranged on the side of the pressure space (511) of the servo device (510) of the fifth shifting element (E) opposite the pressure space (211) of the servo device (210) of the second shifting element (B), and
- the pressure space (511) of the servo device (510) of the fifth shifting element (E) and the pressure compensation space (212) of the servo device (210) of the second shifting element (B) are directly adjacent to the outer surface of the disc support (ZYLBE) common to the second and fifth shifting elements (B, E).

6. Multi-stage automatic transmission according to the preamble of Claim 4, **characterised in that** the second and fifth shifting elements (B, E) are combined as a unit, having
- a respective disc pack (200, 500) of the second and fifth shifting elements (B, E),
- a respective servo device (210, 510) of the second and fifth shifting elements (B, E) for actuating the respective disc packs (200, 500) of the second and fifth shifting elements (B, E) and
- a one-piece disc support (ZYLBE), common to the second and fifth shifting elements (B, E), for holding the disc packs (200, 500) and at least the servo device (510) of the fifth shifting elements (E),
- the disc pack (200) of the second shifting element (B) having a larger diameter than the disc pack (500) of the fifth shifting element (E),
**in that**
- the disc support (ZYLBE) common to the second and fifth shifting elements (B, E) forms a coupling space within which are arranged the disc pack (500) of the fifth shifting element (E) and the servo device (510) of the fifth shifting element (E),
- the servo devices (210, 510) of the second and fifth shifting elements (B, E) each have at least one pressure space (211, 511) and a piston (214, 514), and
- the pressure spaces (211, 511) of the servo devices (210, 510) of the second and fifth shifting elements (B, E) are separated from one another by an outer surface of the disc support (ZYLBE) common to the second and fifth shifting elements (B, E),
and **in that**
- the actuation directions of the servo devices (210, 510) of the second and fifth shifting elements (B, E) upon the actuation of the respective disc packs (200, 500) are opposite,
- the pressure spaces (211, 511) of the servo devices (210, 510) of the second and fifth shifting elements (B, E) being arranged directly adjacent to one another, and
- the piston (214) of the servo device (210) of the second shifting element (B) reaching completely over the disc pack (200) of the second shifting element (B) radially on the outside in the axial direction, and having an actuating plunger (216) which acts on the disc pack (200) of the second shifting element (B) from the side of this disc pack (200) opposite the pressure space (211) of the servo device (210) of the second shifting element (B).

7. Multi-stage automatic transmission according to Claim 3 or 6, **characterised in that**
- the servo device (210) of the second shifting element (B) has, for its dynamic pressure compensation, a pressure compensation space (212) which is arranged on the side of the pressure space (211) of the servo device (210) of the second shifting element (B) opposite the pressure space (511) of the servo device (510) of the fifth shifting element (E),
- the servo device (510) of the fifth shifting element (E) has, for its dynamic pressure compensation, a pressure compensation space (512) which is arranged on the side of the pressure space (511) of the servo device (510) of the fifth shifting element (E) opposite the pressure space (211) of the servo device (210) of the second shifting element (B), and
- the pressure spaces (211, 511) of the servo devices (210, 510) of the second and fifth shifting elements (B, E) are directly adjacent to the outer surface of the disc support (ZYLBE) common to the second and fifth shifting elements (B, E).

8. Multi-stage automatic transmission according to Claim 3 or 6 or 7, **characterised in that** the servo device (510) of the fifth shifting element (E) actuates the disc pack (500) of the fifth shifting element (E) axially in the direction of the first planetary gear train (RS1), and **in that** the servo device (210) of the second shifting element (B) actuates the disc pack (200) of the second shifting element (B) axially in the direction opposite the first planetary gear train (RS1).

9. Multi-stage automatic transmission according to one of Claims 1 to 8, **characterised in that** the contour of a piston (214) of the servo device (210) of the second shifting element (B) is adapted to an outer contour of the disc support (ZYLBE) common to the second and fifth shifting elements (B, E).

10. Multi-stage automatic transmission according to one of Claims 1 to 9, **characterised in that** the disc pack (200) of the second shifting element (B), when viewed spatially, is arranged at least largely radially above the disc pack (500) of the fifth shifting element (E).

11. Multi-stage automatic transmission according to one of Claims 1 to 9, **characterised in that** the disc pack (200) of the second shifting element (B), when viewed spatially, is arranged at least partially axially next to the disc pack (500) of the fifth shifting element (E), the disc pack (200) of the second shifting element (B), when viewed in the axial direction, being arranged at least partially radially above the first planetary gear train (RS1), and the disc pack (500) of the fifth shifting element (E), when viewed in the radial direction, being arranged at least partially axially next to the first planetary gear train (RS1).

12. Multi-stage automatic transmission according to one of Claims 1 to 11, **characterised in that** the third shifting element (C), in particular a disc pack (300) or a brake band (303) of the third shifting element (C), when viewed spatially, is arranged at least largely radially above the disc pack (200) of the second shifting element (B).

13. Multi-stage automatic transmission according to one of Claims 1 to 11, **characterised in that** the third shifting element (C), in particular a disc pack (300) or a brake band (303) of the third shifting element (C), when viewed spatially, is arranged axially next to the disc pack (200) of the second shifting element (B), **in that** the fifth and second shifting elements (E, B), when viewed spatially, are arranged on the side of the first planetary gear train (RS1) facing away from the second planetary gear train (RS2), and **in that** the third shifting element (C), when viewed spatially, is arranged radially above the planetary gear trains (RS1, RS2, RS3), in particular, when viewed in the axial direction, radially above the first and/or second planetary gear train (RS1, RS2).

14. Multi-stage automatic transmission according to one of Claims 1 to 13, **characterised in that** the fourth shifting element (D), when viewed spatially, is arranged in an area radially above the planetary gear trains (RS1, RS2, RS3), in particular, when viewed in the axial direction, radially above the second and/or third planetary gear train (RS2, RS3), the actuation direction of a servo device (310) of the third shifting element (C) and the actuation direction of a servo device (410) of the fourth shifting element (D) upon the activation of the respective shifting elements (C, D) being opposite to one another.

15. Multi-stage automatic transmission according to one of Claims 1 to 13, **characterised in that** the fourth shifting element (D), when viewed spatially, is arranged in an area radially above the planetary gear trains (RS1, RS2, RS3), in particular, when viewed in the axial direction, radially above the second and/or third planetary gear train (RS2, RS3), the fourth shifting element (D), when viewed spatially, being arranged closer to the third planetary gear train (RS3) than is the third shifting element (C), and the actuation direction of a servo device (310) of the third shifting element (C) and the actuation direction of a servo device (410) of the fourth shifting element (D) upon the activation of the respective shifting elements (C, D) being the same.

16. Multi-stage automatic transmission according to one of Claims 1 to 15, **characterised in that** at least one of the two servo devices (310, 410) of the third and fourth shifting elements (C, D) is arranged axially between the disc packs (300, 400) of the third and the fourth shifting elements (C, D).

17. Multi-stage automatic transmission according to one of Claims 1 to 16, **characterised in that** the input shaft (AN) and the output shaft (AB) do not run coaxially with one another, and **in that** a spur gear stage (STST) or a chain drive is provided, via which the ring gear (HO1) of the first planetary gear train (RS1) and the planet carrier (ST3, ST2), connected to this ring gear (HO1), of the third or second planetary gear train (RS3, RS2) is in active connection with the output shaft (AB), a first spur gear (STR1) of the spur gear stage (STST) or a first chain wheel (KTR1) of the chain drive being arranged axially between the third planetary gear train (RS3) and the first shifting element (A).

18. Multi-stage automatic transmission according to Claim 17, **characterised in that** the first spur gear (STR1) of the spur gear stage (STST) or the first chain wheel (KTR1) of the chain drive is mounted on a housing partition wall (GZ) arranged axially between the spur gear stage (STST) or chain drive and the third planetary gear train (RS3), this housing partition wall (GZ) being connected in a rotationally fixed manner to the transmission housing (GG) or made as one piece together with the transmission housing (GG).

19. Multi-stage automatic transmission according to Claim 17, **characterised in that** the first spur gear (STR1) of the spur gear stage (STST) or the first chain wheel (KTR1) of the chain drive is mounted on a housing partition wall (GZ) or a mounting plate (LAG) arranged axially between the spur gear stage (STST) or the chain drive and the first shifting element (A), this housing partition wall (GZ) or mounting plate (LAG) being connected in a rotationally fixed manner to the transmission housing (GG) or made as one piece together with the transmission housing (GG), or the mounting plate (LAG) being connected in a rotationally fixed manner to a housing wall (GW) fixed to the transmission housing (GG).

20. Multi-stage automatic transmission according to one of Claims 1 to 16, **characterised in that** the input shaft (AN) and output shaft (AB) do not run coaxially with one another, **in that** a spur gear stage (STST) or a chain drive is provided, via which the ring gear (HO1) of the first planetary gear train (RS1) and the planet carrier (ST3, ST2), connected to this ring gear (HO1), of the third or second planetary gear train (RS3, RS2) is in active connection with the output shaft (AB), a first spur gear (STR1) of the spur gear stage (STST) or a first chain wheel (KTR1) of the chain drive being adjacent to an outer wall of the transmission housing (GG) or to a housing cover fixed to the transmission housing (GG), **in that** the first spur gear (STR1) of the spur gear stage (STST) or the first chain wheel (KTR1) of the chain drive is mounted on the outer wall of the transmission housing (GG) or the housing cover fixed to the transmission housing (GG) and/or on the input shaft (AN), and **in that** the first shifting element (A), when viewed spatially, is arranged between the third planetary gear train (RS3) and the first spur gear (STR1) of the spur gear stage (STST) or between the third planetary gear train (RS3) and the first chain wheel (KTR1) of the chain drive.

21. Multi-stage automatic transmission according to one of Claims 1 to 16, **characterised in that** the input shaft (AN) and output shaft (AB) do not run coaxially with one another, **in that** a spur gear stage (STST) or a chain drive is provided, via which the ring gear (HO1) of the first planetary gear train (RS1) and the planet carrier (ST3, ST2), connected to this ring gear (HO1), of the third or second planetary gear train (RS3, RS2) is in active connection with the output shaft (AB), **in that** a first spur gear (STR1) of the spur gear stage (STST) or a first chain wheel (KTR1) of the chain drive is adjacent to an outer wall of the transmission housing (GG) or to a housing cover fixed to the transmission housing (GG), **in that** the first spur gear (STR1) of the spur gear stage (STST) or the first chain wheel (KTR1) of the chain drive is mounted on the outer wall of the transmission housing (GG) or the housing cover fixed to the transmission housing (GG) and/or on the input shaft (AN), and **in that** the first shifting element (A), when viewed spatially, is arranged within a cylindrical space which is formed by the first chain wheel (KTR1) of the chain drive, the first shifting element (A) being axially adjacent to the third planetary gear train (RS3).

## Revendications

1. Boîte de vitesses automatique à étages multiples, comprenant un arbre d'entrée (AN), un arbre de sortie (AB), au moins trois trains épicycloïdaux distincts (RS1, RS2, RS3), ainsi qu'au moins cinq éléments de commande (A à E), dans laquelle
- les trois trains épicycloïdaux (RS1, RS2, RS3) sont disposés coaxialement en série l'un à côté de l'autre,
- vu dans l'espace, le deuxième train épicycloïdal (RS2) est disposé entre les premier et troisième trains épicycloïdaux (RS1, RS3),
- une roue planétaire (SO3) du troisième train épicycloïdal (RS3) peut être bloquée sur un carter (GG) de la boîte de vitesses automatique à étages multiples au moyen du premier élément de commande (A),
- l'arbre d'entrée (AN) est relié à une roue planétaire (SO2) du deuxième train épicycloïdal (RS2),
- l'arbre d'entrée (AN) peut être relié à une roue planétaire (SO1) du premier train épicycloïdal (RS1) au moyen du deuxième élément de commande (B) et à un porte-satellites (ST1) du premier train épicycloïdal (RS1) au moyen du cinquième élément de commande (E),
- la roue planétaire (SO1) du premier train épicycloïdal (RS1) peut être bloquée sur le carter (GG) de la boîte de vitesses au moyen du troisième élément de commande (C) et le porte-satellites (ST1) du premier train épicycloïdal (RS1) peut être bloqué sur ce carter (GG) au moyen du quatrième élément de commande (D),
- l'arbre de sortie (AB) et une couronne à denture intérieure (HO1) du premier train épicycloïdal (RS1) et un porte-satellites (ST3) du troisième train épicycloïdal (RS3) sont reliés l'un à l'autre, et un porte-satellites (ST2) du deuxième train épicycloïdal (RS2) est relié à une couronne à denture intérieure (HO3) du troisième train épicycloïdal (RS3) et le porte-satellites (ST1) du premier train épicycloïdal (RS1) est relié à une couronne à denture intérieure (HO2) du deuxième train épicycloïdal (RS2),
**caractérisée en ce que** les deuxième et cinquième éléments de commande (B, E) sont réunis en un sous-groupe comprenant
- des paquets de disques (200, 500) des deuxième et cinquième éléments de commande (B, E),
- des servodispositifs (210, 510) des deuxième et cinquième éléments de commande (B, E), chacun pour l'actionnement du paquet de disques (200, 500) du deuxième ou du cinquième élément de commande (B, E), ainsi
- qu'un support de disques en une seule pièce (ZYLBE) commun aux deuxième et cinquième éléments de commande (B, E) destiné à recevoir les paquets de disques (200, 500) et au moins le servodispositif (510) du cinquième élément de commande (E),
le paquet de disques (200) du deuxième élément de commande (B) présentant un plus grand diamètre que le paquet de disques (500) du cinquième élément de commande (E),
**en ce que**
- le support de disques (ZYLBE) commun aux deuxième et cinquième éléments de commande (B, E) forme une chambre d'embrayage à l'intérieur de laquelle le paquet de disques (500) du cinquième élément de commande (E) et le servodispositif (510) du cinquième élément de commande (E) sont disposés,
- les servodispositifs (210, 510) des deuxième et cinquième éléments de commande (B, E) comportent chacun au moins une chambre de pression (211, 511) et un piston (214, 514), et
- les chambres de pression (211, 511) des servodispositifs (210, 510) des deuxième et cinquième éléments de commande (B, E) sont séparées l'une de l'autre par une paroi latérale du support de disques (ZYLBE) commun aux deuxième et cinquième éléments de commande (B, E),
**en ce que** les directions d'actionnement des servodispositifs (210, 510) des deuxième et cinquième éléments de commande (B, E) sont orientées dans le même sens lors de l'actionnement de leurs paquets de disques respectifs (200, 500),
**en ce que**, vu dans l'espace, le servodispositif (210) du deuxième élément de commande (B) est disposé, au moins en majeure partie, radialement au-delà du servodispositif (510) du cinquième élément de commande (E), en particulier **en ce que**, vue dans l'espace, la chambre de pression (211) du servodispositif (210) du deuxième élément de commande (B) est disposée, au moins en majeure partie, radialement au-delà de la chambre de pression (511) du servodispositif (510) du cinquième élément de commande (E) et/ou **en ce que**, vu dans l'espace, un piston (214) du servodispositif (210) du deuxième élément de commande (B) est disposé, au moins en majeure partie, radialement au-delà d'un piston (514) du servodispositif (510) du cinquième élément de commande (E),
et **en ce que**
- les servodispositifs (210, 510) des deuxième et cinquième éléments de commande (B, E) comportent chacun, pour leur équilibrage de pression dynamique, une chambre d'équilibrage de pression (212, 512),
- vue dans l'espace, la chambre d'équilibrage de pression (212) du servodispositif (210) du deuxième élément de commande (B) est disposée, au moins en majeure partie, radialement au-delà d'une chambre d'équilibrage de pression (512) du servodispositif (510) du cinquième élément de commande (E), et
- la chambre d'équilibrage de pression (212) du servodispositif (210) du deuxième élément de commande (B) est alimentée en lubrifiant sans pression par l'intermédiaire de la chambre d'équilibrage de pression (512) du servodispositif (510) du cinquième élément de commande (E).

2. Boîte de vitesses automatique à étages multiples selon le préambule de la revendication 1, **caractérisée en ce que** les deuxième et cinquième éléments de commande (B, E) sont réunis en un sous-groupe comprenant
- des paquets de disques (200, 500) des deuxième et cinquième éléments de commande (B, E),
- des servodispositifs (210, 510) des deuxième et cinquième éléments de commande (B, E), chacun pour l'actionnement du paquet de disques (200, 500) du deuxième ou du cinquième élément de commande (B, E), ainsi
- qu'un support de disques en une seule pièce (ZYLBE) commun aux deuxième et cinquième éléments de commande (B, E) destiné à recevoir les paquets de disques (200, 500) et au moins le servodispositif (510) du cinquième élément de commande (E),
le paquet de disques (200) du deuxième élément de commande (B) présentant un plus grand diamètre que le paquet de disques (500) du cinquième élément de commande (E), **en ce que**
- le support de disques (ZYLBE) commun aux deuxième et cinquième éléments de commande (B, E) forme une chambre d'embrayage à l'intérieur de laquelle le paquet de disques (500) du cinquième élément de commande (E) et le servodispositif (510) du cinquième élément de commande (E) sont disposés,
- les servodispositifs (210, 510) des deuxième et cinquième éléments de commande (B, E) comportent chacun au moins une chambre de pression (211, 511) et un piston (214, 514), et
- les chambres de pression (211, 511) des servodispositifs (210, 510) des deuxième et cinquième éléments de commande (B, E) sont séparées l'une de l'autre par une paroi latérale du support de disques (ZYLBE) commun aux deuxième et cinquième éléments de commande (B, E),
**en ce que** les directions d'actionnement des servodispositifs (210, 510) des deuxième et cinquième éléments de commande (B, E) sont orientées dans le même sens lors de l'actionnement de leurs paquets de disques respectifs (200, 500),
et **en ce que**
- le servodispositif (210) du deuxième élément de commande (B) comporte, pour son équilibrage de pression dynamique, une chambre d'équilibrage de pression (212) qui est disposée sur le côté de la chambre de pression (211) du servodispositif (210) du deuxième élément de commande (B) qui fait face à la chambre de pression (511) du servodispositif (510) du cinquième élément de commande (E),
- le servodispositif (510) du cinquième élément de commande (E) comporte, pour son équilibrage de pression dynamique, une chambre d'équilibrage de pression (512) qui est disposée sur le côté de la chambre de pression (511) du servodispositif (510) du cinquième élément de commande (E) qui fait face à la chambre de pression (211) du servodispositif (210) du deuxième élément de commande (B), et
- la chambre de pression (511) du servodispositif (510) du cinquième élément de commande (E) et la chambre d'équilibrage de pression (212) du servodispositif (210) du deuxième élément de commande (B) sont immédiatement adjacentes à la paroi latérale du support de disques (ZYLBE) commun aux deuxième et cinquième éléments de commande (B, E).

3. Boîte de vitesses automatique à étages multiples selon le préambule de la revendication 1, **caractérisée en ce que** les deuxième et cinquième éléments de commande (B, E) sont réunis en un sous-groupe comprenant
- des paquets de disques (200, 500) des deuxième et cinquième éléments de commande (B, E),
- des servodispositifs (210, 510) des deuxième et cinquième éléments de commande (B, E), chacun pour l'actionnement du paquet de disques (200, 500) du deuxième ou du cinquième élément de commande (B, E), ainsi
- qu'un support de disques en une seule pièce (ZYLBE) commun aux deuxième et cinquième éléments de commande (B, E) destiné à recevoir les paquets de disques (200, 500) et au moins le servodispositif (510) du cinquième élément de commande (E),
le paquet de disques (200) du deuxième élément de commande (B) présentant un plus grand diamètre que le paquet de disques (500) du cinquième élément de commande (E),
**en ce que**
- le support de disques (ZYLBE) commun aux deuxième et cinquième éléments de commande (B, E) forme une chambre d'embrayage à l'intérieur de laquelle le paquet de disques (500) du cinquième élément de commande (E) et le servodispositif (510) du cinquième élément de commande (E) sont disposés,
- les servodispositifs (210, 510) des deuxième et cinquième éléments de commande (B, E) comportent chacun au moins une chambre de pression (211, 511) et un piston (214, 514), et
- les chambres de pression (211, 511) des servodispositifs (210, 510) des deuxième et cinquième éléments de commande (B, E) sont séparées l'une de l'autre par une paroi latérale du support de disques (ZYLBE) commun aux deuxième et cinquième éléments de commande (B, E),
et **en ce que**
- les directions d'actionnement des servodispositifs (210, 510) des deuxième et cinquième éléments de commande (B, E) sont inverses l'une de l'autre lors de l'actionnement du paquet de disques (200, 500) qui leur correspond,
- les chambres de pression (211, 511) des servodispositifs (210, 510) des deuxième et cinquième éléments de commande (B, E) sont disposées immédiatement l'une à côté de l'autre, et
- le piston (214) du servodispositif (210) du deuxième élément de commande (B) emboîte entièrement le paquet de disques (200) du deuxième élément de commande (B) radialement à l'extérieur dans la direction axiale et comporte un piston d'actionnement (216) qui agit sur ce paquet de disques (200) en partant du côté du paquet de disques (200) du deuxième élément de commande (B) qui fait face à la chambre de pression (211) du servodispositif (210) du deuxième élément de commande (B).

4. Boîte de vitesses automatique à étages multiples comprenant un arbre d'entrée (AN), un arbre de sortie (AB), au moins trois trains épicycloïdaux distincts (RS1, RS2, RS3), ainsi qu'au moins cinq éléments de commande (A à E), dans laquelle
- les trois trains épicycloïdaux (RS1, RS2, RS3) sont disposés coaxialement en série l'un à côté de l'autre,
- vu dans l'espace, le deuxième train épicycloïdal (RS2) est disposé entre les premier et troisième trains épicycloïdaux (RS1, RS3),
- une roue planétaire (SO3) du troisième train épicycloïdal (RS3) peut être bloquée sur un carter (GG) de la boîte de vitesses automatique à étages multiples au moyen du premier élément de commande (A),
- l'arbre d'entrée (AN) est relié à une roue planétaire (SO2) du deuxième train épicycloïdal (RS2),
- l'arbre d'entrée (AN) peut être relié à une roue planétaire (SO1) du premier train épicycloïdal (RS1) au moyen du deuxième élément de commande (B) et à un porte-satellites (ST1) du premier train épicycloïdal (RS1) au moyen du cinquième élément de commande (E),
- la roue planétaire (SO1) du premier train épicycloïdal (RS1) peut être bloquée sur le carter (GG) de la boîte de vitesses au moyen du troisième élément de commande (C) et le porte-satellites (ST1) du premier train épicycloïdal (RS1) peut être bloqué sur ce carter (GG) au moyen du quatrième élément de commande (D),
- l'arbre de sortie (AB) et la couronne à denture intérieure (HO1) du premier train épicycloïdal (RS1) et le porte-satellites (ST2) du deuxième train épicycloïdal (RS2) sont reliés l'un à l'autre, et le porte-satellites (ST3) du troisième train épicycloïdal (RS3) est relié à la couronne à denture intérieure (HO2) du deuxième train épicycloïdal (RS2) et le porte-satellites (ST1) du premier train épicycloïdal (RS1) est relié à la couronne à denture intérieure (HO3) du troisième train épicycloïdal (RS3),
**caractérisée en ce que** les deuxième et cinquième éléments de commande (B, E) sont réunis en un sous-groupe comprenant
- des paquets de disques (200, 500) des deuxième et cinquième éléments de commande (B, E),
- des servodispositifs (210, 510) des deuxième et cinquième éléments de commande (B, E), chacun pour l'actionnement du paquet de disques (200, 500) du deuxième ou du cinquième élément de commande (B, E), ainsi
- qu'un support de disques en une seule pièce (ZYLBE) commun aux deuxième et cinquième éléments de commande (B, E) destiné à recevoir les paquets de disques (200, 500) et au moins le servodispositif (510) du cinquième élément de commande (E),
le paquet de disques (200) du deuxième élément de commande (B) présentant un plus grand diamètre que le paquet de disques (500) du cinquième élément de commande (E),
**en ce que**
- le support de disques (ZYLBE) commun aux deuxième et cinquième éléments de commande (B, E) forme une chambre d'embrayage à l'intérieur de laquelle le paquet de disques (500) du cinquième élément de commande (E) et le servodispositif (510) du cinquième élément de commande (E) sont disposés,
- les servodispositifs (210, 510) des deuxième et cinquième éléments de commande (B, E) comportent chacun au moins une chambre de pression (211, 511) et un piston (214, 514), et
- les chambres de pression (211, 511) des servodispositifs (210, 510) des deuxième et cinquième éléments de commande (B, E) sont séparées l'une de l'autre par une paroi latérale du support de disques (ZYLBE) commun aux deuxième et cinquième éléments de commande (B, E),
**en ce que** les directions d'actionnement des servodispositifs (210, 510) des deuxième et cinquième éléments de commande (B, E) sont orientées dans le même sens lors de l'actionnement de leurs paquets de disques respectifs (200, 500),
**en ce que**, vu dans l'espace, le servodispositif (210) du deuxième élément de commande (B) est disposé, au moins en majeure partie, radialement au-delà du servodispositif (510) du cinquième élément de commande (E), en particulier **en ce que**, vue dans l'espace, la chambre de pression (211) du servodispositif (210) du deuxième élément de commande (B) est disposée, au moins en majeure partie, radialement au-delà de la chambre de pression (511) du servodispositif (510) du cinquième élément de commande (E) et/ou **en ce que**, vu dans l'espace, un piston (214) du servodispositif (210) du deuxième élément de commande (B) est disposé, au moins en majeure partie, radialement au-delà d'un piston (514) du servodispositif (510) du cinquième élément de commande (E),
et **en ce que**
- les servodispositifs (210, 510) des deuxième et cinquième éléments de commande (B, E) comportent chacun, pour leur équilibrage de pression dynamique, une chambre d'équilibrage de pression (212, 512),
- vue dans l'espace, la chambre d'équilibrage de pression (212) du servodispositif (210) du deuxième élément de commande (B) est disposée, au moins en majeure partie, radialement au-delà d'une chambre d'équilibrage de pression (512) du servodispositif (510) du cinquième élément de commande (E), et
- la chambre d'équilibrage de pression (212) du servodispositif (210) du deuxième élément de commande (B) est alimentée en lubrifiant sans pression par l'intermédiaire de la chambre d'équilibrage de pression (512) du servodispositif (510) du cinquième élément de commande (E).

5. Boîte de vitesses automatique à étages multiples selon le préambule de la revendication 4, **caractérisée en ce que** les deuxième et cinquième éléments de commande (B, E) sont réunis en un sous-groupe comprenant
- des paquets de disques (200, 500) des deuxième et cinquième éléments de commande (B, E),
- des servodispositifs (210, 510) des deuxième et cinquième éléments de commande (B, E), chacun pour l'actionnement du paquet de disques (200, 500) du deuxième ou du cinquième élément de commande (B, E), ainsi
- qu'un support de disques en une seule pièce (ZYLBE) commun aux deuxième et cinquième éléments de commande (B, E) destiné à recevoir les paquets de disques (200, 500) et au moins le servodispositif (510) du cinquième élément de commande (E),
le paquet de disques (200) du deuxième élément de commande (B) présentant un plus grand diamètre que le paquet de disques (500) du cinquième élément de commande (E),
**en ce que**
- le support de disques (ZYLBE) commun aux deuxième et cinquième éléments de commande (B, E) forme une chambre d'embrayage à l'intérieur de laquelle le paquet de disques (500) du cinquième élément de commande (E) et le servodispositif (510) du cinquième élément de commande (E) sont disposés,
- les servodispositifs (210, 510) des deuxième et cinquième éléments de commande (B, E) comportent chacun au moins une chambre de pression (211, 511) et un piston (214, 514), et
- les chambres de pression (211, 511) des servodispositifs (210, 510) des deuxième et cinquième éléments de commande (B, E) sont séparées l'une de l'autre par une paroi latérale du support de disques (ZYLBE) commun aux deuxième et cinquième éléments de commande (B, E),
**en ce que** les directions d'actionnement des servodispositifs (210, 510) des deuxième et cinquième éléments de commande (B, E) sont orientées dans le même sens lors de l'actionnement de leurs paquets de disques respectifs (200, 500),
et **en ce que**
- le servodispositif (210) du deuxième élément de commande (B) comporte, pour son équilibrage de pression dynamique, une chambre d'équilibrage de pression (212) qui est disposée sur le côté de la chambre de pression (211) du servodispositif (210) du deuxième élément de commande (B) qui fait face à la chambre de pression (511) du servodispositif (510) du cinquième élément de commande (E),
- le servodispositif (510) du cinquième élément de commande (E) comporte, pour son équilibrage de pression dynamique, une chambre d'équilibrage de pression (512) qui est disposée sur le côté de la chambre de pression (511) du servodispositif (510) du cinquième élément de commande (E) qui fait face à la chambre de pression (211) du servodispositif (210) du deuxième élément de commande (B), et
- la chambre de pression (511) du servodispositif (510) du cinquième élément de commande (E) et la chambre d'équilibrage de pression (212) du servodispositif (210) du deuxième élément de commande (B) sont immédiatement adjacentes à la paroi latérale du support de disques (ZYLBE) commun aux deuxième et cinquième éléments de commande (B, E).

6. Boîte de vitesses automatique à étages multiples selon le préambule de la revendication 4, **caractérisée en ce que**
les deuxième et cinquième éléments de commande (B, E) sont réunis en un sous-groupe comprenant
- des paquets de disques (200, 500) des deuxième et cinquième éléments de commande (B, E),
- des servodispositifs (210, 510) des deuxième et cinquième éléments de commande (B, E), chacun pour l'actionnement du paquet de disques (200, 500) du deuxième ou du cinquième élément de commande (B, E), ainsi
- qu'un support de disques en une seule pièce (ZYLBE) commun aux deuxième et cinquième éléments de commande (B, E) destiné à recevoir les paquets de disques (200, 500) et au moins le servodispositif (510) du cinquième élément de commande (E),
le paquet de disques (200) du deuxième élément de commande (B) présentant un plus grand diamètre que le paquet de disques (500) du cinquième élément de commande (E),
**en ce que**
- le support de disques (ZYLBE) commun aux deuxième et cinquième éléments de commande (B, E) forme une chambre d'embrayage à l'intérieur de laquelle le paquet de disques (500) du cinquième élément de commande (E) et le servodispositif (510) du cinquième élément de commande (E) sont disposés,
- les servodispositifs (210, 510) des deuxième et cinquième éléments de commande (B, E) comportent chacun au moins une chambre de pression (211, 511) et un piston (214, 514), et
- les chambres de pression (211, 511) des servodispositifs (210, 510) des deuxième et cinquième éléments de commande (B, E) sont séparées l'une de l'autre par une paroi latérale du support de disques (ZYLBE) commun aux deuxième et cinquième éléments de commande (B, E),
et **en ce que**
- les directions d'actionnement des servodispositifs (210, 510) des deuxième et cinquième éléments de commande (B, E) sont inverses l'une de l'autre lors de l'actionnement du paquet de disques (200, 500) qui leur correspond,
- les chambres de pression (211, 511) des servodispositifs (210, 510) des deuxième et cinquième éléments de commande (B, E) sont disposées immédiatement l'une à côté de l'autre, et
- le piston (214) du servodispositif (210) du deuxième élément de commande (B) emboîte entièrement le paquet de disques (200) du deuxième élément de commande (B) radialement à l'extérieur dans la direction axiale et comporte un piston d'actionnement (216) qui agit sur ce paquet de disques (200) en partant du côté du paquet de disques (200) du deuxième élément de commande (B) qui fait face à la chambre de pression (211) du servodispositif (210) du deuxième élément de commande (B).

7. Boîte de vitesses automatique à étages multiples selon l'une des revendications 3 ou 6, **caractérisée en ce que**
- le servodispositif (210) du deuxième élément de commande (B) comporte, pour son équilibrage de pression dynamique, une chambre d'équilibrage de pression (212) qui est disposée sur le côté de la chambre de pression (211) du servodispositif (210) du deuxième élément de commande (B) qui fait face à la chambre de pression (511) du servodispositif (510) du cinquième élément de commande (E),
- le servodispositif (510) du cinquième élément de commande (E) comporte, pour son équilibrage de pression dynamique, une chambre d'équilibrage de pression (512) qui est disposée sur le côté de la chambre de pression (511) du servodispositif (510) du cinquième élément de commande (E) qui fait face à la chambre de pression (211) du servodispositif (210) du deuxième élément de commande (B), et
- les chambres de pression (211, 511) des servodispositifs (210, 510) des deuxième et cinquième éléments de commande (B, E) sont immédiatement adjacentes à la paroi latérale du support de disques (ZYLBE) commun aux deuxième et cinquième éléments de commande (B, E).

8. Boîte de vitesses automatique à étages multiples selon la revendication 3 ou 6 ou 7, **caractérisée en ce que** le servodispositif (510) du cinquième élément de commande (E) actionne le paquet de disques (500) du cinquième élément de commande (E) axialement en direction du premier train épicycloïdal (RS1), et **en ce que** le servodispositif (210) du deuxième élément de commande (B) actionne le paquet de disques (200) du deuxième élément de commande (B) axialement dans une direction à l'opposé du premier train épicycloïdal (RS1).

9. Boîte de vitesses automatique à étages multiples selon l'une des revendications 1 à 8, **caractérisée en ce que** le profil d'un piston (214) du servodispositif (210) du deuxième élément de commande (B) est adapté à un profil extérieur du support de disques (ZYLBE) commun aux deuxième et cinquième éléments de commande (B, E).

10. Boîte de vitesses automatique à étages multiples selon l'une des revendications 1 à 9, **caractérisée en ce que**, vu dans l'espace, le paquet de disques (200) du deuxième élément de commande (B) est disposé au moins en majeure partie radialement au-delà du paquet de disques (500) du cinquième élément de commande (E).

11. Boîte de vitesses automatique à étages multiples selon l'une des revendications 1 à 9, **caractérisée en ce que**, vu dans l'espace, le paquet de disques (200) du deuxième élément de commande (B) est disposé au moins en partie axialement à côté du paquet de disques (500) du cinquième élément de commande (E),
le paquet de disques (200) du deuxième élément de commande (B), vu dans la direction axiale, étant disposé au moins en partie radialement au-dessus du premier train épicycloïdal (RS1), et le paquet de disques (500) du cinquième élément de commande (E), vu dans la direction radiale, étant disposé au moins en partie axialement à côté du premier train épicycloïdal (RS1).

12. Boîte de vitesses automatique à étages multiples selon l'une des revendications 1 à 11, **caractérisée en ce que**, vu dans l'espace, le troisième élément de commande (C), en particulier un paquet de disques (300) ou une bande de frein (303) du troisième élément de commande (C), est disposé au moins en majeure partie radialement au-delà du paquet de disques (200) du deuxième élément de commande (B).

13. Boîte de vitesses automatique à étages multiples selon l'une des revendications 1 à 11, **caractérisée en ce que**, vu dans l'espace, le troisième élément de commande (C), en particulier un paquet de disques (300) ou une bande de frein (303) du troisième élément de commande (C), est disposé axialement à côté du paquet de disques (200) du deuxième élément de commande (B), **en ce que**, vus dans l'espace, les cinquième et deuxième éléments de commande (E, B) sont disposés sur le côté du premier train épicycloïdal (RS1) qui est éloigné du deuxième train épicycloïdal (RS2), et **en ce que**, vu dans l'espace, le troisième élément de commande (C) est disposé dans une région située radialement au-delà des trains épicycloïdaux (RS1, RS2, RS3), en particulier, vu dans la direction axiale, radialement au-dessus des premier et/ou deuxième trains épicycloïdaux (RS1, RS2).

14. Boîte de vitesses automatique à étages multiples selon l'une des revendications 1 à 13, **caractérisée en ce que**, vu dans l'espace, le quatrième élément de commande (D) est disposé dans une région située radialement au-delà des trains épicycloïdaux (RS1, RS2, RS3), en particulier, vu dans la direction axiale, radialement au-dessus des deuxième et/ou troisième trains épicycloïdaux (RS2, RS3),
la direction d'actionnement d'un servodispositif (310) du troisième élément de commande (C) et la direction d'actionnement d'un servodispositif (410) du quatrième élément de commande (D) étant inverses l'une de l'autre lors de la mise en action de l'élément de commande (C, D) respectif.

15. Boîte de vitesses automatique à étages multiples selon l'une des revendications 1 à 13, **caractérisée en ce que**, vu dans l'espace, le quatrième élément de commande (D) est disposé dans une région située radialement au-delà des trains épicycloïdaux (RS1, RS2, RS3), en particulier, vu dans la direction axiale, radialement au-dessus des deuxième et/ou troisième trains épicycloïdaux (RS2, RS3),
vu dans l'espace, le quatrième élément de commande (D) étant disposé plus près du troisième train épicycloïdal (RS3) que le troisième élément de commande (C),
et la direction d'actionnement d'un servodispositif (310) du troisième élément de commande (C) et la direction d'actionnement d'un servodispositif (410) du quatrième élément de commande (D) étant dirigées dans le même sens lors de la mise en action de l'élément de commande (C, D) respectif.

16. Boîte de vitesses automatique à étages multiples selon l'une des revendications 1 à 15, **caractérisée en ce qu'**au moins un des deux servodispositifs (310, 410) des troisième et quatrième éléments de commande (C, D) est disposé axialement entre les paquets de disques (300, 400) des troisième et quatrième éléments de commande (C, D).

17. Boîte de vitesses automatique à étages multiples selon l'une des revendications 1 à 16, **caractérisée en ce que** l'arbre d'entrée (AN) et l'arbre de sortie (AB) ne s'étendent pas coaxialement entre eux, et **en ce qu'**il est prévu un étage de roues droites (STST) ou une transmission à chaîne par l'intermédiaire duquel ou de laquelle la couronne à denture intérieure (HO1) du premier train épicycloïdal (RS1) et le porte-satellites (ST3, ST2) du troisième ou du deuxième train épicycloïdal (RS3, RS2) qui est relié à cette couronne à denture intérieure (HO1) est relié fonctionnellement à l'arbre de sortie (AB), une première roue droite (STR1) de l'étage de roues droites (STST) ou une première roue à chaîne (KTR1) de la transmission à chaîne étant disposée axialement entre le troisième train épicycloïdal (RS3) et le premier élément de commande (A).

18. Boîte de vitesses automatique à étages multiples selon la revendication 17, **caractérisée en ce que** la première roue droite (STR1) de l'étage de roues droites (STST) ou la première roue à chaîne (KTR1) de la transmission à chaîne est montée sur une paroi intermédiaire (GZ) du carter qui est disposée axialement entre l'étage de roues droites (STST) ou la transmission à chaîne et le troisième train épicycloïdal (RS3), cette paroi intermédiaire (GZ) du carter étant reliée solidairement en rotation au carter (GG) de la boîte de vitesses, ou étant réalisée en une seule pièce avec le carter (GG) de la boîte de vitesses.

19. Boîte de vitesses automatique à étages multiples selon la revendication 17, **caractérisée en ce que** la première roue droite (STR1) de l'étage de roues droites (STST) ou la première roue à chaîne (KTR1) de la transmission à chaîne est montée sur une paroi intermédiaire (GZ) du carter, respectivement sur une plaque porte-palier (LAG), qui est disposée axialement entre l'étage de roues droites (STST) ou la transmission à chaîne et le premier élément de commande (A), auquel cas cette paroi intermédiaire (GZ) du carter ou cette plaque porte-palier (LAG) est reliée solidairement en rotation au carter (GG) de la boîte de vitesses ou réalisée en une seule pièce avec le carter (GG) de la boîte de vitesses, ou encore la plaque porte-palier (LAG) est reliée solidairement en rotation à une paroi (GW) du carter qui est solidaire du carter de la boîte de vitesses.

20. Boîte de vitesses automatique à étages multiples selon l'une des revendications 1 à 16, **caractérisée en ce que** l'arbre d'entrée (AN) et l'arbre de sortie (AB) ne s'étendent pas coaxialement entre eux, **en ce qu'**il est prévu un étage de roues droites (STST) ou une transmission à chaîne par l'intermédiaire duquel ou de laquelle la couronne à denture intérieure (HO1) du premier train épicycloïdal (RS1) et le porte-satellites (ST3, ST2) du troisième ou du deuxième train épicycloïdal (RS3, RS2) qui est relié à cette couronne à denture intérieure (HO1) est relié fonctionnellement à l'arbre de sortie (AB), une première roue droite (STR1) de l'étage de roues droites (STST) ou une première roue à chaîne (KTR1) de la transmission à chaîne étant adjacente à une paroi extérieure du carter (GG) de la boîte de vitesses, ou à un couvercle de la boîte de vitesses qui est solidaire du carter de la boîte de vitesses,
**en ce que** la première roue droite (STR1) de l'étage de roues droites (STST) ou la première roue à chaîne (KTR1) de la transmission à chaîne est montée sur la paroi extérieure du carter (GG) de la boîte de vitesses ou sur le couvercle du carter de la boîte de vitesses et/ou sur l'arbre d'entrée (AN),
et **en ce que**, vu dans l'espace, le premier élément de commande (A) est disposé entre le troisième train épicycloïdal (RS3) et la première roue droite (STR1) de l'étage de roues droites (STST) ou entre le troisième train épicycloïdal (RS3) et la première roue à chaîne (KTR1) de la transmission à chaîne.

21. Boîte de vitesses automatique à étages multiples selon l'une des revendications 1 à 16, **caractérisée en ce que** l'arbre d'entrée (AN) et l'arbre de sortie (AB) ne s'étendent pas coaxialement entre eux, **en ce qu'**il est prévu un étage de roues droites (STST) ou une transmission à chaîne par l'intermédiaire duquel ou de laquelle la couronne à denture intérieure (HO1) du premier train épicycloïdal (RS1) et le porte-satellites (ST3, ST2) du troisième ou du deuxième train épicycloïdal (RS3, RS2) qui est relié à cette couronne à denture intérieure (HO1) est relié fonctionnellement à l'arbre de sortie (AB), **en ce qu'**une première roue droite (STR1) de l'étage de roues droites (STST) ou une première roue à chaîne (KTR1) de la transmission à chaîne est adjacente à une paroi extérieure du carter (GG) de la boîte de vitesses, ou à un couvercle de la boîte de vitesses qui est solidaire du carter de la boîte de vitesses,
**en ce que** la première roue droite (STR1) de l'étage de roues droites (STST) ou la première roue à chaîne (KTR1) de la transmission à chaîne est montée sur la paroi extérieure du carter (GG) de la boîte de vitesses ou sur le couvercle du carter de la boîte de vitesses et/ou sur l'arbre d'entrée (AN),
et **en ce que**, vu dans l'espace, le premier élément de commande (A) est disposé à l'intérieur d'une chambre de cylindre qui est formée par la première roue à chaîne (KTR1) de la transmission à chaîne, le premier élément de commande (A) étant axialement adjacent au troisième train épicycloïdal (RS3).
